# EUROPEAN PATENT SPECIFICATION

(11) **EP 2 215 167 B1**
(45) Date of publication and mention of the grant of the patent: **24.09.2014**
(21) Application number: 08855462.1
(22) Date of filing: 19.11.2008
(51) Int. Cl.: C09C 1/00, G02B 5/18

(54) **USE OF ZERO-ORDER DIFFRACTIVE PIGMENTS**
VERWENDUNG VON DIFFRAKTIONSPIGMENTEN NULLTER ORDNUNG
UTILISATION DE PIGMENTS À DIFFRACTION D'ORDRE NUL

(30) Priority: 27.11.2007 EP 07121599
(43) Date of publication of application: 11.08.2010
(73) Proprietor: BASF SE, 67056 Ludwigshafen (DE)
(72) Inventor: BUGNON, Philippe, CH-1724 Le Mouret (CH); REICHERT, Hans, 79618 Rheinfelden (DE); STUCK, Alexander, CH-5430 Wettingen (CH); WALTER, Harald, CH-8810 Horgen (CH)
(86) International application number: PCT/EP2008/065819
(87) International publication number: WO 2009/068462

(56) References cited:
- EP-A1- 2 024 447
- WO-A-96/03962
- WO-A-03/102084
- WO-A-2007/007283
- DE-A1-102006 027 134
- US-A- 4 484 797
- US-B1- 6 902 807
- GALE M T ET AL: "ZERO-ORDER DIFFRACTIVE MICROSTURCTURES FOR SECURITY APPLICATIONS", PROCEEDINGS OF SPIE, SPIE, US, vol. 1210, 15 January 1990 (1990-01-15), pages 83-89, XP000987077, ISSN: 0277-786X, DOI: 10.1117/12.17917

## Description

The present invention relates to compositions which show a desired zero-order diffractive color effect taking into account the influence of the organic matrix material on the color response of the zero-order diffractive pigments.

It is known that physical colour may be obtained by combining very fine, usually subwavelength, gratings with one or more dielectric and/or metal stacks on it. Such a so-called zero order diffractive filter (ZOD filter) or zero order diffractive device (ZOD device) uses zero order diffraction to produce very pronounced colour effects, as described e.g. by M.T. Gale et al., SPIE Vol. 1210, Optical Security and Anticounterfeiting Systems, p. 83 (1990), or in US4484797, EP-A-1775142, WO06/038120.

WO03/011980 describes diffractive pigment flakes including single layer or multilayer flakes. The flakes comprise a layer having a reflective surface and a diffractive structure formed on the reflective surface, wherein the pitch and amplitude of the structure are selected to decrease the intensity of a zero order diffracted light beam in order to increase the intensity and colour contrast of higher order diffracted light beam. Methods to manufacture such pigments by vacuum deposition are mentioned. WO-A-96/03962 discloses a cosmetic composition in the form of an emulsion comprising a silicone oil, an "interferential" pigment of platelet type composed of a support such as mica coated with a given layer of titanium oxide with a given thickness, and a pigment based on iron oxide. Due to the interferential pigment present in these compositions, the compositions give a shade along a given angle and does not produce a goniochromatic effect. As the colour effect of such pigments is based on first or higher order diffraction only the typical rainbow colour effect of holograms can be realised.

WO04024836A2 describes first and higher order diffractive pigments, which separate light into spectral components, similar to a prism, and which include a magnetic layer to selectively align the pigments.

US2007/285782 and WO07/137438 describe the preparation of ZOD pigments.

### ZOD Pigments, their Preparation, and Compositions containing them

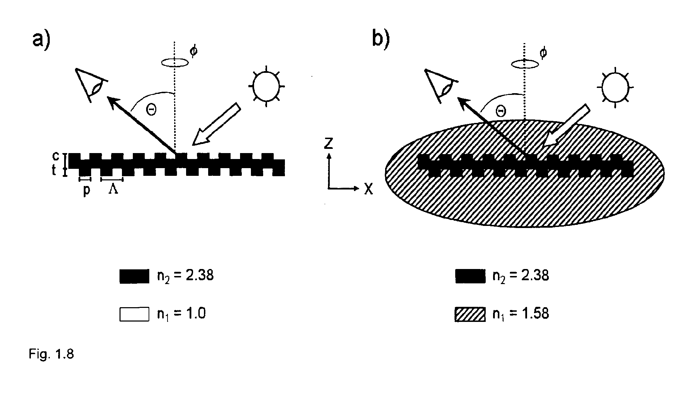

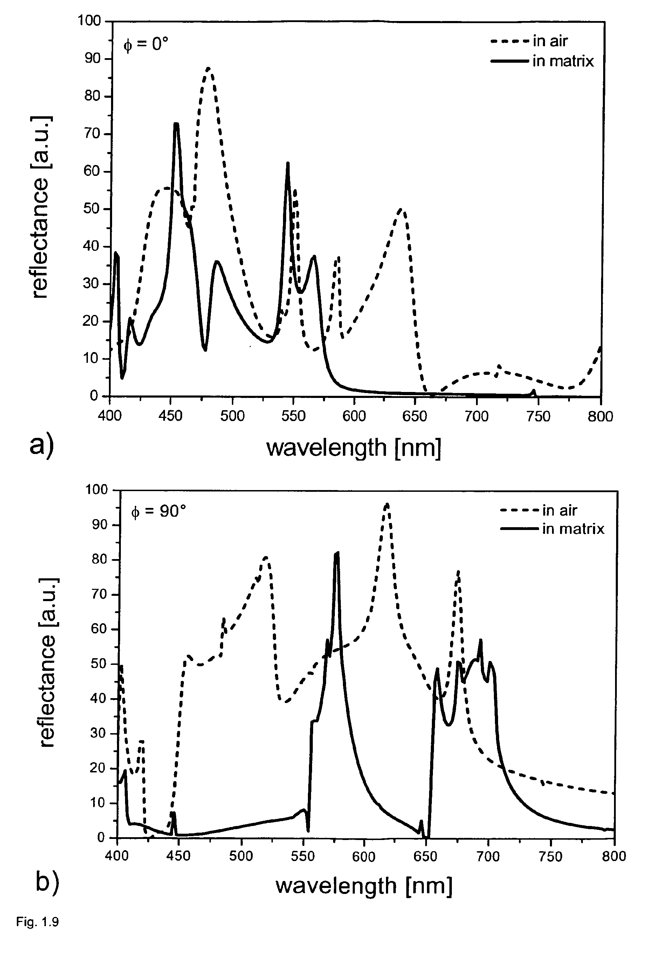

Unless otherwise stated, the following definitions shall apply in this specification: Zero-order diffractive pigments ("ZOD pigments") are pigments showing a colour effect (i.e. change of colour) upon rotation and/or tilting, wherein said colour effect is based on zero-order diffraction.
"Colour" or "colour effect" includes a difference between the spectrum of incident and reflected or transmitted light over 400 nm wavelength (especially in the range 400 - 800 nm; see also Fig. 1.9).
A material is considered "embossable" if it maintains the structure of an embossing tool on its surface after subjecting it to an embossing step.
A "periodic microstructure" is a periodic structure (grating) having a period between 100 nm and 1000 nm, e.g. 100 nm and 600nm. "Microstructuring" generally refers to the generation of a periodic microstructure, such as a zero-order diffractive grating structure, on a substrate. The term "pigment" is known in the field; it mainly relates to an assembly of solid particles, each particle generating colour, i.e. a difference between the radiation before and after interaction with the particle.
The pigments are showing a colour and/or a colour effect within the visible spectrum.

If illuminated with white light, the ZOD structure directly and very efficiently reflects a particular spectral range or color. This is the result of a resonance effect in the optical waveguide (resonant coupling).

The present invention thus generally pertains to a composition comprising
a) a zero order diffractive pigment showing a colour effect based on zero-order diffraction and consisting of an optical wave-guiding layer, whereas said layer is made of a material with an index of refraction that is higher than the index of refraction of the adjacent material by at least 0.25,
   has a zero-order diffractive grating structure and has a thickness between 50nm and 500nm, and
b) a matrix material comprising a natural or synthetic organic polymer, a surfactant, cosmetic wax and/or cosmetic oil.

The pigment contains a zero-order diffractive grating structure having a period from 300 to 500 nm, and a grating depth from 30 to 300nm: typical grating periods for the present pigments are, for example, from the range 305 to 480 nm.

Any of the following preferred embodiments (a) - (o) as well as those listed further below may be combined with the above composition or method of the invention, as well as with each other:
a) a composition wherein the matrix material is transparent, the pigment is dispersed in said matrix material and the material adjacent to the optical wave-guiding layer is a material identical with the matrix material;
b) a composition containing component (a) in an amount from 0.0001 to 90 % by weight of the total composition;
c) a composition wherein the pigment contains a zero-order diffractive grating structure possessing a period that is smaller than the wavelength of the light which shall be reflected in the zeroth reflection order;
d) a composition wherein the pigment has an anisotropic lateral shape;;
e) a composition wherein the pigment's optical waveguiding layer is made of material suitable for human administration, in particular TiO2, and wherein said pigment is embedded in a digestible matrix;
f) a composition wherein component (b) comprises
   organic polymers selected from natural resins, drying oils, rubber or casein, or substances derived therefrom, oil-modified alkyd resins, viscose, polysaccharides like cellulose ethers or esters;
   non-ionic polymers, for example vinylpyrrolidone/vinyl acrylate copolymers, polyvinylpyrrolidone and vinylpyrrolidone/vinyl acetate copolymers and polysiloxanes;
   cationic polymers; quaternised polyvinyl alcohol; zwitterionic and amphoteric polymers; anionic polymers; polymeric thickeners; protein hydrolysates or condensation products thereof; polyols; polyethers; sugar-containing polymers;
   thermosetting and thermoplastic synthetic organic polymers as obtainable by polymerisation, polycondensation, polyaddition and/or crosslinking, especially polyolefins such as polyethylene, polypropylene or polyisobutylene, substituted polyolefins, such as polymerisation products of vinyl chloride, vinyl acetate, styrene, acrylonitrile, acrylic acid esters, methacrylic acid esters or butadiene, and also copolymerisation products of the said monomers; polyaddition resins and polycondensation resins such as condensation products of formaldehyde with phenols, condensation products of formaldehyde with urea, thiourea or melamine, polyesters such as alkyd resins or maleate resins; linear polyesters and polyamides, polyurethanes; silicones; melamine resins; urea-formaldehyde resins; acrylic resins;
   surfactants selected from anionic, zwitterionic, ampholytic, non-ionic and cationic surfactants;
   cosmetic waxes, cosmetic oils and/or cosmetic alcohols selected from fatty alcohols; esters of fatty acids; natural or synthetic di- and triglycerides; hydrocarbon oils such as paraffin oil; mineral oils having a boiling point about from 310 to 410°C; silicone oils;
   silicone waxes; colophane; hydrogenated oils that are solid at 25°C; sugar glycerides; fatty acid salts of calcium, magnesium, zirconium, aluminium; siloxanes; fluorinated and perfluorinated oils; phospholipids; cephalins; perfume oils; solubilisers; spermaceti, beeswax, montan wax; paraffins; fatty alcohols; fatty acid esters; fatty alkanolamides; polyglycols such as polyethylene glycols and polypropylene glycols; swelling and penetration substances; opacifiers;
g) a composition in the form of a coating, especially a colour coating for cars, plastics, metals, paper and the like; a glaze; lacquer; varnish; paint; printing paste; ink; printed image or design; a cosmetic formulation e.g. chosen from sun screens, body lotions, hair lotions, hair colorations, foundations, eye shadows, blushes, lipsticks, lip glosses, lip lacquers, mascaras, nail varnishes, and eyeliners; a personal care formulation e.g. chosen from shampoos, wash formulations, hair and/or body cleansing products;
h) a composition wherein the pigment is obtained by a process comprising the steps of
   - depositing and optionally micro-structuring on a substrate a first layer which is dissolvable in a first solvent;
   - manufacturing a layers of said ZOD pigments by one or more deposition steps and optionally one or more micro-structuring steps;
   - dissolving said first layer for obtaining ZOD substrates or ZOD pigments;
   - optionally subjecting the obtained ZOD substrates or ZOD pigments to one or more selection steps as to size and/or shape
   wherein at least one micro-structuring step takes place;
i) a composition wherein the pigment of anisotropic lateral shape is obtained by embossing predetermined breaking points or breaking lines prior, simultaneously or subsequently, in particular simultaneously, to the embossing of the periodic microstructure;
k) any method for imparting colour to a matrix material or an article as explained above, which additionally contains a feature as explained for one or more of the compositions (a) to (i);
l) a process for the preparation of a coating, glaze, lacquer, varnish, paint, printing paste, ink, printed image or design, cosmetic formulation or personal care formulation, characterized in that a pigment, in particular zero-order diffractive pigment, as defined as component a) in any of the above embodiments is incorporated into said coating, glaze, lacquer, varnish, paint, printing paste, ink, printed image or design, cosmetic formulation or personal care formulation in combination with a natural or synthetic organic polymer, a surfactant, cosmetic wax and/or cosmetic oil;
m) the use of any of the above compositions as a coating, especially a colour coating for cars, plastics, metals, paper and the like; a glaze; lacquer; varnish; paint; printing paste; ink; printed image or design; a cosmetic formulation e.g. chosen from sun screens, body lotions, hair lotions, hair colorations, foundations, eye shadows, blushes, lipsticks, lip glosses, lip lacquers, mascaras, nail varnishes, and eyeliners; a personal care formulation e.g. chosen from shampoos, wash formulations, hair and/or body cleansing products.

Advantageously, said particles have maximum diameters below 100 micrometers (µm), particularly below 20µm. Advantageously, such particles are flake-shaped, i.e. they are thin when compared to its length and width.

The terms "high index of refraction layer" (HRI layer) and "low index of refraction layer" (LRI layer) are known in the field; some preferred materials can be used in any of the functions if combined with a suitable partner material. For example, the HRI layer can be made of ZnS, TiO2, Cr2O3, AIN, Al2O3, HfO2, Nb2O5, Si3N4, SnN, Ta2O5, V2O5, WO3 or ZrO2, or similar inorganic materials or high-index polymers like HRI721 and HRI751 (Optimate Corp.). Typical materials for LRI are MgF₂, Al₂O₃ or SiO₂ or matrix materials and/or polymers as described further below, examples include poly-methylmethacrylate (PMMA), polyacyril acid (PAA), polyvinyl alcohol (PVA), polyvinyl pyrrolidone (PVP).

It is possible to use mixtures of the above materials.

The present invention will be better understood by reference to the figures.

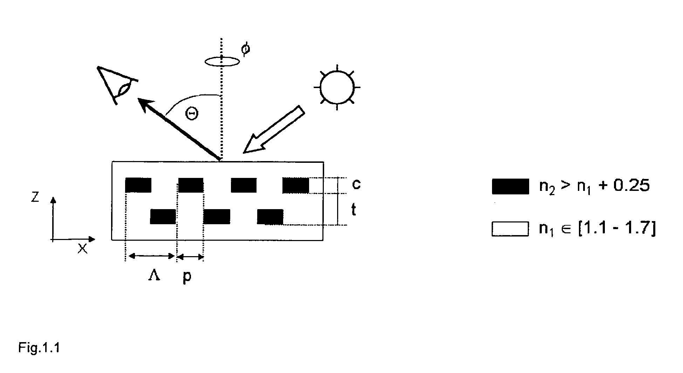

Figure 1.1 shows a schematic side view drawing of a known ZOD device. Black denotes HRI material, white low index of refraction material. A is the period and t the depth of the microstructure, p the width of the upper microstructure line, φ the rotational angle, Θ the viewing angle and c the thickness of the HRI layer.

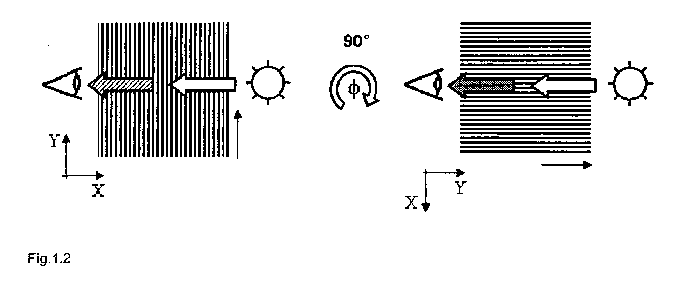

Figure 1.2: Schematic drawing of the top view on a ZOD device describing the colour flip upon rotation about the surface normal for a linear grating. E.g. green light is reflected in a certain viewing angle if the grating lines are perpendicular to the direction of reflection (left part). Rotating the ZOD device by 90° turns the colour from green to red. The grating lines are now in line with the direction of reflection (right part). Other grating symmetries produce other rotational angles.

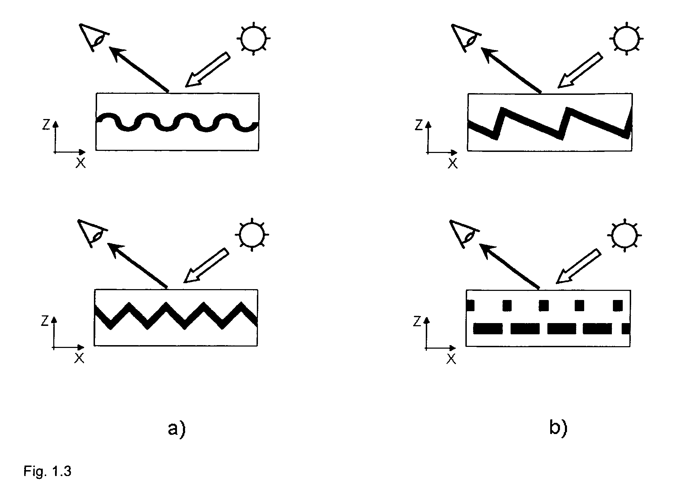

Figure 1.3a: Alternative ZOD pigment grating shapes: Sinusoidal (above) and triangular (below). Combinations of these two shapes and combinations with rectangular shapes also exhibit zero-order diffraction.
Figure 1.3b: Possible asymmetric ZOD pigment grating shapes: Asymmetric triangular (above) and asymmetric rectangular (below).
Figure 1.4: ZOD pigments (black grating) embedded in paste, liquid, powder or polymer.
Figure 1.5: ZOD pigments (black grating) coated with a polymer, sugar etc to make a small powder particle mixed into other powder particles (light grey).
Figure 1.8: A schematic drawing of a ZOP in air (a) and embedded in an exemplary organic matrix (b). Refraction of the light at the interface between air and the organic matrix was neglected in this drawing The HRI layer is ZnS (n₂ = 2.38 at λ = 550nm) and the thickness of the waveguiding layer is c. The periodic microstructure is a linear grating with a depth t, a period A and a fill factor of 50%. The viewing angle is Θ. The index of refraction of the organic matrix is n₁ = 1.58 at the wavelength λ = 550nm.
Figure 1.9: Graphs depicting the change in the spectral response for a zero-order diffractive filter with the following parameter. The thickness of the waveguiding layer is c = 190nm. The grating depth is t = 100nm and the period A = 360nm. The viewing angle is Θ = 30°. Figure 1.9a shows the reflected intensity for viewing direction perpendicular to the grating lines (φ = 0°), figure 1.9b for parallel viewing direction (φ = 90°).
Figure 2.1 schematically shows a process for manufacturing ZOD pigments as described herein.
Figure 2.2: schematically shows an alternative process for manufacturing ZOD pigments as described herein. It is possible to arrange the first 3 steps in different orders. The geometry of the knife separators during embossing can be different, for example rectangular. Also a depression instead of an enhancement will provide the separator function. However, the height of the knife edge is larger than the full thickness of the dielectric stack.
Figure 3 shows a SEM image of zero-order diffractive pigments obtained according to example 1 a (see below).
Figure 4 shows an optical microscope image of pigments obtained according to example 1 b (see below) and applied to a black background.

In more general terms, in a first aspect, the invention relates to a pigment, in particular zero-order diffraction pigment ("ZOD pigment"), consisting of an optical waveguiding layer (HRI layer), whereas said layer is made of a material with an index of refraction that is higher than the index of refraction of the adjacent material by at least 0.25; whereas said layer has a zero-order diffractive grating structure and whereas said layer has a thickness between 50nm and 500nm.

In an advantageous embodiment, the invention relates to a pigment as described herein wherein the zero-order diffractive grating structure posses a period that is smaller than the wavelength of the light which shall be reflected in the zeroth reflection order.

The invention relates to a pigment as described herein as component (a) wherein the zero-order diffractive grating structure has a period between 300nm and 500nm, and a grating depth between 30 and 300nm, preferably 150nm or less.

In a further advantageous embodiment, the invention relates to a pigment having a thickness between 100 nm to 2 micrometer and a lateral size between 1 and 100 micrometer. The shape of such pigments can be arbitrary, advantageous shapes are rectangular, triangular, hexagonal, or pentagonal. Although ZOD effects on large area (>2mm2) are known (e.g. US04484797), the size effect of ZOD has not been investigated to date. It was surprisingly found that ZOD effects already appear if the grating laterally extends over at least 3 grating periods, as the calculations and experiments involved are difficult. Therefore not only large area ZOD colour effects are possible, but colour pigments based on zero-order diffraction, with a lateral size of at least 1 micrometer can be manufactured. The reflection spectrum of such colour pigments depends besides the above mentioned parameters on the size and shape of the pigment. Without being bound to theory it is believed that for example pigments with a grating period between 300nm and 500nm or less and a lateral size of between 1-2 micrometers have broader reflection peaks than pigments with the same grating but a lateral size of 10 micrometers or more.

In one embodiment of the invention, the following parameters have to be fulfilled: The grating period is in the range between 300 - 500 nm. The grating depths t is between 30- 300 nm, preferably 150nm's or less. For dielectric materials, the useful thickness c strongly depends on the grating and the material properties, however, typical thicknesses are in the range of 30nm's - 250nm's. A suitable range for the fill factor f.f.=p/Λ is 0.3 - 0.8, preferably 0.4 - 0.7. The grating profile also affects the reflection spectrum. Possible grating profiles are rectangular, curved (e.g. sinusoidal), triangular and combinations of these three basic shapes. Advantageous examples of grating shapes are shown in fig. 1.1 and 1.3.

In an advantageous embodiment, the invention relates to ZOD pigments comprising of particles having an anisotropic lateral shape, in particular an elongated lateral shape. In general, ZOD devices change their colour at different polar angles (theta). This gives ZOD pigments an iridescent appearance when applied to a surface, similar to the colour shifting effects observed with the well established colour shifting interference pigments (US5135812). Further, ZOD devices with linear, one dimensional gratings show a distinct colour flip under 90° rotation about the surface normal. In ZOD pigments, which are deposited with an arbitrary orientation, the colour flip is not observable by the human eye any more. Only the dependence on the polar angle theta will remain. However, if the pigment shape is strongly anisotropic, for example, rectangular and the deposition method favours the alignment of one direction, then the deposited colour pigments will still show a colour flip effect, i.e., the surface will change the colour when it is rotated about the surface normal. Suitable pigments comprise rod-shaped particles, in particular rectangular particles, with a width to length ratio in the range of 1:2 to 1:10, in particular 1:5 (e.g. 10 x 50 micrometers). This can be achieved for example, by depositing long, narrow, rectangular pigments on a surface in a wet coating process with or without a polymeric binder. Printing, especially flexo-printing, ink jet-printing or screen-printing, curtain or dip coating and spraying are suitable techniques. It was found advantageous, if the dried layer has a thickness less than 2 times the longer dimension of the pigment side, resulting in a layer which is at maximum a few micrometers thick.

The resonance condition of zero-order diffractive effect pigments depends strongly on the optical parameter of the surrounding material (LRI material). The main parameter is the index of refraction of this material, which may be identical with the matrix material of the pigment dispersion. The extinction coefficient κ of this material alters the resonance condition likewise. But this parameter is in most cases very close to zero, which means κ<0.005, especially κ<0.0005. Strong extinction of the matrix destroys the zero-order diffraction color effect. For ZOF embedded in polymer foil as described in US04484797 the final color effect is obtained as soon as the foil is converted and ready to use in e.g. security documents. This is not the case for ZOPs. At least one side of the ZOPs is adjacent to air at the end of the production process of such ZOPs. Often both sides of ZOPs are adjacent to air. Adsorbed layers of organic material may be present from manufacturing processes. Such processes are described below and in PCT/CH2007/000127. Adsorbed layers do not alter the resonance condition of ZOPs remarkable due to their low thickness (typically a few nanometers). Adding ZOPs into an organic matrix, however, alters the spectral response distinctly. Figure 1.8 shows a schematic drawing of a ZOP in air (a) and embedded in an exemplary organic matrix (b). Refraction of the light at the interface between air and the organic matrix is neglected in this drawing. Figure 1.9 depicts the change in the simulated spectral response for a zero-order diffractive filter with the following parameter. The HRI layer is ZnS (n₂ = 2.38 at λ = 550nm) and the thickness of this waveguiding layer is c = 190nm. The periodic microstructure is a linear grating with a depth t = 100nm, a period A = 360nm and a fill factor of 50%. The viewing angle is Θ = 30°. The index of refraction at the wavelength λ = 550nm is n₁ = 1.58 for the organic matrix. Figure 1.9a shows the reflected intensity for viewing direction perpendicular to the grating lines (φ = 0°), figure 1.9b for parallel viewing direction (φ = 90°). The color of the zero-order diffractive filter in air changes from bright yellow (φ = 0°) to bright violet (φ = 90°). The color contrast and thus color effect of the zero-order diffractive filter in the organic matrix is much better: It changes from dark cyan (φ = 0°) to orange (φ = 90°). For realizing a desired color effect in cosmetics, coatings and inks comprising ZOPs, it thus is recommendable to adapt the grating and coating parameters of the ZOPs to the index of refraction of the adjacent material in the final product.
Even during preparation, the color effect of the composition may differ from the final one. For example, the effect in a composition in the wet state may differ from the final state comprising another set of components; a solvent in the composition may alter the index of refraction compared to the final state comprising no solvent or different types or amounts of solvent. Thus, the ZOP parameters are advantageously adapted to the index of refraction of the organic matrix in the final state (e.g. final cosmetic product, dried coating (film), dried printed ink).

In a further advantageous embodiment the invention relates to a ZOD pigment wherein the HRI layer is made of material suitable for human administration, such as TiO2 or similar edible materials, embedded in an edible/digestible matrix such as a powder. Such a powder could be the mass mixture of a pharmaceutical pill, organic food, toothpaste and similar material. A typical example of a pharmaceutical composition, used in pills is: Lactose Monohydrate (72.5%); Microcrystalline Cellulose (4.25%); Aerosil (colloidal silica, anhydrous; 1.00%); Magnesium-stearat (1.00 %); Na-salicylat (exemplary active agent, 1.00%). A matrix material of interest in this application, as well as for certain cosmetic applications, is often selected from materials listed by the US FDA as generally recognized as safe (GRAS; see, for example, food additives database EAFUS: www.cfsan.fda.gov/~dms/eafus.html).

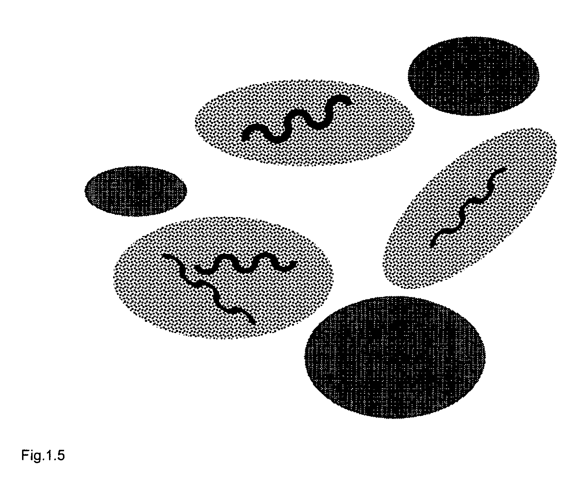

In a further advantageous embodiment, the invention relates to one or more ZOD pigments embedded in an organic or inorganic droplet and fixed within this droplet. As shown in fig. 1.5, these droplets are then used as fillers in a powder, paste or gel or also incorporated in liquid or plastic. For pharmaceutical applications or applications in the food industry, the ZOD pigments as described herein might be coated with or embedded in sugars.

In a further embodiment, the invention relates to ZOD pigments consisting of a layer made of a material with an index of refraction that is higher than the index of refraction of the adjacent material whereas the layer has a diffractive grating structure with a period that is smaller than the wavelength of the light which shall be reflected in the zeroth reflection order. Typical grating depths are between 30- 300 nm's, preferably 150nm's or less, whereas the layer acts as an optical waveguide and whereas the thickness of the waveguiding layer is between 50nm and 500nm.

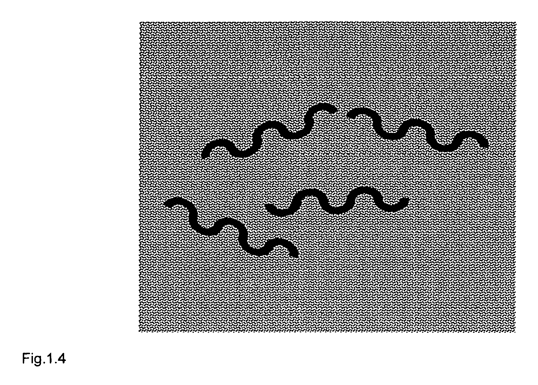

In a particular embodiment, the zero-order diffractive pigments in the composition possess a diffraction grating with grating parameter such that the desired color effect is obtained as soon as the pigments are embedded in the matrix or applied together with the matrix to a substrate. Thus, in a further advantageous embodiment the invention relates to a matrix, such as a coating, glancze or lacquer comprising a ZOD pigments as described above. A suitable matrix possess an average optical index of refraction at least 0.25 lower than the refractive index of the HRI layer of the ZOD pigment; c.f. fig. 1.4.

In a second aspect, the invention relates to processes, in particular mass production processes, for manufacturing ZOD pigments as described herein comprising the steps of i) depositing and optionally micro-structuring on a substrate a first layer which is dissolvable in a first solvent; ii) manufacturing a layers of said ZOD pigment by one or more deposition steps and optionally one or more micro-structuring steps; iii) dissolving said first layer; and v) optionally subjecting the obtained ZOD pigments to one or more selection steps as to size and/or shape, wherein at least one micro-structuring step takes place in i) or ii). In the context of this invention, micro-structuring steps are those process steps that produce a micro-structure to one of the manufactured layers; embossing steps are a typical example. In the context of this invention, mass production processes are those processes, that result in large amounts of ZOD pigments; roll-to-roll processes are a typical example.

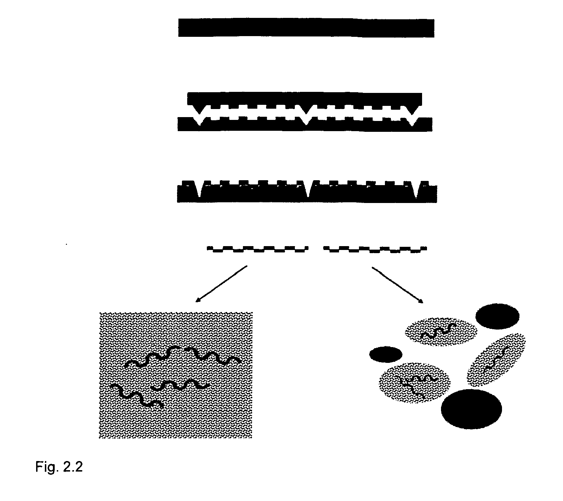

Similar to the interference layer stack pigments (discussed above), ZOD pigments can be obtained by flaking the high index coatings after micro-structuring and deposition on a flexible web. This can be done by vacuum deposition and embossing methods on large area in roll-to-roll ("R2R") processes. Equipment used for roll-to roll processes is known in the field and may also be used for the manufacturing processes for ZOD pigments as described herein. Thus, in an advantageous embodiment, all steps of the ZOD filter manufacturing process are adapted to fit into such R2R process. Such R2R processes are considered advantageous due to relatively low production costs and high manufacturing speed.
In an embodiment, a first manufacturing process of a ZOD pigment will have the following steps (c.f. fig. 2.2):
1. Hot- or cold embossing of a periodic microstructure ("the grating") into an embossable polymer foil or layer on a polymer foil ("carrier foil"). Suitable materials for the polymer foil ("carrier foil") are thermoplastic polymers. E.g. the carrier foil can be made of acrylonitrile butadiene styrene ABS, polycarbonate PC, polyethylene PE, polyetherimide PEI, polyetherketone PEK, poly(ethylene naphthalate) PEN, poly(ethylene therephtalate) PET, polyimide PI, poly(methyl methacrylate) PMMA, poly-oxy-methylene POM, mono oriented polypropylene MOPP, polystyrene PS, polyvinyl chloride PVC and the like. Suitable materials of the polymeric, embossable layer are poly(vinyl alcohol) PVA, poly(vinyl pyrollidone) PVP and other suitable thermoplastic and coatable polymers. The grating master tool used for embossing, can be metallic, for example a Ni or Steel foil or sheet or plate or roll, with or without Cr surface finish. It might also be made of MoC or WC and the like. Optionally the master tool has small grating patches with borders, which are in the desired shape of the pigments.
2. Deposition of HRI layer, typically by thermal evaporation, plasma deposition, sputtering or gravure printing. The thickness of the layer is between 50nm-500 nm.
3. The pigments can be peeled off mechanically by dissolving the embossing layer. The pigments can be dissolved in a liquid after the deposition.
4. Pigments can be selected for size and shape, to further narrow down the size distribution. Several sizes can be manufactured at once with this technique.
5. The ZOD- or HRI-pigments are then embedded in paste, powder or distributed in a liquid or paste to be in a process able form.

In an advantageous embodiment, the grating master has small grating patches with borders, which are in the shape of the ZOD pigments. The edges of the gratings are either enhanced or depressed sufficiently, so that each grating on the master is well separated. The intermediate region serves as knife to separate the pigments. As the colour effect of the ZOD pigments can be size dependent, a close control of the pigment shape is needed, for reproducible results and narrow colour spectra. Such size control may be achieved by using a grating master as described herein, as the ZOD pigments' shape is controlled at the stage where the grating is manufactured.

In an advantageous embodiment, a release layer is deposited on the embossable foil or layer or on the master tool, preferably on the master tool. This release layer serves as an anti-adhesion layer for the embossing or the HRI layer. Possible examples for release layers are Teflon, DLC, silanes and the like.

Examples for processes for making the present ZOD pigments thus include the following steps:
a) Hot- or cold embossing of a periodic microstructure ("the grating") into an embossable polymer foil or embossable layer on a polymer foil;
b) Deposition of HRI layer, in particular by thermal evaporation, plasma deposition, sputtering or gravure printing;
c) dissolving the embossing layer and/or peeling of the pigments mechanically;
d) optionally narrowing down the size distribution by selecting HRI pigments according to the desired size and shape;
e) embedding the HRI pigments in paste or powder or distributing the HRI pigments in a liquid or paste.

Nevertheless there is a need for an improved method to deposit the waveguiding HRI layer used in ZOD pigments to realise ever lower production costs. This may be achieved by gaseous or wet deposition methods on flake shaped substrates. Flake shaped substrates ("flakes") made of a material with an index or refraction at least 0.25 lower than the one of the waveguiding layer are needed, wherein the flakes must possess the subwavelength grating structure at least on one surface. Herein, methods to manufacture such flakes are described. Further methods to deposit the waveguiding layer on these flakes in non vacuum processes are described.

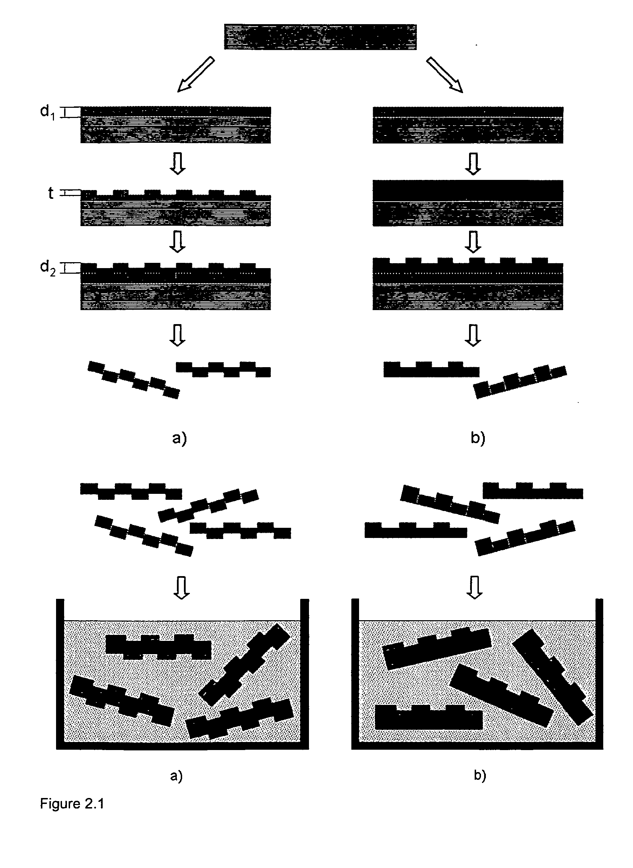

These steps and the materials suitable for it are described in further detail below. Reference is also made to figure 2.1, schematically illustrating these steps.

Step a): On a flexible substrate an embossable first layer which can be dissolved in a first solvent is deposited. This can be done for example by roll-to-roll curtain- or cascade coating or gravure printing. The deposition speed with these techniques can be up to several hundreds of meters per minute on flexible web substrates with a web width on the order of one meter. Suitable materials for the flexible substrates are polymer foils for example PET, PEN, PP, PMMA, PS, MOPP, PE, PC and PVC. The thickness of the flexible substrates may be varied in a broad range, but is preferably between 5µm and 500µm, especially preferably between 12µm and 250µm. Such materials are commercially available or obtainable according to known processes. Suitable materials for the first layer are polymers which are embossable and soluble in a solvent, for example Polyester or Nitrocellulose - derivatives. Examples of water soluble and embossable polymers are poly(acrylic acid) PAA, poly(diallyldimethylammonium chloride) PDADMAC, poly(vinyl pyridine) PVP or poly(vinyl alcohol) PVA. The thickness d1 of the first layer is typically between 50nm and 10µm, preferred between 100nm and 3µm, especially preferred between 300nm and 2000nm. Suitable solvents for this process step can be chosen according to the selection of material for the first layer. Preferred are environmental friendly solvents. Typically, water, ethanol, isopropanol and its mixtures are used.

Step b1) Next the periodic microstructure is embossed in the first layer. This can be done for example by roll-to-roll hot or cold embossing, wherein the surface of a roll bears the periodic microstructure. Typically this is done by placing a nickel shim around a roll. The periodic micro-structure is as defined above. Pigment shape defining edge knife structures as described in the first method may be used.

Step c1) Next, a second layer which is insoluble in the first solvent and transparent at least in the visible spectral range is deposited on the first layer, wherein transparent means that the average transmission is >75%, preferred > 90%. The thickness d2 of this second layer must be larger than the depth t of the grating. This ensures to obtain stable flake shaped substrates. Preferred d2 is in the range of 100 nm up to 2000nm. The deposition can be done by vacuum processes like for example evaporation, sputtering or chemical vapour deposition (CVD). Suitable materials for this second layer are polymers such as poly(p-xylylene) PPX, or inorganic metal oxides or metal halogenides, for example MgF2, Al2O3 or SiO2. Wet coating techniques like roll-to-roll curtain- or cascade coating or gravure printing are another possibility to deposit the second layer. Examples of materials which can be wet coated and which are insoluble in aqueous solutions are nitro-cellulose NC or polystyrene PS. If the second layer is deposited by vacuum deposition the second surface of the second layer, which is not in contact with the first layer, can possess the subwavelength grating structure. This is shown in figure 2.1a). Depending on the material involved and the layer thickness the grating depth and profile may or may not differ on both surfaces. If wet coating techniques are used this second surface will be in most cases uncorrelated with the first surface (not shown in figure 2.1a).

Step d1): Next, the second layer is separated from the flexible substrate by contacting the first layer with a first solvent. Such contact may result in a partial or complete solution of the first layer. The second layer breaks into flakes during the dissolving step.

In an advantageous embodiment, the step d1) can be done in a roll-to-roll process.

In an advantageous embodiment, step d1) may be supported by ultrasonic treatment (US).

In an advantageous embodiment, a porous layer located between the flexible substrate and the first layer is deposited before or together with the first layer. This porous layer can support the dissolving of the first layer by the first solvent as the first solvent can fill the porous and thus reach the first layer from the flexible substrate side. The porous layer can be deposited by known techniques, e.g. as described in the EP1464511, from a dispersion containing inorganic nanoparticles, e.g. silica or boehmit.

Step b2): A second layer, which is embossable and which is insoluble in the above identified first solvent, is deposited on the above identified first layer. Preferred d2 is in the range of 100 nm up to 2000nm. The same deposition techniques as for the first layer can be used. The second layer can be deposited from micro spheres containing aqueous dispersion. Possible materials are for example Latex or PS micro spheres.

Step c2): Next, the embossing of the periodic microstructure in the second layer takes place. This can be done as described in b1, e.g. by roll-to-roll hot embossing. If the second layer is made of polymeric micro spheres the hot embossing, which is done preferred above the glass transition temperature of the polymeric material, leads to a melting or sealing of the layer. Thus after the hot embossing such a layer is insoluble in water although it was deposited from aqueous solution. Depending on the elastic and plastic properties of the material of the first and the second layer the periodic microstructure is embossed in the upper surface of the second layer or in both surfaces.

Step d2) The second layer is separated from the flexible substrate and forms the flake shaped substrates as described above (d1).

In an advantageous embodiment of this third process the deposition of said first and said second layer takes place simultaneously, e.g. by curtain- or cascade coating.

In a further advantageous embodiment of this third process the deposition of said first layer, said second layer and said porous layer takes place simultaneously, e.g. by curtain- or cascade coating.

In an advantageous embodiment of both processes the size and shape of the flakes can be influenced by manufacturing (e.g. embossing) predetermined breaking points or ~lines into the first or the second or in both layers. These breaking points can be for example parallel lines in x- and y-direction. Preferred the thickness of the lines is thin, which means smaller than 3µm, especially smaller than 1.5µm. The spacing between the lines is preferred between 1µm and 100µm, especially preferred between 2µm and 20µm. It was found that an asymmetric shape of the pigments helps to align pigments during the pigment coating process. Such alignment is needed to realise a colour effect upon rotation on products coated with such ZOD pigments. Such breaking points / lines may be manufactured prior, after or simultaneously with embossing of the ZOD microstructure. In a preferred embodiment, the breaking points are embossed together with the periodic microstructure. In this embodiment, the embossing tool comprises the ZOD microstructure and the structure of the ZOD pigments. Thus, no additional equipment is needed.

Step e) Manufacturing of zero-order diffractive pigments: In this step, the flake shaped substrate is coated with a waveguiding layer which is i) transparent; ii) possesses a high index of refraction and iii) has a suitable thickness. The thickness is typically in the range of 50nm to 500nm, preferred between 80nm and 150nm. The transparency may be chosen according to the need of the end user, typically values above > 75%, preferred >90%, are suitable.

In many applications pigments are embedded in a polymer matrix with an index of refraction on the order of 1.5 at a wavelength of 550nm. For such applications, the waveguiding layer must be made of a material with an index of refraction at least > 1.75.

The waveguiding layer may be deposited using known methods. In an advantageous embodiment, the waveguiding layer is deposited in a tank from gaseous or liquid phase. Deposition in a tank is considered advantageous when compared to other methods, in particular to a vacuum-process, due to its huge mass production capability and thus low cost. For example an HRI layer of metal oxide can be deposited on the substrate by hydrolyzing the corresponding water-soluble metal compounds. Optionally the layer can be calcinated. Non-limiting examples of such metal oxides are TiO2, ZrO2, Cr2O3 or ZnO. All transparent materials fulfilling the requirements of the needed index of refraction and transparency may be used.

Figure 2.1 shows schematically the deposition from solution of a waveguiding layer on flake shaped substrates with subwavelength grating on both surfaces (2.1 a) and on only one surface (2.1 b). In most cases the waveguiding layer grows on both surfaces of the flakes.

If the flake shape substrates are thin enough, which means d2<2µm, preferred d2<1µm, additional interference effects can take place. Thus, the invention also relates to ZOD pigment, wherein the pigments consist of a substrate having a thickness below 2 micrometers.

In the case of flake shape substrates with periodic microstructures on both surfaces interference effects of two zero-order diffraction filters are present. This leads to stronger reflection characteristics as described in WO06/038120A Thus, the invention also relates to ZOD pigment, wherein the particles have a periodic microstructure on both surfaces.

In the case of flake shaped substrates with the periodic microstructure on only one surface the deposition of the high index of refraction layer on both surfaces leads to pigments with a ZOD filter on one surface and a flat waveguiding layer on the other surface. In this case interference effects of a zero-order diffractive filter and a thin waveguiding layer take place. For example the light propagating in the leaky waveguiding layer of the ZOD filter can couple to the flat waveguiding layer.

The ZOD pigments are incorporated into cosmetics, personal care preparations, colorants such as paints and inks, and coating compositions, in fields like identification, authentication and security, branding, general printing and marketing as well as decoration, paints, coatings and cosmetics. Some of the present pigments, e.g. those based on TiO₂, are also effective as UV absorbers and may be used correspondingly, e.g. in coating compositions or especially sun screens.

ZOD pigments coated with a polymer, oligo- or polysaccharide, silicon etc. to make a small powder particle mixed into other powder particles and/or make the present pigments more readily dispersible in the intended (e.g. aqueous or lipid) matrix are useful e.g. in the preparation of decorative cosmetics, sun screen lotions, aqueous or oil-based coatings as well as inks.

Examples of applications are decorative cosmetics, printing inks and paints or coatings for automotive or packaging.

The invention thus pertains to a composition containing ZOD pigments (in the following also referred to as gloss pigments of the invention) dispersed in a matrix comprising a natural or synthetic organic polymer, a surfactant, cosmetic wax, cosmetic oil and/or cosmetic alcohol. The present ZOD pigments are preferably contained in the compositions of the invention in an amount from 0.0001 to 90 % by weight of the total formulation, depending on the intended use. Examples are 0.1-30 % b.w. inter alia in decorative cosmetics and sun screens, 0.01 to 5 % b.w. inter alia in coating compositions, 0.01 to 40 % by weight inter alia in inks.

The ZOD pigments of the invention are usually contained in dispersed form in the matrix material. In case of shaped pigments having one axis significantly longer than the other (e.g. 2-fold or more), additional colour effects may be obtained by preferential orientation of the pigments, e.g. by flow in the liquid matrix, coating on chemically or topographically pre-patterned substrates, partial segregation, enrichment by gravitational forces etc.

The particles of the gloss pigment according to the invention can, where appropriate, be integrated into a polymer, for example obtainable by emulsion polymerisation as known per se in many variants for toner particles, or by incorporation into a thermoplastic or a polymer dispersion or solution.
The gloss pigments according to the invention can be used for all customary purposes, for example for colouring polymers in the mass, surface coatings (including effect finishes, including those for the automotive sector) and printing inks, and also, for example, for applications in cosmetics. Such applications are known from reference works, for example "Industrial Organic Pigments" (W. Herbst and K. Hunger, VCH Verlagsgesellschaft mbH, Weinheim/New York, 2nd, completely revised edition, 1997).

Organic polymers and related components generally useful in combination with the present pigments include the following ones:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).

   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
30. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
31. Aqueous emulsions of natural or synthetic rubber, e.g. natural latex or latices of carboxylated styrene/butadiene copolymers.

The gloss pigments (effect pigments) according to the invention exhibit goniochromatic properties ("colour travel", i.e. produce different colours depending on light incidence and viewing angle) and result in brilliant, highly saturated (lustrous) colours. They are accordingly very especially suitable for combination with conventional, transparent pigments, for example organic pigments such as, for example, diketopyrrolopyrroles, quinacridones, dioxazines, perylenes, isoindolinones etc., it being possible for the transparent pigment to have a similar colour to the effect pigment. Especially interesting combination effects are obtained, however, in analogy to, for example, EP 388 932 or EP 402 943, when the colour of the transparent pigment and that of the effect pigment are complementary.

The gloss pigments according to the invention can be used with excellent results for pigmenting high molecular weight organic material.

The high molecular weight organic material for the pigmenting of which the gloss pigments or pigment compositions according to the invention may be used may be of natural or synthetic origin. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

From the series of the polyaddition resins and polycondensation resins there may be mentioned, for example, condensation products of formaldehyde with phenols, so-called phenoplasts, and condensation products of formaldehyde with urea, thiourea or melamine, so-called aminoplasts, and the polyesters used as surface-coating resins, either saturated, such as alkyd resins, or unsaturated, such as maleate resins; also linear polyesters and polyamides, polyurethanes or silicones.

The said high molecular weight compounds may be present singly or in mixtures, in the form of plastic masses or melts. They may also be present in the form of their monomers or in the polymerised state in dissolved form as film-formers or binders for surface coatings or printing inks, such as, for example, boiled linseed oil, nitrocellulose, alkyd resins, melamine resins and urea-formaldehyde resins or acrylic resins.

Depending on the intended purpose, it has proved advantageous to use the gloss pigments or gloss pigment compositions according to the invention as toners or in the form of preparations. Depending on the conditioning method or intended application, it may be advantageous to add certain amounts of texture-improving agents to the effect pigment before or after the conditioning process, provided that this has no adverse effect on use of the effect pigments for colouring high molecular weight organic materials, especially polyethylene. Suitable agents are, especially, fatty acids containing at least 18 carbon atoms, for example stearic or behenic acid, or amides or metal salts thereof, especially magnesium salts, and also plasticisers, waxes, resin acids, such as abietic acid, rosin soap, alkylphenols or aliphatic alcohols, such as stearyl alcohol, or aliphatic 1,2-dihydroxy compounds containing from 8 to 22 carbon atoms, such as 1,2-dodecanediol, and also modified colophonium maleate resins or fumaric acid colophonium resins. The texture-improving agents are added in amounts of preferably from 0.1 to 30 % by weight, especially from 2 to 15 % by weight, based on the end product.

The gloss pigments according to the invention can be added in any tinctorially effective amount to the high molecular weight organic material being pigmented. A pigmented composition comprising a high molecular weight organic material and from 0.01 to 80 % by weight, preferably from 0.1 to 30 % by weight, based on the high molecular weight organic material, of an effect pigment according to the invention is advantageous. Concentrations of from 1 to 20 % by weight, especially of about 10 % by weight, can often be used in practice. High concentrations, for example those above 30 % by weight, are usually in the form of concentrates ("masterbatches"), which can be used as colorants for producing pigmented materials having a relatively low pigment content, the pigments according to the invention having an extraordinarily low viscosity in customary formulations so that they can still be processed well.

For the purpose of pigmenting organic materials, the effect pigments according to the invention may be used singly. It is, however, also possible, in order to achieve different hues or colour effects, to add any desired amounts of other colour-imparting constituents, such as white, coloured, black or effect pigments, to the high molecular weight organic substances in addition to the effect pigments according to the invention. When coloured pigments are used in admixture with the effect pigments according to the invention, the total amount is preferably from 0.1 to 10 % by weight, based on the high molecular weight organic material. Especially high goniochromicity is provided by the preferred combination of an effect pigment according to the invention with a coloured pigment of another colour, especially of a complementary colour, with colorations made using the effect pigment and colorations made using the coloured pigment having, at a measurement angle of 10°, a difference in hue (ΔH*) of from 20 to 340, especially from 150 to 210.

Preferably, the gloss pigments according to the invention are combined with transparent coloured pigments, it being possible for the transparent coloured pigments to be present either in the same medium as the effect pigments according to the invention or in a neighbouring medium. An example of an arrangement in which the effect pigment and the coloured pigment are advantageously present in neighbouring media is a multi-layer effect surface coating.

The pigmenting of high molecular weight organic substances with the pigments according to the invention is carried out, for example, by admixing such a pigment, where appropriate in the form of a masterbatch, with the substrates using roll mills or mixing or grinding apparatuses. The pigmented material is then brought into the desired final form using methods known *per se,* such as calendaring, compression moulding, extrusion, coating, pouring or injection moulding. Any additives customary in the plastics industry, such as plasticisers, fillers or stabilisers, can be added to the polymer, in customary amounts, before or after incorporation of the pigment. In particular, in order to produce non-rigid shaped articles or to reduce their brittleness, it is desirable to add plasticisers, for example esters of phosphoric acid, phthalic acid or sebacic acid, to the high molecular weight compounds prior to shaping.

For pigmenting surface coatings and printing inks, the high molecular weight organic materials and the gloss pigments according to the invention, where appropriate together with customary additives such as, for example, fillers, other pigments, siccatives or plasticisers, are finely dispersed or dissolved in the same organic solvent or solvent mixture, it being possible for the individual components to be dissolved or dispersed separately or for a number of components to be dissolved or dispersed together, and only thereafter for all the components to be brought together.

Dispersing an effect pigment according to the invention in the high molecular weight organic material being pigmented, and processing a pigment composition according to the invention, are preferably carried out subject to conditions under which only relatively weak shear forces occur so that the effect pigment is not broken up into smaller portions.

The colorations obtained, for example in plastics, surface coatings or printing inks, especially in surface coatings or printing inks, more especially in surface coatings, are distinguished by excellent properties, especially by extremely high saturation, outstanding fastness properties and high goniochromicity.

When the high molecular weight material being pigmented is a surface coating, it is especially a speciality surface coating, very especially an automotive finish.

### Coating compositions

In order to further improve the properties of the inventive pigment composition wherein the mixture is co-blended in the presence of an additive selected from the group consisting of texture-improving agents, anti-flocculating agents, rheology improving agents or extenders and mixtures thereof and are optionally added before, during or after the blending process.

The texture-improving agent, anti-flocculant, rheology improving agent and/or extender is preferably incorporated into the present pigment compositions in an amount of from 0.05 to 30 percent, most preferably 0.5 to 25 percent, by weight, based on the combined weights of the pigment mixture.

Texture-improving agents are especially useful as an additional component, which improves the properties of the present pigment composition. Suitable texture-improving agents include fatty acids having at least 12 carbon atoms, and amides, esters or salts of fatty acids. Typical fatty acid derived texture-improving agents include fatty acids such as stearic acid or behenic acid, and fatty amines like lauryl amine, or stearylamine. In addition, fatty alcohols or ethoxylated fatty alcohols, diols like aliphatic 1,2-diols such as 1,2-dodecanediol or polyols like polyvinylalcohol and epoxidized soy bean oil, waxes, resin acids and resin acid salts are suitable texture-improving agents. Rosin acids and rosin acid salts are especially suitable texture-improving agents.

Anti-flocculating agents, which can also act as rheology improving agents, for example copper phthalocyanine derivative, quinacridone- or dihydroquinacridone derivatives, are known in the pigment industry. Preferably, the additive is quinacridone monosulfonic acid or quinacridone monosulfonic acid aluminum salt or 3,5-dimethylpyrazol-1-methyl quinacridone, or a mixture thereof.

The inventive pigment compositions are suitable for use as pigments for coloring a solid or liquid substrate, preferably a high molecular weight organic material.

Examples of high molecular weight organic materials which may be colored or pigmented with the inventive pigment compositions are cellulose ethers and esters such as ethyl cellulose, nitrocellulose, cellulose acetate, cellulose butyrate, natural resins or synthetic resins such as polymerization resins or condensation resins, for example aminoplasts, in particular urea/formaldehyde and melamine/formaldehyde resins, alkyd resins, phenolic plastics, polycarbonates, polyolefins, polystyrene, polyvinyl chloride, polyamides, polyurethanes, polyesters, rubber, casein, silicone and silicone resins, singly or in mixtures. Preferably, the high molecular weight materials have a molecular weight in the range of from 10³ to 10⁸ g/mol.

Preferably, the high molecular weight organic material is an industrial or automotive paint, an ink, a security ink, a powder or a UV/EB cured coating system.
The high molecular weight organic materials may be singly or as mixtures in the form of plastics, melts or of spinning solutions, varnishes, paints or printing inks. The inventive pigment compositions are preferably employed in an amount of 0.1 to 30 percent by weight, based on the high molecular organic material to be pigmented.

The pigmenting of the high molecular weight organic materials with the pigment compositions of the invention is carried out for example by incorporating such a composition, optionally in the form of a masterbatch, into the substrates using roll mills, mixing or grinding machines. The pigmented material is then brought into the desired final form by methods which are known per se, for example calendering, molding, extruding, coating, spinning, casting or by injection molding. It is often desirable to incorporate plasticisers into the high molecular weight compounds before processing in order to produce non-brittle moldings or to diminish their brittleness. Suitable plasticizers are for example esters of phosphoric acid, phthalic acid or sebacic acid. The plasticisers may be incorporated before or after working the composition into the polymers.

The inventive pigment compositions are suitable as colorants in powders and powder coating materials, especially in triboelectrically or electrokinetically sprayable powder coating materials which are used to coat the surfaces of articles made, for example, from metal, wood, plastic, glass, ceramic, concrete, textile material, paper or rubber. As powder coating resins it is typical to use epoxy resins, carboxyl- and hydroxyl-containing polyester resins, polyurethane resins and acrylic resins together with customary hardeners. Resin combinations are also used. For example, epoxy resins are frequently used in combination with carboxyl- and hydroxyl-containing polyester resins. Examples of typical hardener components (depending on the resin system) are acid anhydrides, imidazoles and also dicyandiamide and its derivatives, blocked isocyanates, bisacylurethanes, phenolic resins and melamine resins, triglycidyl isocyanurates, oxazolines and dicarboxylic acids.

### Cosmetics and Personal Care

Thus, in one aspect, the present invention relates to a cosmetic and personal care preparation or formulation e.g. comprising (a) from 0.0001 to 90 % by weight of a ZOD pigment as defined above and (b) from 10 to 99.9999 % of a (cosmetically) suitable carrier material, based on the total weight of the cosmetic preparation or formulation.

The present invention provides a cosmetic composition which exhibits at least one of the following effects, for example aesthetic, goniochromatic, and volume effects. Such effects may be obtained by use of compositions, for example, chosen from foundations, eye shadows, blushes, lipsticks, lip glosses, lip lacquers, mascaras, and eyeliners.

The preparations according to the invention are especially preparations or formulations that are suitable for making-up the lips or the skin and for colouring the hair or the nails.

The cosmetic preparations are, for example, lipsticks, blushers, foundations, nail varnishes and hair shampoos.

The composition according to the present invention may also contain one or one more additional compounds as described below.

### Fatty alcohols

Guerbet alcohols based on fatty alcohols having from 6 to 18, preferably from 8 to 10 carbon atoms including cetyl alcohol, stearyl alcohol, cetearyl alcohol, oleyl alcohol, octyldodecanol, benzoate of C12-C15 alcohols, acetylated lanolin alcohol, etc..

### Esters of fatty acids

Esters of linear C₆-C₂₄ fatty acids with linear C₃-C₂₄ alcohols, esters of branched C₆-C₁₃carboxylic acids with linear C₆-C₂₄ fatty alcohols, esters of linear C₆-C₂₄ fatty acids with branched alcohols, especially 2-ethylhexanol, esters of hydroxycarboxylic acids with linear or branched C₆-C₂₂ fatty alcohols, especially dioctyl malates, esters of linear and/or branched fatty acids with polyhydric alcohols (for example propylene glycol, dimer diol or trimer triol) and/or Guerbet alcohols, for example caproic acid, caprylic acid, 2-ethylhexanoic acid, capric acid, lauric acid, isotridecanoic acid, myristic acid, palmitic acid, palmitoleic acid, stearic acid, isostearic acid, oleic acid, elaidic acid, petroselinic acid, linoleic acid, linolenic acid, elaeostearic acid, arachidic acid, gadoleic acid, behenic acid and erucic acid and technical-grade mixtures thereof (obtained, for example, in the pressure removal of natural fats and oils, in the reduction of aldehydes from Roelen's oxosynthesis or in the dimerisation of unsaturated fatty acids) with alcohols, for example, isopropyl alcohol, caproic alcohol, capryl alcohol, 2-ethylhexyl alcohol, capric alcohol, lauryl alcohol, isotridecyl alcohol, myristyl alcohol, cetyl alcohol, palmoleyl alcohol, stearyl alcohol, isostearyl alcohol, oleyl alcohol, elaidyl alcohol, petroselinyl alcohol, linoyl alcohol, linolenyl alcohol, elaeostearyl alcohol, arachidyl alcohol, gadoleyl alcohol, behenyl alcohol, erucyl alcohol and brassidyl alcohol and technical-grade mixtures thereof (obtained, for example, in the high-pressure hydrogenation of technical-grade methyl esters based on fats and oils or aldehydes from Roelen's oxosynthesis and as monomer fractions in the dimerisation of unsaturated fatty alcohols).

Examples of such ester oils are isopropylmyristate, isopropylpalmitate, isopropylstearate, isopropyl isostearate, isopropyloleate, n-butylstearate, n-hexyllaurate, n-decyloleate, isooctylstearate, iso-nonylstearate, isononyl isononanoate, 2-ethylhexylpalmitate, 2-hexyllaurate, 2-hexyldecylstearate, 2-octyldodecylpalmitate, oleyloleate, oleylerucate, erucyloleate, erucylerucate, cetearyl octanoate, cetyl palmitate, cetyl stearate, cetyl oleate, cetyl behenate, cetyl acetate, myristyl myristate, myristyl behenate, myristyl oleate, myristyl stearate, myristyl palmitate, myristyl lactate, propylene glycol dicaprylate/caprate, stearyl heptanoate, diisostearyl malate, octyl hydroxystearate, etc..

### Natural or synthetic triglycerides including glyceryl esters and derivatives

Di- or tri-glycerides, based on C₆-C₁₈ fatty acids, modified by reaction with other alcohols (caprylic/capric triglyceride, wheat germ glycerides, etc.). Fatty acid esters of polyglycerin (polyglyceryl-n such as polyglyceryl-4 caprate, polyglyceryl-2 isostearate, etc. or castor oil, hydrogenated vegetable oil, sweet almond oil, wheat germ oil, sesame oil, hydrogenated cottonseed oil, coconut oil, avocado oil, corn oil, hydrogenated castor oil, shea butter, cocoa butter, soybean oil, mink oil, sunflower oil, safflower oil, macadamia nut oil, olive oil, hydrogenated tallow, apricot kernel oil, hazelnut oil, borago oil, etc.

Waxes including esters of long-chain acids and alcohols as well as compounds having wax-like properties, e.g., carnauba wax, beeswax (white or yellow), lanolin wax, candellila wax, ozokerite, japan wax, paraffin wax, microcrystalline wax, ceresin, cetearyl esters wax, synthetic beeswax etc., or hydrophilic waxes such as Cetearyl Alcohol or partial glycerides.

### Hydrocarbon oils:

Mineral oil (light or heavy), petrolatum (yellow or white), microcrystalline wax, paraffinic and isoparaffinic compounds, hydrogenated isoparaffinic molecules as polydecenes and polybutene, hydrogenated polyisobutene, squalane, isohexadecane, isododecane and others from plant or animal origin.

Further components include
Silicones or siloxanes (organosubstituted polysiloxanes), including siloxanes (e.g. cyclic or polymeric), Silanol compounds or dimethiconols, Silicone elastomers & resins, Alkyl-Modified Siloxanes (AMS),
Fluorinated or perfluorinated oils,
Super-fatting agents,
Pearlescent waxes,
Anti-wrinkle actives, including sulfur-containing D and L amino acids, vitamin B compounds etc.,
Skin lightening agents,
Deodorising active ingredients, for example, antiperspirants, Esterase inhibitors, Antibacterial active ingredients including chitosan, phenoxyethanol, chlorhexidine gluconate, 5-chloro-2-(2,4-dichlorophenoxy)-phenol (Triclosan®),
Consistency regulators/thickeners - Rheology modifiers, such as Natural thickeners, Mineral thickeners, Synthetic Rheology modifiers, Phospholipid derivatives;
Polymers , e.g. cationic polymers such as cationic cellulose derivatives, anionic, zwitterionic, amphoteric and non-ionic polymers;
Hydrotropic agents,
Perfume oils.
Emulsifiers, such as O/W emulsifiers, W/O emulsifiers, Non ionic emulsifiers such as PEG modified components, Anionic emulsifiers, Silicone emulsifiers (particularly suitable for W/Si emulsions);
see corresponding components published on Oct. 25, 2005 on ip.com under the identifier IPCOM000130489D for further details.

The gloss pigments may be used singly or in the form of mixtures. It is, in addition, possible to use the gloss pigments together with other pigments and/or colorants.

The cosmetic preparations and formulations according to the invention preferably contain the gloss pigment in an amount from 0.005 to 50 % by weight, based on the total weight of the preparation.

Suitable carrier materials for the cosmetic preparations and formulations according to the invention include the customary materials used in such compositions.

The cosmetic preparations and formulations according to the invention may be in the form of, for example, sticks, ointments, creams, emulsions, suspensions, dispersions, powders or solutions. They are, for example, lipsticks, mascara preparations, blushes, eye-shadows, foundations, eyeliners, powder or nail varnishes.

If the preparations are in the form of sticks, for example lipsticks, eye-shadows, blushes or foundations, the preparations consist for a considerable part of fatty components, which may consist of one or more waxes, for example ozokerite, lanolin, lanolin alcohol, hydrogenated lanolin, acetylated lanolin, lanolin wax, beeswax, candelilla wax, microcrystalline wax, carnauba wax, cetyl alcohol, stearyl alcohol, cocoa butter, lanolin fatty acids, petrolatum, petroleum jelly, mono-, di- or tri-glycerides or fatty esters thereof that are solid at 25°C, silicone waxes, such as methyloctadecane-oxypolysiloxane and poly(dimethylsiloxy)-stearoxysiloxane, stearic acid monoethanolamine, colophane and derivatives thereof, such as glycol abietates and glycerol abietates, hydrogenated oils that are solid at 25°C, sugar glycerides and oleates, myristates, lanolates, stearates and dihydroxystearates of calcium, magnesium, zirconium and aluminium.

The fatty component may also consist of a mixture of at least one wax and at least one oil, in which case the following oils, for example, are suitable: paraffin oil, purcelline oil, perhydrosqualene, sweet almond oil, avocado oil, calophyllum oil, castor oil, sesame oil, jojoba oil, mineral oils having a boiling point about from 310 to 410°C, silicone oils, such as dimethylpolysiloxane, linoleyl alcohol, linolenyl alcohol, oleyl alcohol, cereal grain oils, such as wheatgerm oil, isopropyl lanolate, isopropyl palmitate, isopropyl myristate, butyl myristate, cetyl myristate, hexadecyl stearate, butyl stearate, decyl oleate, acetyl glycerides, octanoates and decanoates of alcohols and polyalcohols, for example of glycol and glycerol, ricinoleates of alcohols and polyalcohols, for example of cetyl alcohol, isostearyl alcohol, isocetyl lanolate, isopropyl adipate, hexyl laurate and octyl dodecanol.

The fatty components in such preparations in the form of sticks may generally constitute up to 99.91 % by weight of the total weight of the preparation.

The cosmetic preparations and formulations according to the invention may additionally comprise further constituents, such as, for example, glycols, polyethylene glycols, polypropylene glycols, monoalkanolamides, non-coloured polymeric, inorganic or organic fillers, preservatives, UV filters or other adjuvants and additives customary in cosmetics, for example a natural or synthetic or partially synthetic di- or tri-glyceride, a mineral oil, a silicone oil, a wax, a fatty alcohol, a Guerbet alcohol or ester thereof, a lipophilic functional cosmetic active ingredient, including sun-protection filters, or a mixture of such substances.

A lipophilic functional cosmetic active ingredient suitable for skin cosmetics, an active ingredient composition or an active ingredient extract is an ingredient or a mixture of ingredients that is approved for dermal or topical application. The following may be mentioned by way of example:
- active ingredients having a cleansing action on the skin surface and the hair; these include all substances that serve to cleanse the skin, such as oils, soaps, synthetic detergents and solid substances;
- active ingredients having a deodorising and perspiration-inhibiting action: they include antiperspirants based on aluminium salts or zinc salts, deodorants comprising bactericidal or bacteriostatic deodorising substances, for example triclosan, hexachlorophene, alcohols and cationic substances, such as, for example, quaternary ammonium salts, and odour absorbers, for example ^{®}Grillocin (combination of zinc ricinoleate and various additives) or triethyl citrate (optionally in combination with an antioxidant, such as, for example, butyl hydroxytoluene) or ion-exchange resins;
- active ingredients that offer protection against sunlight (UV filters): suitable active ingredients are filter substances (sunscreens) that are able to absorb UV radiation from sunlight and convert it into heat; depending on the desired action, the following light-protection agents are preferred: light-protection agents that selectively absorb sunburn-causing high-energy UV radiation in the range of approximately from 280 to 315 nm (UV-B absorbers) and transmit the longer-wavelength range of, for example, from 315 to 400 nm (UV-A range), as well as light-protection agents that absorb only the longer-wavelength radiation of the UV-A range of from 315 to 400 nm (UV-A absorbers);
suitable light-protection agents are, for example, organic UV absorbers from the class of the p-aminobenzoic acid derivatives, salicylic acid derivatives, benzophenone derivatives, dibenzoylmethane derivatives, diphenyl acrylate derivatives, benzofuran derivatives, polymeric UV absorbers comprising one or more organosilicon radicals, cinnamic acid derivatives, camphor derivatives, trianilino-s-triazine derivatives, phenyl-benzimidazolesulfonic acid and salts thereof, menthyl anthranilates, benzotriazole derivatives, and/or an inorganic micropigment selected from aluminium oxide- or silicon dioxide-coated TiO₂, zinc oxide or mica; wherein suitable UV filter substances are listed below:

| Chemical Name | CAS No. |
|---|---|
| | 36861-47-9 |
| (+/-)-1,7,7-trimethyl-3-[(4-methylphenyl)methylene]bicyclo[2.2.1]heptan-2-one | |
| 1,7,7-trimethyl-3-(phenylmethylene)bicyclo[2.2.1]heptan-2-one | 15087-24-8 |
| (2-Hydroxy-4-methoxyphenyl)(4-methylphenyl)methanone | 1641-17-4 |
| 2,4-dihydroxybenzophenone | 131-56-6 |
| 2,2',4,4'-tetrahydroxybenzophenone | 131-55-5 |
| 2-Hydroxy-4-methoxy benzophenone; | 131-57-7 |
| 2-Hydroxy-4-methoxy benzophenone-5-sulfonic acid | 4065-45-6 |
| 2,2'-dihydroxy-4,4'-dimethoxybenzophenone | 131-54-4 |
| 2,2'-Dihydroxy-4-methoxybenzophenone | 131-53-3 |
| Alpha-(2-oxoborn-3-ylidene)toluene-4-sulphonic acid and its salts | 56039-58-8 |
| 1-[4-(1,1-dimethylethyl)phenyl]-3-(4-methoxyphenyl)propane-1,3-dione | 70356-09-1 |
| Methyl N,N,N-trimethyl-4-[(4,7,7-trimethyl-3-oxobicyclo[2,2,1]hept-2-ylidene)methyl]anilinium sulphate; | 52793-97-2 |
| 3,3,5-Trimethyl cyclohexyl-2-hydroxy benzoate | 118-56-9 |
| Isopentyl p-methoxycinnamate | 71617-10-2 |
| Menthyl-o-aminobenzoate | 134-09-8 |
| Menthyl salicylate | 89-46-3 |
| 2-Ethylhexyl 2-cyano,3,3-diphenylacrylate | 6197-30-4 |
| 2- ethylhexyl 4- (dimethylamino)benzoate | 21245-02-3 |
| 2- ethylhexyl 4- methoxycinnamate | 5466-77-3 |
| 2- ethylhexyl salicylate | 118-60-5 |
| Benzoic acid, 4, 4', 4"- (1, 3, 5- triazine- 2, 4, 6- triyltriimino)tris-, tris(2-ethylhexyl)ester; 2,4,6-Trianilino-(p-carbo-2'-ethylhexyl-1'-oxi)-1,3,5-triazine | 88122-99-0 |
| 4- aminobenzoic acid | 150-13-0 |
| Benzoic acid, 4-amino-, ethyl ester, polymer with oxirane | 113010-52-9 |
| 2- phenyl- 1H- benzimidazole- 5- sulphonic acid | 27503-81-7 |
| 2-Propenamide, N-[[4-[(4,7,7-trimethyl-3-oxobicyclo[2.2.1]hept-2-ylidene)methyl]phenyl]methyl]-, homopolymer | 147897-12-9 |
| Triethanolamine salicylate | 2174-16-5 |
| 3, 3'- (1, 4- phenylenedimethylene)bis[7, 7- dimethyl- 2- oxo-bicyclo[2.2.1]heptane-1-methanesulfonic acid] | 90457-82-2 |
| Titanium dioxide | 13463-67-7 |
| Zinc oxide | 1314-13-2 |
| 2,2'-Methylene-bis-[6-(2H-benzotriazol-2-yl)-4-(1,1,3,3-tetramethylbutyl)-phenol] | 103597-45-1 |
| 2,4-bis{[4-(2-ethylhexyloxy)-2-hydroxy]-phenyl}-6-(4-methoxyphenyl)-(1,3,5)-triazine | 187393-00-6 |
| 1H-Benzimidazole-4,6-disulfonic acid, 2,2'-(1,4-phenylene)bis-, disodium salt | 180898-37-7 |
| Benzoic acid, 4,4'-[[6-[[4-[[(1,1-dimethylethyl)amino]carbonyl]phenyl]amino]1,3,5-triazine-2,4-diyl]diimino]bis-, bis(2-ethylhexyl)ester | 154702-15-5 |
| Phenol, 2-(2H-benzotriazol-2-yl)-4-methyl-6-[2-methyl-3-[1,3,3,3-tetramethyl-1-[(trimethylsilyl)oxy]disiloxanyl]propyl]- | 155633-54-8 |
| Dimethicodiethylbezalmalonate | 207574-74-1 |
| Benzenesulfonic acid, 3-(2H-benzotriazol-2-yl)-4-hydroxy-5-(1-methylpropyl)-, monosodium salt | 92484-48-5 |
| Benzoic acid, 2-[4-(diethylamino)-2-hydroxybenzoyl]-, hexyl ester | 302776-68-7 |
| 1-Dodecanaminium, N-[3-[[4-(dimethylamino)benzoyl]amino]propyl]N,N-dimethyl-, salt with 4-methylbenzenesulfonic acid (1:1) | 156679-41-3 |
| 1-Propanaminium, N,N,N-trimethyl-3-[(1-oxo-3-phenyl-2-propenyl)amino]-, chloride | 177190-98-6 |
| 1H-Benzimidazole-4,6-disulfonic acid, 2,2'-(1,4-phenylene)bis- | 170864-82-1 |
| 1,3,5-Triazine, 2,4,6-tris(4-methoxyphenyl)- | 7753-12-0 |
| 1,3,5-Triazine, 2,4,6-tris[4-[(2-ethylhexyl)oxy]phenyl]- | 208114-14-1 |
| 1-Propanaminium, 3-[[3-[3-(2H-benzotriazol-2-yl)-5-(1,1-dimethylethyl)-4-hydroxyphenyl]-1-oxopropyl]amino]-N,N-diethyl-N-methyl-, methyl sulfate (salt) | 340964-15-0 |
| 2-Propenoic acid, 3-(1H-imidazol-4-yl)- | 104-98-3 |
| Benzoic acid, 2-hydroxy-, [4-(1-methylethyl)phenyl]methyl ester | 94134-93-7 |
| 1,2,3-Propanetriol, 1-(4-aminobenzoate) | 136-44-7 |
| Benzeneacetic acid, 3,4-dimethoxy-a-oxo- | 4732-70-1 |
| 2-Propenoic acid, 2-cyano-3,3-diphenyl-, ethyl ester | 5232-99-5 |
| Anthralinic acid, p-menth-3-yl ester | 134-09-8 |
| | 349580-12-7 |
| 2,2'-bis(1,4-phenylene)-1H-benzimidazole-4,6-disulphonic acid mono sodium salt or Disodium phenyl dibenzimidazole tetrasulfonate or Heliopan AP | |

- active ingredients against insects (repellents) are agents that are intended to prevent insects from touching the skin and becoming active there; they drive insects away and evaporate slowly; the most frequently used repellent is diethyl toluamide (DEET); other common repellents will be found in "Pflegekosmetik" (W. Raab and U. Kindl, Gustav-Fischer-Verlag Stuttgart/New York, 1991) on page 161;
- active ingredients for protection against chemical and mechanical influences: these include all substances that form a barrier between the skin and external harmful substances, such as, for example, paraffin oils, silicone oils, vegetable oils, PCL products and lanolin for protection against aqueous solutions, film-forming agents, such as sodium alginate, triethanolamine alginate, polyacrylates, polyvinyl alcohol or cellulose ethers for protection against the effect of organic solvents, or substances based on mineral oils, vegetable oils or silicone oils as "lubricants" for protection against severe mechanical stresses on the skin;
- moisturising substances: the following substances, for example, are used as moisture-controlling agents (moisturisers): sodium lactate, urea, alcohols, sorbitol, glycerol, propylene glycol, collagen, elastin and hyaluronic acid;
- active ingredients having a keratoplastic effect: benzoyl peroxide, retinoic acid, colloidal sulfur and resorcinol;
- antimicrobial agents, such as, for example, triclosan or quaternary ammonium compounds;
- oily or oil-soluble vitamins or vitamin derivatives that can be applied dermally: for example vitamin A (retinol in the form of the free acid or derivatives thereof), panthenol, pantothenic acid, folic acid, and combinations thereof, vitamin E (tocopherol), vitamin F; essential fatty acids; or niacinamide (nicotinic acid amide);
- vitamin-based placenta extracts: active ingredient compositions comprising especially vitamins A, C, E, B₁, B₂, B₆, B₁₂, folic acid and biotin, amino acids and enzymes as well as compounds of the trace elements magnesium, silicon, phosphorus, calcium, manganese, iron or copper;
- skin repair complexes: obtainable from inactivated and disintegrated cultures of bacteria of the bifidus group;
- plants and plant extracts: for example arnica, aloe, beard lichen, ivy, stinging nettle, ginseng, henna, camomile, marigold, rosemary, sage, horsetail or thyme;
- animal extracts: for example royal jelly, propolis, proteins or thymus extracts;
- cosmetic oils that can be applied dermally: nonionic glycerol esters, for example Miglyol 812, apricot kernel oil, avocado oil, babassu oil, cottonseed oil, borage oil, thistle oil, groundnut oil, gamma-oryzanol, rosehip-seed oil, hemp oil, hazelnut oil, blackcurrant-seed oil, jojoba oil, cherry-stone oil, salmon oil, linseed oil, cornseed oil, macadamia nut oil, almond oil, evening primrose oil, mink oil, olive oil, pecan nut oil, peach kernel oil, pistachio nut oil, rape oil, rice-seed oil, castor oil, safflower oil, sesame oil, soybean oil, sunflower oil, tea tree oil, grapeseed oil or wheatgerm oil.

The preparations in stick form are preferably anhydrous but may in certain cases comprise a certain amount of water which, however, in general does not exceed 40 % by weight, based on the total weight of the cosmetic preparation.

If the cosmetic preparations and formulations according to the invention are in the form of semi-solid products, that is to say in the form of ointments or creams, they may likewise be anhydrous or aqueous. Such preparations and formulations are, for example, mascaras, eyeliners, foundations, blushers, eye-shadows, or compositions for treating rings under the eyes.

If, on the other hand, such ointments or creams are aqueous, they are especially emulsions of the water-in-oil type or of the oil-in-water type that comprise, apart from the pigment, from 1 to 98.8 % by weight of the fatty phase, from 1 to 98.8 % by weight of the aqueous phase and from 0.2 to 30 % by weight of an emulsifier.

Such ointments and creams may also comprise further conventional additives, such as, for example, perfumes, antioxidants, preservatives, gel-forming agents, UV filters, colorants, pigments, pearlescent agents, non-coloured polymers as well as inorganic or organic fillers.

If the preparations are in the form of a powder, they consist substantially of a mineral or inorganic or organic filler such as, for example, talcum, kaolin, starch, polyethylene powder or polyamide powder, as well as adjuvants such as binders, colorants etc..

Such preparations may likewise comprise various adjuvants conventionally employed in cosmetics, such as fragrances, antioxidants, preservatives etc..

If the cosmetic preparations and formulations according to the invention are nail varnishes, they consist essentially of nitrocellulose and a natural or synthetic polymer in the form of a solution in a solvent system, it being possible for the solution to comprise other adjuvants, for example pearlescent agents. In that embodiment, the coloured polymer is present in an amount of approximately from 0.1 to 5 % by weight.

The cosmetic preparations and formulations according to the invention may also be used for colouring the hair, in which case they are used in the form of shampoos, creams or gels that are composed of the base substances conventionally employed in the cosmetics industry and a pigment according to the invention.

The compositions for colouring the hair may furthermore comprise any active ingredient, additive or adjuvant known for such preparations.

Adjuvants that are suitable for such formulations are in general customary in the field hair-colouring, such as for example surfactants or tensides, solvents, bases, acids, perfumes, polymeric adjuvant, thickeners and light stabilisers.

The composition for colouring the hair in many cases comprises at least one surfactant. Suitable surfactants are anionic, zwitterionic, ampholytic, non-ionic and cationic surfactants. In many cases, however, it has proved advantageous to select the surfactants from anionic, zwitterionic and non-ionic surfactants.

Anionic surfactants suitable for use in the compositions for colouring the hair include all anionic surface-active substances that are suitable for use on the human body. Such substances are characterised by an anionic group that imparts water solubility, for example a carboxylate, sulfate, sulfonate or phosphate group, and a lipophilic alkyl group having approximately from 10 to 22 carbon atoms. In addition, glycol or polyglycol ether groups, ester, ether and amide groups and also hydroxy groups may be present in the molecule. The following are examples of suitable anionic surfactants, each in the form of sodium, potassium or ammonium salts or mono-, di- or tri-alkanolammonium salts having 2 or 3 carbon atoms in the alkanol group:
- linear fatty acids having from 10 to 22 carbon atoms (soaps),
- ether carboxylic acids of formula R-O-(CH₂-CH₂-O)ₓ-CH₂-COOH, in which R is a linear alkyl group having from 10 to 22 carbon atoms and x = 0 or from 1 to 16,
- acyl sarcosides having from 10 to 18 carbon atoms in the acyl group,
- acyl taurides having from 10 to 18 carbon atoms in the acyl group,
- acyl isothionates having from 10 to 18 carbon atoms in the acyl group,
- sulfosuccinic mono- and di-alkyl esters having from 8 to 18 carbon atoms in the alkyl group and sulfosuccinic monoalkylpolyoxyethyl esters having from 8 to 18 carbon atoms in the alkyl group and from 1 to 6 oxyethyl groups,
- linear alkane sulfonates having from 12 to 18 carbon atoms,
- linear α-olefin sulfonates having from 12 to 18 carbon atoms,
- α-sulfo fatty acid methyl esters of fatty acids having from 12 to 18 carbon atoms,
- alkyl sulfates and alkyl polyglycol ether sulfates of formula R'-O(CH2-CH2-O)x'-SO3H, in which R' is a preferably linear alkyl group having from 10 to 18 carbon atoms and x' = 0 or from 1 to 12,
- mixtures of surface-active hydroxysulfonates according to DE-A-3 725 030, especially page 3, lines 40 to 55,
- sulfated hydroxyalkylpolyethylene and/or hydroxyalkylenepropylene glycol ethers according to DE-A-3 723 354, especially page 4, lines 42 to 62,
- sulfonates of unsaturated fatty acids having from 12 to 24 carbon atoms and from 1 to 6 double bonds according to DE-A-3 926 344, especially page 2, lines 36 to 54,
- esters of tartaric acid and citric acid with alcohols which are addition products of approximately from 2 to 15 molecules of ethylene oxide and/or propylene oxide with fatty alcohols having from 8 to 22 carbon atoms, or
- anionic surfactants, as described in WO 00/10518, especially page 45, line 11 to page 48, line 3.

Preferred anionic surfactants are alkyl sulfates, alkyl polyglycol ether sulfates and ether carboxylic acids having from 10 to 18 carbon atoms in the alkyl group and up to 12 glycol ether groups in the molecule, and also especially salts of saturated and especially unsaturated C₈-C₂₂carboxylic acids, such as oleic acid, stearic acid, isostearic acid and palmitic acid.

Surface-active compounds that carry at least one quaternary ammonium group and at least one -COO⁽⁻⁾ or -SO₃⁽⁻⁾ group in the molecule are termed zwitterionic surfactants. Zwitterionic surfactants that are especially suitable are the so-called betaines, such as the N-alkyl-N,N-dimethylammonium glycinates, for example cocoalkyldimethylammonium glycinate,
N-acylaminopropyl-N,N-dimethylammonium glycinates, for example cocoacylaminopropyl-dimethylammonium glycinate, and 2-alkyl-3-carboxymethyl-3-hydroxyethylimidazolines having from 8 to 18 carbon atoms in the alkyl or acyl group and also cocoacylaminoethylhydroxyethylcarboxymethyl glycinate. A preferred zwitterionic surfactant is the fatty acid amide derivative known by the CTFA name cocoamidopropyl betaine. Ampholytic surfactants are to be understood as meaning surface-active compounds that, in addition to a C₈-C₁₈-alkyl or -acyl group, contain at least one free amino group and at least one -COOH or -SO₃H group in the molecule and are capable of forming internal salts. Examples of suitable ampholytic surfactants include N-alkylglycines, N-alkylpropionic acids, N-alkylaminobutyric acids, N-alkyliminodipropionic acids, N-hydroxyethyl-N-alkylamidopropyl-glycines, N-alkyltaurines, N-alkylsarcosines, 2-alkylaminopropionic acids and alkylaminoacetic acids, each having approximately from 8 to 18 carbon atoms in the alkyl group. Ampholytic surfactants to which special preference is given are N-cocoalkyl-aminopropionate, cocoacylaminoethylaminopropionate and C₁₂-C₁₈acylsarcosine.

Non-ionic surfactants are described in WO 00/10519, especially page 45, line 11 to page 50, line 12.

Non-ionic surfactants contain as the hydrophilic group, for example, a polyol group, a polyalkylene glycol ether group or a combination of polyol and polyglycol ether groups.

Such compounds are, for example:
- addition products of from 2 to 30 mol of ethylene oxide and/or from 0 to 5 mol of propylene oxide with linear fatty alcohols having from 8 to 22 carbon atoms, with fatty acids having from 12 to 22 carbon atoms and with alkylphenols having from 8 to 15 carbon atoms in the alkyl group,
- C₁₂-C₂₂ fatty acid mono- and di-esters of addition products of from 1 to 30 mol of ethylene oxide with glycerol,
- C₈-C₂₂alkyl-mono- and -oligo-glycosides and ethoxylated analogues thereof,
- addition products of from 5 to 60 mol of ethylene oxide with castor oil and hydrogenated castor oil,
- addition products of ethylene oxide with sorbitan fatty acid esters,
- addition products of ethylene oxide with fatty acid alkanolamides.

Examples of cationic surfactants that can be used in the preparations (compositions) according to the invention are especially quaternary ammonium compounds. Preference is given to ammonium halides, such as alkyltrimethylammonium chlorides, dialkyldimethylammonium chlorides and trialkylmethylammonium chlorides, for example cetyltrimethylammonium chloride, stearyltrimethylammonium chloride, distearyldimethy-lammonium chloride, lauryldimethylammonium chloride, lauryldimethylbenzylammonium chloride and tricetylmethylammonium chloride. Further cationic surfactants that can be used in accordance with the invention are quaternised protein hydrolysates.

Also suitable in accordance with the invention are cationic silicone oils, such as, for example, the commercially available products Q2-7224 (manufacturer: Dow Corning; a stabilised trimethylsilylamodimethicone), Dow Corning 929 emulsion (comprising a hydroxylamino-modified silicone, which is also referred to as amodimethicone), SM-2059 (manufacturer: General Electric), SLM-55067 (manufacturer: Wacker) and also Abil^{®}-Quat 3270 and 3272 (manufacturer: Th. Goldschmidt; diquaternary polydimethylsiloxanes, quaternium-80), or silicones, as described in WO 00/12057, especially page 45, line 9 to page 55, line 2. Alkylamidoamines, especially fatty acid amidoamines, such as the stearylamidopropyl-dimethylamine obtainable under the name Tego Amid^{®} 18, are distinguished not only by a good conditioning action but also especially by their good biodegradability.

Quaternary ester compounds, so-called "esterquats", such as the methyl hydroxyalkyl-dialkoyloxyalkylammonium methosulfates marketed under the trademark Stepantex^{®}, are also very readily biodegradable.

An example of a quaternary sugar derivative that can be used as cationic surfactant is the commercial product Glucquat^{®}100, according to CTFA nomenclature a "lauryl methyl gluceth-10 hydroxypropyl dimonium chloride".

The alkyl-group-containing compounds used as surfactants may be single substances, but the use of natural raw materials of vegetable or animal origin is generally preferred in the preparation of such substances, with the result that the substance mixtures obtained have different alkyl chain lengths according to the particular starting material used.

The surfactants that are addition products of ethylene and/or propylene oxide with fatty alcohols or derivatives of such addition products may either be products having a "normal" homologue distribution or products having a restricted homologue distribution. "Normal" homologue distribution is to be understood as meaning mixtures of homologues obtained in the reaction of fatty alcohol and alkylene oxide using alkali metals, alkali metal hydroxides or alkali metal alcoholates as catalysts. Restricted homologue distributions, on the other hand, are obtained when, for example, hydrotalcites, alkali metal salts of ether carboxylic acids, alkali metal oxides, hydroxides or alcoholates are used as catalysts. The use of products having restricted homologue distribution may be preferred.

Further preferred active ingredients of formulation according to the present invention, adjuvants and additives are as follows:
- non-ionic polymers, for example vinylpyrrolidone/vinyl acrylate copolymers, polyvinylpyrrolidone and vinylpyrrolidone/vinyl acetate copolymers and polysiloxanes,
- cationic polymers, such as quaternised cellulose ethers, polysiloxanes having quaternary groups, dimethyldiallylammonium chloride polymers, copolymers of dimethyldiallylammonium chloride and acrylic acid, as available commercially under the name Merquat^{®} 280 and the use of which in hair colouring is described, for example, in DE-A-4 421 031, especially page 2, lines 20 to 49, or EP-A-953 334, especially page 27, line 17 to page 30, line 11, acrylamide/dimethyldiallylammonium chloride copolymers, diethyl-sulfate-quaternised dimethylaminoethyl methacrylate/vinylpyrrolidone copolymers, vinylpyrrolidone/imidazolinium methochloride copolymers,
- quaternised polyvinyl alcohol,
- zwitterionic and amphoteric polymers, such as, for example, acrylamidopropyl-trimethylammonium chloride/acrylate copolymers and octylacrylamide/methyl methacrylate/tert-butylaminoethyl methacrylate/2-hydroxypropyl methacrylate copolymers,
- anionic polymers, such as, for example, polyacrylic acids, crosslinked polyacrylic acids, vinyl acetate/crotonic acid copolymers, vinylpyrrolidone/vinyl acrylate copolymers, vinyl acetate/butyl maleate/isobornyl acrylate copolymers, methyl vinyl ether/maleic anhydride copolymers and acrylic acid/ethyl acrylate/N-tert-butyl acrylamide terpolymers,
- thickeners, such as agar, guar gum, alginates, xanthan gum, gum arabic, karaya gum, locust bean flour, linseed gums, dextrans, cellulose derivatives, e.g. methyl cellulose, hydroxyalkyl cellulose and carboxymethyl cellulose, starch fractions and derivatives, such amylose, amylopectin and dextrins, clays, e.g. bentonite or fully synthetic hydrocolloids such as, for example, polyvinyl alcohol, or Salcare range such as Salcare SC80(steareth-10 allyl ether/acrylates copolymer), Salcare SC81 (acrylates copolymer), Salcare SC91 and Salcare AST(sodium acrylates copolymer/PPG-1 trideceth-6),
- structuring agents, such as glucose and maleic acid,
- hair-conditioning compounds, such as phospholipids, for example soya lecithin, egg lecithin, and cephalins, silicone oils, and also conditioning compounds, for example such as those described in DE-A-19 729 080, especially page 2, lines 20 to 49, EP-A-834 303, especially page 2, line 18 to page 3, line 2, or EP-A-312 343, especially page 2, line 59 to page 3, line 11,
- protein hydrolysates, especially elastin, collagen, keratin, milk protein, soya protein and wheat protein hydrolysates, condensation products thereof with fatty acids and also quaternised protein hydrolysates,
- perfume oils, dimethyl isosorbitol and cyclodextrins,
- solubilisers, such as ethanol, isopropanol, ethylene glycol, propylene glycol, glycerol and diethylene glycol,
- anti-dandruff active ingredients, such as piroctones, olamines and zinc Omadine,
- further substances for adjusting the pH value,
- active ingredients such as panthenol, pantothenic acid, allantoin, pyrrolidonecarboxylic acids and salts thereof, plant extracts and vitamins,
- cholesterol,
- light stabilisers and UV absorbers, as described, for example, in EP-A-819 422, especially page 4, lines 34 to 37,
- consistency regulators, such as sugar esters, polyol esters or polyol alkyl ethers,
- fats and waxes, such as spermaceti, beeswax, montan wax, paraffins, fatty alcohols and fatty acid esters,
- fatty alkanolamides,
- polyethylene glycols and polypropylene glycols having a molecular weight of from 150 to 50 000, for example such as those described in EP-A-801 942, especially page 3, lines 44 to 55,
- complexing agents, such as EDTA, NTA and phosphonic acids,
- swelling and penetration substances, such as polyols and polyol ethers, as listed extensively, for example, in EP-A-962 219, especially page 27, lines 18 to 38, for example glycerol, propylene glycol, propylene glycol monoethyl ether, butyl glycol, benzyl alcohol, carbonates, hydrogen carbonates, guanidines, ureas and also primary, secondary and tertiary phosphates, imidazoles, tannins, pyrrole,
- opacifiers, such as latex,
- pearlising agents, such as ethylene glycol mono- and di-stearate,
- propellants, such as propane-butane mixtures, N₂O, dimethyl ether, CO₂ and air, and also
- antioxidants,
- polyols or polyethers, as described in EP-A-962 219, especially page 27, lines 14 to 38,
- thickening polymers, as described in EP-A-970 684, especially page 48, line 16 to page 51, line 4,
- sugar-containing polymers, as described in EP-A-970 687, especially page 28, line 17 to page 29, line 23,
- quaternary ammonium salts, as described in WO 00/10517, especially page 44, line 16 to page 46, line 23.

The use of UV absorbers can effectively protect natural and dyed hair from the damaging rays of the sun and increase the wash fastness of dyed hair.

Preferred UV absorbers in the compositions for colouring the hair are:
- cationic benzotriazole UV absorbers as for example described in WO 01/36396 especially on page 1, line 20 to page 2, line 24, and preferred on page 3 to 5, and on pages 26 to 37, or
- cationic benzotriazole UV in combination with antioxidants as described in WO 01/36396, especially on page 11, line 14 to page 18, or
- UV absorbers in combination with antioxidants as described in US Patent 5 922 310, especially in column 2, lines 1 to 3,
- UV absorbers in combination with antioxidants as described in US Patent 4 786 493, especially in column 1, 42 to column 2, line 7, and preferred in column 3, 43 to column 5, line 20, or
- combination of UV absorbers as described in US Patent 5 830 441, especially in column 4, lines 53 to 56, or
- combination of UV absorbers as described in WO 01 /36396, especially on page 11, lines 9 to 13, or
- triazine derivatives provide effective UV protection as described in WO 98/22447, especially on page 1, line 23 to page 2, line 4, and preferred on page 2, line 11 to page 3, line 15 and most preferred on pages 6 to 7, and 12 to 16, or
- combination of the cosmetic formulations as described in WO 98/22447 with one or more than one further UV filter as described in the following patents:
   (Abbreviations T: table, R: row, Comp: compound, Ex: compound(s) of patent example, p = page; pp = pages)

| | |
|---|---|
| EP 895776 | Comp. in Rows 48-58, p 3; R 25+33, p 5 |
| WO 9220690 | Polymeric comp in Examples 3-6 |
| EP 1000950 | Comp. in Table 1, pp 18-21 |
| EP 1060734 | T 1-3, pp 11-14 |
| EP 1059082 | Ex 1; T 1, pp 9-11 |
| EP 1008586 | Ex 1-3, pp 13-15 |
| EP 1005855 | T3, p 13 |
| EP 1129695 | Ex 1-7, pp 13-14 |
| EP 967200 | Ex 2; T 3-5, pp 17-20 |
| EP 945125 | T 3 a+b, pp 14-15 |
| EP 924246 | T2,p9 |
| EP 911020 | T2,p11-12 |
| EP 916335 | T 2-4, pp 19-41 |
| EP 852137 | T 2, pp 41-46 |
| EP 858318 | T 1, p 6 |
| EP 826361 | T 1, pp 5-6 |
| EP 503338 | T 1, pp 9-10 |
| WO 9301164 | T 1+2, pp 13-22 |
| EP 823418 | Ex 1-4, pp 7-8 |
| WO 9714680 | Ex 1-3, p 10 |
| EP 1027883 | Compound VII, p 3 |
| EP 832641 | Ex 5+6 p 7; t 2, p 8 |
| US 5338539 | Ex 1-9, pp 3+4 |
| EP 517103 | Ex 3,4,9,10 pp 6-7 |
| EP 1123934 | T 3, p 10 |
| EP 1027883 | Comp I-VI, p 3 |
| EP 969004 | Ex 5, T 1, pp 6-8 |
| US 5801244 | Ex 1-5, pp 6-7 |
| EP 832642 | Ex 22, T 3 pp, 10-15; T 4, p 16 |
| US 5346691 (EP 570838) | Ex 40, p 7; T 5, p 8 |
| EP 517104 | Ex 1, T 1, pp 4-5; Ex 8, T 2, pp 6-8 |
| WO 200149686 | Ex 1-5, pp 16-21 |
| EP 944624 | Ex 1+2, pp13-15 |
| EP 933376 | Ex 1-15, pp 10-21 |
| EP 863145 | Ex 1-11, pp 12-18 |
| EP 780382 | Ex 1-11, pp 5-7 |
| EP 626950 | All examples |
| EP 1081140 | Ex 1-9, pp 11-16 |
| WO 9217461 | Ex 1-22, pp 10-20 |
| WO 0168047 | Tables on pp 85-96 |
| EP 613893 | Ex 1-5 + 15, T 1, pp 6-8 |
| EP 1064922 | Compounds 1-34, pp 6-14 |
| EP 1028120 | Ex 1-5, pp 5-13 |
| EP 1008593 | Ex 1-8, pp 4-5 |
| EP 669323 | Ex 1-3, p 5 |
| EP 1108712 | 4,5-Dimorpholino-3-hydroxypyridazine |
| JP 2000319629 | CAS Regno. 80142-49-0, 137215-83-9, 307947-82-6 |
| EP 420707 B1 | Ex 3, p 13 (80142-49-0) |
| US 5635343 | All examples |
| EP 1167358 | All examples |

Synergistic effects can be observed when UV absorbers are used in combination with antioxidants. Examples of antioxidants that can be used are listed in WO 01/36396 (pages 11-18), US Patent 5 922 310 and US Patent 4 786 493.

Suitable cosmetic preparations may contain usually from 0.05 to 40 % by weight, preferably from 0.1 to 20 % by weight, based on the total weight of the composition, of one or more UV absorbers.

In a further embodiment of the present invention the UV absorbers are micronised, for example, by:
- wet-grinding with a hard grinding medium, for example zirconium silicate and a protective surfactant or a protective polymer in water or in a suitable organic solvent;
- spray-drying from a suitable solvent, for example aqueous suspensions or suspensions containing organic solvents, or true solutions in water, ethanol, dichloroethane, toluene or N-methylpyrrolidone etc.;
- by the expansion according to the RESS process (Rapid Expansion of Supercritical Solutions) of supercritical fluids (e.g. CO₂) in which the UV filter or filters is/are dissolved, or the expansion of fluid carbon dioxide together with a solution of one or more UV filters in a suitable organic solvent;
- by reprecipitation from suitable solvents, including supercritical fluids (GASR process = Gas Anti-Solvent Recrystallisation / PCA process = Precipitation with Compressed Anti-solvents).

As grinding apparatus for the preparation of the micronised organic UV absorbers there may be used, for example, a jet mill, ball mill, vibratory mill or hammer mill, preferably a highspeed mixing mill. The grinding is preferably carried out with a grinding aid, for example an alkylated vinylpyrrolidone polymer, a vinylpyrrolidone/vinyl acetate copolymer, an acyl glutamate, an alkyl polyglucoside, ceteareth-25 or a phospholipid.

The micronised UV absorbers so obtained usually have an average particle size that is from 0.02 to 2 µm, preferably from 0.05 to 1.5 µm, and more especially from 0.1 to 1.0 µm.

The UV absorbers can also be used dry in powder form. For that purpose the UV absorbers are subjected to known grinding methods, such as vacuum atomization, countercurrent spray-drying etc. Such powders have a particle size of from 0.1 µm to 2 µm. To avoid the occurrence of agglomeration, the UV absorbers can be coated with a surface-active compound prior to the pulverisation process, for example with an anionic, non-ionic or amphoteric surfactant, e.g. a phospholipid or a known polymer, such as PVP, or an acrylate. The preparations according to the invention may further comprise antimicrobial agents. Preferred antimicrobial preservatives and antimicrobial actives used in formulations (in most cases the INCI name of the antimicrobial substances is mentioned):
formaldehyde and paraformaldehyde, hydroxy biphenyls and its salts such as ortho-phenylphenol, zinc pyrithion, chlorobutanol, hydroxy benzoic acids and their salts and esters such as methyl paraben, ethyl paraben, propyl paraben, butyl paraben, dibromo hexamidine and its salts including isothionate (4,4'-hexamethylenedioxy-bis(3-bromo-benzamidine) and 4,4'-hexamethylenedioxy-bis(3-bromo-benzamidinium 2-hydroxyethanesulfonate), mercury, (aceto-O)phenyl (especially phenyl mercuric acetate) and Mercurate(2-),(orthoborate(3-)-O)phenyl, dihydrogene (especially phenyl mercuric borate), 1,3-bis(2-ethylhexyl)-hexahydro-5-methyl-5-pyrimidine (Hexetidin), 5-bromo-5-nitro-1,3-dioxan, 2-bromo-2-nitro-1,3-propandiol, 2,4-dichlorobenzyl alcohol, 3,4,4' trichlorocarbanilide (Trichlorcarban), p-chloro-m-cresol, 2,4,4'-trichloro 2-hydroxy diphenylether (triclosan), 4,4'-dichloro 2-hydroxy diphenylether, 4-chloro-3,5-dimethylphenol (Chloroxylenol), imidazolidinyl urea, poly-(hexamethylene biguanide) hydrochloride, 2-phenoxy ethanol (phenoxyethanol), hexamethylene tetramine (Methenamine), 1-(3-chloroallyl)-3,5,7-triaza-1-azonia-adamantanchloride (Quaternium 15), 1-(4-chlorophenyoxy)-1-(1-imidazolyl)3,3-dimethyl-2-butanone (Climbazole), 1,3-bis(hydroxymethyl)-5,5-dimethyl-2,4-imidazolidinedione (DMDM hydantoin), benzyl alcohol, 1,2-dibromo-2,4-dicyano butane , 2,2' methylene-bis(6-bromo-4-chloro phenol) (bromochlorophene), methylchloroisothiazolone, methylisothiazolone, octylisothiazolone, benzylisothiazolone, 2-benzyl-4-chlorophenol (Chlorophenone), chloracetamide, chlorhexidine, chlorhexidine acetate, chlorhexidine gluconate, chlorhexidine hydrochloride, 1-phenoxy-propane-2-ol (phenoxyisopropanol), 4,4-dimethyl-1,3-oxazolidine (dimethyl oxazolidine), diazolidinyl urea, 4,4'-hexamethylenedioxybisbenzamidine and 4,4'-hexamethylenedioxybis(benzamidinium-2-hydroxyethanesulfonate), glutaraldehyde (1,5-pentanedial), 7-ethylbicyclooxazolidine, 3-(4-chlorophenoxy)-1,2-propandiol (chlorophenesin), phenylmethoxymethanol and ((phenylmethoxy)methoxy)-methanol (benzylhemiformal), N-alkyl(C12-C22)trimethyl ammoniumbromide and -chloride (cetrimonium bromide, cetrimonium chloride), benzyl-dimethyl-(4-(2-(4-(1,1,3,3-tetramethylbutyl)-phenoxy)-ethoxy)-ethyl)-ammoniumchloride (benzethonium chloride), Alkyl-(C8-C18)-dimethyl-benzylammonium chloride, - bromide and saccharinate (benzalkonium chloride, benzalkonium bromide, benzalkonium saccharinate), benzoic acid and its salts and esters, propionic acid and its salts, salicylic acid and its salt, sorbic acid and its salts, sodium iodiate, inorganic sulfites and bisulfites such as sodium sulfite, dehydroacetic acid , formic acid, mercurate(1-ethyl)2-mercaptobenzoate(2-)-O,S-,hydrogene (Thiomersal or Thiomerosal), 10-undecylenic acid and its salts, octopirox (piroctone olamine), sodium hydroxy methyl-aminoacetate (sodium hydroxymethylglycinate), 3-iodo-2-propynyl butylcarbamate, 10-undecylenic acid, and sulfur.

Combinations with natural antimicrobials or chemically modified natural substances with antimicrobial activities such as chitosans and chitosan derivatives, farnesol, plant extracts such as clove oil, blue cypres oil etc. can be also used.

Regarding end-product formulations, the skin care composition may be formulated as a wide variety of cosmetic or pharmaceutical preparations, for example: creams, gels, lotions, alcoholic and aqueous/alcoholic solutions, emulsions, wax/fat compositions, stick preparations such as lipsticks or deodorants, powders or ointments.
- in the form of liquid preparations as a W/O, O/W, O/W/O, W/O/W or PIT emulsion and all kinds of microemulsions,
- in the form of liquid crystalline structures represented either by hexagonal phase, by micellar cubic phase or by lamellar phase; among lamellar liquid crystals, there are oleosomes, hydrosomes and phosphosomes(structure built by the combination of surfactants and biomimetic phospholipids),
- in the form of a gel,
- in the form of an oil, a cream, milk or lotion,
- in the form of a powder, a lacquer, a tablet or make-up,
- in the form of a stick,
- in the form of a spray (spray with propellent gas or pump-action spray) or an aerosol,
- in the form of a foam, or
- in the form of a paste.

Typical formulation examples of shampoo/body wash formulations, which will provide hair and/or body cleansing products along with a glitter effect and a color flop from light to dark/dark to light or from color to color, when viewed from different angles in package and on skin and hair, are given below:

| | Typical Range Based on Activity | 1A | 2A | 3A | 4A |
|---|---|---|---|---|---|
| Water | qs to 100% | ¹⁾⁾ | ¹⁾ | ¹⁾ | ¹⁾ |
| Conditioning Agent/Cationic | 0-2% | | | | |
| Polyquaterium -7 | | --- | 0.3 | 1.0 | 0.5 |
| Cationic Guar | | --- | --- | 0.5 | --- |
| Cetrimonium Chloride | | 1.0 | --- | --- | --- |
| Dimethicone Copolyol | | 1.0 | --- | 2.0 | --- |
| Primary/Co Surfactant | 8-20% | | | | |
| Disodium Monolaurethsulfosuccinate | | --- | 10.0 | --- | --- |
| Sodium Cocoyl Sarcosinate | | --- | --- | --- | 10.0 |
| Sodium Laureth Sulfate | | 25.0 | --- | 30.0 | 20.0 |
| Ammonium Laureth Sulfate | | --- | 10.0 | --- | --- |
| Secondary Surfactant | 0-15% | | | | |
| Sodium Methyl Cocoyl Taurate | | 3.0 | --- | --- | --- |
| Cocamidopropyl Betaine | | --- | --- | 10.0 | --- |
| PEG 20 Sorbitan Laurate | | --- | 4.0 | --- | --- |
| Cocamide MEA | | 3.0 | --- | 5.0 | --- |
| Decyl Glucoside | | 11.0 | --- | --- | --- |
| Disodium Cocoamphodiacetate | | --- | 8.0 | --- | 5.0 |
| Thickeners | | | | | |
| Hydroxyethylcellulose | 0-5% | 1.5 | 2.0 | --- | 2.5 |
| Magnesium Aluminum Silicate | 0-5% | --- | --- | 1.0 | --- |
| Pearlizing / Opacifying Agent | 0-10% | | | | |
| Glycol Stearate | | 2.0 | 1.0 | --- | 2.0 |
| Ethylene Glycol Distearate | | --- | 2.0 | --- | --- |
| Active Ingredient | 0-1% | | | | |
| Triclosan | | --- | 0.1 | --- | 0.1 |
| Viscosity Adjuster | 0-2% | | | | |
| Sodium Chloride | | ²⁾ | ²⁾ | ²⁾ | ²⁾ |
| Vtamins/Proteins | 0-2% | | | | |
| Hydrolyzed Soy Protein | | 0.8 | --- | 1.0 | --- |
| Tocopherol | | --- | 0.1 | --- | --- |
| Panthenol | | --- | 0.1 | 0.1 | 0.1 |
| Fragrance | 0-2% | 0.5 | 0.5 | 0.5 | 0.5 |
| Chelating Agent | <0.10% | | | | |
| Disodium EDTA | | 0.1 | 0.1 | --- | --- |
| Tetrasodium EDTA | | --- | --- | 0.1 | 0.1 |
| pH Adjuster | <0.50% | | | | |
| TEA | | qs to 6.0-7.0 | qs to 6.0-7.0 | qs to 6.0-7.0 | qs to 6.0-7.0 |
| Preservative | 0-1% | | | | |
| DMDM Hydantoin | | 1.0 | 1.0 | --- | --- |
| Phenoxyethanol and Methylparaben and Propylparaben and Butylparaben and Isobutylparaben | | --- | --- | 1.0 | 1.0 |
| Color | 0-20% | | | | |
| Gloss Pigments | | 3.0 | 2.0 | 2.0 | 2.5 |

| | | | | | |
|---|---|---|---|---|---|
| ¹⁾ qs to 100%; ²⁾ as needed | | | | | |

Typical formulation examples of hair gel formulations, which will provide hair styling/fixative products along with a glitter effect and a color flop from light to dark/dark to light or from color to color when viewed from different angles on hair and in package, are given below:

| Ingredient | Typical Range Based on Activity | 1A | 2A | 3A | 4A |
|---|---|---|---|---|---|
| Water | qs to 100% | ¹⁾⁾ | ¹⁾ | ¹⁾ | ¹⁾ |
| SD Alcohol 200 Proof | 0-6% | 0 | 0 | 6 | 0 |
| Hair Holding Conditioning Polymer | | | | | |
| PVP | 1-5% | 5.0 | 3.0 | 4.0 | --- |
| PVPNA Copolymer | 1-5% | --- | 2.0 | --- | 5.0 |
| Polyquaterium-11 | 1-5% | --- | --- | 1.0 | --- |
| Gelling Agent /Thickener | | | | | |
| Carbomer | 0.25-1% | 0.5 | 0.7 | 0.8 | --- |
| Steareth-10 Allyl Ether/Acrylates Copolymer | 0.25-1% | 1.0 | --- | --- | 1.0 |
| Neutralizer | | | | | |
| TEA, 99% | 0.5-1.5% | --- | qs to 7.5 | --- | qs to 7.5 |
| NaOH, 50% | 0.5-1.5% | qs to 7.5 | --- | qs to 7.5 | --- |
| Nonionic Surfactant | | | | | |
| Oleth-20 | 0.5-3% | 2.5 | 1.0 | 2.0 | --- |
| Laureth-23 | 0.5-3% | --- | 1.0 | --- | 1.5 |
| Active Ingredient | | | | | |
| Triclosan | 0-1% | --- | 0.1 | --- | 0.1 |
| Viscosity Adjuster | | | | | |
| Sodium Chloride | 0-2% | ²⁾ | ²⁾ | ²⁾ | ²⁾ |
| Vitamins | | | | | |
| Tocopherol | 0-1% | 0.1 | 0.1 | --- | --- |
| Panthenol | 0-1% | --- | 0.1 | 0.1 | 0.1 |
| Fragrance | 0-2% | 0.5 | 0.5 | 0.5 | 0.5 |
| Chelating Agent | | | | | |
| Disodium EDTA | < 0.10% | 0.1 | 0.1 | --- | --- |
| Tetrasodium EDTA | < 0.10% | --- | --- | 0.1 | 0.1 |
| pH Adjuster | | | | | |
| TEA | <0.50% | qs to 6.0-7.0 | qs to 6.0-7.0 | qs to 6.0-7.0 | qs to 6.0-7.0 |
| Preservative DMDM Hydantoin | 0-1% | 1.0 | 1.0 | --- | --- |
| Phenoxyethanol and Methylparaben and Propylparaben and Butylparaben and Isobutylparaben | 0-1% | --- | --- | 1.0 | 1.0 |
| Color | | | | | |
| Gloss Pigments | 0-20% | 5.0 | 7.0 | 2.0 | 2.5 |

| | | | | | |
|---|---|---|---|---|---|
| ¹⁾ qs to 100%; ²⁾ as needed | | | | | |

The cosmetic and personal care preparations and formulations according to the invention may also be used in the form of lotions, creams, candles or soaps that are composed of the base substances conventionally employed in the cosmetics industry and a pigment according to the invention.

Typical formulation examples of lotions/creams, which will provide skin moisturizing, conditioning, soothing benefits along with a glitter effect and color flop from light to dark/dark to light or from color to color, in package and on skin, are given below:

| Ingredient | Typical Range Based on Activity | 1A | 2A | 3A | 4A | 5A |
|---|---|---|---|---|---|---|
| Water | qs to 100% | ¹⁾⁾ | ¹⁾ | ¹⁾ | ¹⁾ | ¹⁾ |
| Humectant | 0-10% | | | | | |
| Glycerin | | 1.0 | 5.0 | 2.5 | --- | 4.0 |
| Scleroglucan | | 2.5 | --- | --- | --- | --- |
| Sorbitol | | --- | 1.0 | --- | --- | --- |
| PEG 400 | | --- | --- | 1.0 | 1.5 | 2.0 |
| Thickening agent | 0-3% | | | | | |
| Carbomer | | --- | --- | --- | --- | 0.8 |
| Polyacrylamide and C₁₃₋₁₄₁ Isoparaffin and Laureth-7 | | --- | --- | --- | 0.8 | --- |
| Steareth-10 Allyl Ether/Acrylates Copolymer | | 1.0 | --- | --- | --- | --- |
| Polyquaterium-37 and Propylene Glycol Dicaprylate Dicaprate and PPG-1 Trideceth-6 | | --- | --- | 1.5 | --- | --- |
| Sodium acrylates copolymer and mineral oil and PPG-1 Trideceth-6 | | --- | 1.0 | --- | --- | --- |
| Surfactant/Emulsifiers/Solubilizers | 0-10% | | | | | |
| Glyceryl Stearate | | 4.0 | 3.0 | 1.0 | 1.0 | 1.5 |
| Steareth-2 | | --- | --- | --- | 0.7 | --- |
| PEG-100 Stearate | | 1.3 | 2.0 | --- | 0.5 | |
| Sorbitan Sequioleate | | 1.0 | | | | |
| Cetyl Alcohol | | 1.2 | 2.0 | 1.0 | --- | 1.0 |
| Cetearyl Alcohol | | 1.3 | --- | --- | --- | 1.5 |
| Stearyl Alcohol | | --- | --- | --- | 1.0 | --- |
| Stearic Acid | | --- | --- | 2.5 | --- | 3.0 |
| Behenic Acid | | --- | --- | --- | 1.0 | --- |
| Oils/Esters | 0-10% | | | | | |
| Caprylic/Capric Triglyceride | | --- | 2.0 | 1.5 | --- | 2.0 |
| Squalane | | --- | 1.0 | --- | --- | 1.0 |
| Diethylhexyl Maleate | | 3.5 | --- | --- | --- | --- |
| Mineral Oil | | --- | --- | --- | 2.0 | --- |
| Isocetyl Stearate | | 1.5 | --- | --- | --- | --- |
| Polysorbate 60 | | 1.0 | --- | --- | --- | --- |
| Decyl Oleate | | --- | --- | 0.5 | 0.8 | 1.5 |
| Cetyl Palmitate | | --- | 1.0 | 0.5 | --- | 1.0 |
| Silicone | 0-5% | | | | | |
| Cyclopentasiloxane | | 0.5 | 1.0 | 1.0 | 4.0 | 2.0 |
| Dimethiconol | | 0.3 | --- | --- | --- | --- |
| Dimethicone | | --- | --- | --- | --- | 0.8 |
| Vitamins | 0-1% | | | | | |
| Tocopherol | | --- | 0.1 | --- | 0.1 | 0.1 |
| Panthenol | | 0.2 | --- | 0.1 | --- | 0.1 |
| Fragrance | 0-2% | 0.5 | 0.5 | 0.5 | 0.5 | 0.5 |
| Chelating Agent | | | | | | |
| Disodium EDTA | < 0.10% | 0.1 | 0.1 | --- | 0.1 | --- |
| Tetrasodium EDTA | < 0.10% | --- | --- | 0.1 | --- | 0.1 |
| pH Adjuster | | | | | | |
| NaOH | <0.50% | qs 6.0 to 6.5 | --- | qs 6.0 to 6.5 | qs6.0 to 6.5 | --- |
| TEA | <0.50% | --- | qs 6.0 to 6.5 | --- | --- | qs 6.0 to 6.5 |
| Preservative | | | | | | |
| DMDM Hydantoin | 0-1% | --- | --- | --- | 1.0 | --- |
| Phenoxyethanol and Methylparaben and Propylparaben and Butylparaben and Isobutylparaben | 0-1% | 1.0 | 1.0 | 1.0 | --- | 1.0 |
| Color | | | | | | |
| Gloss Pigment | 0-20% | 3.5 | 2.0 | 4.0 | 3.5 | 5.0 |

| | | | | | | |
|---|---|---|---|---|---|---|
| ¹⁾ qs to 100% | | | | | | |

Typical formulation examples of candles, which will provide a glitter effect as well as a color flop from light to dark/dark to light or from color to color when viewed from various angles, lit or unlit, are given below:

| Ingredient | Typical Range Based on Activity | 1A | 2A | 3A | 4A |
|---|---|---|---|---|---|
| Proprietary Candle Wax Base (Alene Candle) | qs to 100% | ¹⁾⁾ | ¹⁾ | ¹⁾ | ¹⁾ |
| Solubilizer | 0-10% | | | | |
| Polysorbate-20 | | 1.0 | --- | 7.0 | 8.0 |
| Polysorbate-80 | | --- | 4.0 | --- | --- |
| Fragrance | 0-8% | 2.0 | 4.0 | 6.0 | 8.0 |
| Color | 0-40% | | | | |
| Gloss Pigments | | 10.0 | 20.0 | 30.0 | 40.0 |

| | | | | | |
|---|---|---|---|---|---|
| ¹⁾ qs to 100% | | | | | |

Typical formulation examples of soaps, which will provide cleansing along with a glitter effect and color flop from light to dark/dark to light or from color to color when viewed from various angles, on soap bars, on the hands, face and body and in the package, are given below:

| Ingredient | Typical Range Based on Activity | 1A | 2A | 3A | 4A |
|---|---|---|---|---|---|
| Proprietary Soap Base (Bradford Soap Company) | qs to 100% | ¹⁾⁾ | ¹⁾ | ¹⁾ | ¹⁾ |
| Fragrance | 0-3% | 0.5 | 1.0 | 2.0 | 3.0 |
| Color | 0-40% | | | | |
| Gloss Pigments | | 10.0 | 20.0 | 30.0 | 40.0 |

| | | | | | |
|---|---|---|---|---|---|
| ¹⁾ qs to 100% | | | | | |

Further materials useful in the present cosmetic pigment compositions are as defined in US2008/226574, especially interference pigments and particles (sections 0117 - 0141), further pigments (e.g. as of sections 0142 - 0151), aqueous or fatty phases (sections 0155-0163), film formers (especially polymers, see sections 0164 - 0179), further colorants (sections 0180 - 0198), fillers (0199 - 0202), active ingredients (0203 - 0213); US2008/241086, especially oils (0488 - 0520), waxes (0521 - 0529);
the respective passages thereof are hereby incorporated by reference.

The cosmetic and personal care preparations and formulations according to the invention are prepared in conventional manner, for example by mixing or stirring the components together, optionally with heating so that the mixtures melt.

In cosmetic compositions of the invention, the ZOD pigments employed are preferably of zinc sulfide (ZnS), zirconium oxide (ZrO₂), titanium dioxide (TiO₂), tantalum pentoxide (Ta₂O₅), chromium oxide (Cr₂O₃), hafnium oxide (HfO₂), tungsten trioxide (WO₃) or combinations thereof. Especially preferred are TiO₂, ZrO₂, ZnS, Al₂O₃, or a mixture thereof.

### Inks

Furthermore, the inventive pigment compositions are suitable as colorants in inkjet inks on an aqueous and nonaqueous basis and also in those inks which operate in accordance with the hot-melt process.

Such printing inks are, for example, a liquid or paste-form dispersion that comprises pigments, binders and also optionally solvents and/or optionally water and additives. In a liquid printing ink, the binder and, if applicable, the additives are generally dissolved in a solvent. Customary viscosities in the Brookfield viscometer are, for example, from 20 to 5000 mPa·s, for example from 20 to 1000 mPa·s, for liquid printing inks. For paste-form printing inks, the values range, for example, from 1 to 100 Pa·s, preferably from 5 to 50 Pa·s. The person skilled in the art will be familiar with the ingredients and compositions of printing inks.

Suitable pigments, like the printing ink formulations customary in the art, are generally known and widely described.

Printing inks comprise pigments advantageously in a concentration of, for example, from 0.01 to 40 % by weight, preferably from 1 to 25 % by weight, especially from 5 to 10 % by weight, based on the total weight of the printing ink.

The printing inks can be used, for example, for intaglio printing, flexographic printing, screen printing, offset printing, lithography or continuous or dropwise ink-jet printing on material pretreated in accordance with the process of the invention using generally known formulations, for example in publishing, packaging or shipping, in logistics, in advertising, in security printing or in the field of office equipment.

Suitable printing inks are both solvent-based printing inks and water-based printing inks.

Of interest are, for example, printing inks based on aqueous acrylate. Such inks are to be understood as including polymers or copolymers that are obtained by polymerisation of at least one monomer containing a group 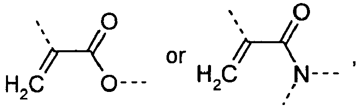 and that are dissolved in water or a water-containing organic solvent. Suitable organic solvents are water-miscible solvents customarily used by the person skilled in the art, for example alcohols, such as methanol, ethanol and isomers of propanol, butanol and pentanol, ethylene glycol and ethers thereof, such as ethylene glycol methyl ether and ethylene glycol ethyl ether, and ketones, such as acetone, ethyl methyl ketone or cyclo, for example isopropanol. Water and alcohols are preferred.

Suitable printing inks comprise, for example, as binder primarily an acrylate polymer or copolymer and the solvent is selected, for example, from the group consisting of water, C₁-C₅alcohols, ethylene glycol, 2-(C₁-C₅alkoxy)-ethanol, acetone, ethyl methyl ketone and any mixtures thereof.

In addition to the binder, the printing inks may also comprise customary additives known to the person skilled in the art in customary concentrations.

For intaglio or flexographic printing, a printing ink is usually prepared by dilution of a printing ink concentrate and can then be used in accordance with methods known *per se.*
The printing inks may, for example, also comprise alkyd systems that dry oxidatively.
The printing inks are dried in a known manner customary in the art, optionally with heating of the coating.

A suitable aqueous printing ink composition comprises, for example, a pigment or a combination of pigments, a dispersant and a binder.

Dispersants that come into consideration include, for example, customary dispersants, such as water-soluble dispersants based on one or more arylsulfonic acid/formaldehyde condensation products or on one or more water-soluble oxalkylated phenols, non-ionic dispersants or polymeric acids.

The arylsulfonic acid/formaldehyde condensation products are obtainable, for example, by sulfonation of aromatic compounds, such as naphthalene itself or naphthalene-containing mixtures, and subsequent condensation of the resulting arylsulfonic acids with formaldehyde. Such dispersants are known and are described, for example, in US-A-5,186,846 und DE-A-19727767. Suitable oxalkylated phenols are likewise known and are described, for example, in US-A-4,218,218 und DE-A-19727767. Suitable non-ionic dispersants are, for example, alkylene oxide adducts, polymerisation products of vinylpyrrolidone, vinyl acetate or vinyl alcohol and co- or ter-polymers of vinyl pyrrolidone with vinyl acetate and/or vinyl alcohol.

It is also possible, for example, to use polymeric acids which act both as dispersants and as binders.

Examples of suitable binder components that may be mentioned include acrylate-group-containing, vinyl-group-containing and/or epoxy-group-containing monomers, prepolymers and polymers and mixtures thereof. Further examples are melamine acrylates and silicone acrylates. The acrylate compounds may also be non-ionically modified (e.g. provided with amino groups) or ionically modified (e.g. provided with acid groups or ammonium groups) and used in the form of aqueous dispersions or emulsions (e.g. EP-A-704 469, EP-A-12 339). Furthermore, in order to obtain the desired viscosity the solventless acrylate polymers can be mixed with so-called reactive diluents, for example vinyl-group-containing monomers. Further suitable binder components are epoxy-group-containing compounds.

The printing ink compositions may also comprise as additional component, for example, an agent having a water-retaining action (humectant), e.g. polyhydric alcohols, polyalkylene glycols, which renders the compositions especially suitable for ink-jet printing.

It will be understood that the printing inks may comprise further auxiliaries, such as are customary especially for (aqueous) ink-jet inks and in the printing and coating industries, for example preservatives (such as glutardialdehyde and/or tetramethylolacetyleneurea, anti-oxidants, degassers/defoamers, viscosity regulators, flow improvers, anti-settling agents, gloss improvers, lubricants, adhesion promoters, anti-skin agents, matting agents, emulsifiers, stabilisers, hydrophobic agents, light stabilisers, handle improvers and anti-statics. When such agents are present in the compositions, their total amount is generally ≤ 1 % by weight, based on the weight of the preparation.

It is also possible for the printing inks to comprise buffer substances, for example borax, borate, phosphate, polyphosphate or citrate, in amounts of e.g. from 0.1 to 3 % by weight, in order to establish a pH value of e.g. from 4 to 9, especially from 5 to 8.5.

As further additives, such printing inks may comprise surfactants or humectants. Surfactants that come into consideration include commercially available anionic and non-ionic surfactants. Humectants that come into consideration include, for example, urea or a mixture of sodium lactate (advantageously in the form of a 50 to 60 % aqueous solution) and glycerol and/or propylene glycol in amounts of e.g. from 0.1 to 30 % by weight, especially from 2 to 30 % by weight, in the printing inks.

Furthermore, the printing inks may also comprise customary additives, for example foam-reducing agents or especially substances that inhibit the growth of fungi and/or bacteria. Such additives are usually used in amounts of from 0.01 to 1 % by weight, based on the total weight of the printing ink.

The printing inks may also be prepared in customary manner by mixing the individual components together, for example in the desired amount of water.

As already mentioned, depending upon the nature of the use, it may be necessary for e.g. the viscosity or other physical properties of the printing ink, especially those properties which influence the affinity of the printing ink for the substrate in question, to be adapted accordingly.

The printing inks are also suitable, for example, for use in recording systems of the kind in which a printing ink is expressed from a small opening in the form of droplets which are directed towards a substrate on which an image is formed. Suitable substrates are, for example, textile fibre materials, paper, plastics or aluminium foils pretreated by the process according to the invention. Suitable recording systems are e.g. commercially available ink-jet printers.

Preference is given to printing processes in which aqueous printing inks are used.

The inventive pigment compositions are also suitable as colorants for color filters, both for additive and for subtractive color generation.

The inventive pigment compositions are distinguished by outstanding coloristic and rheological properties, high color strength, ease of dispersibility, high thermostability, e.g. in plastic applications, and high transparency, e.g. in paint and ink applications.

To obtain different shades, it is also possible to add inorganic or polymeric fillers or other chromophoric components such as organic or inorganic pigments like white, colored, effect, fluorescent or phosphorescent pigments, in any amount, to the high molecular weight organic compounds, in addition to the pigment compositions of this invention.

Especially suitable classes of effect pigments which can be advantageously used in combination with the inventive pigment compositions are selected from the group of metallic pigments like aluminum, gold, brass or copper pigments, including metal oxide coated metal pigments such as iron oxide coated aluminum as described in published European Patent 33457, platelike graphite or molybdenum disulfide pigments such as those described in US patent Nos. 4,517,320; 5,034,430; large particle size organic pigments such as those described in US patent Nos. 5,084,573; 5,095,122; 5,298,076 and 5,347,014; the well known coated flaky mica, synthetic aluminum oxide or silicon dioxide pigments, wherein the coating can be single or multi layered and consists of colorless, chromatic or black microcrystalline compounds such as TiO₂, SnO₂, ZrO₂, FeOOH, Fe₂O₃, Cr₂O₃, CrPO₄, KFe[Fe₉CN)₆, TiO₂₋ₓ, Fe₃O₄, FeTiO₃ TiN and TiO, and the more recent classes of effect pigments, for example, the multilayer interference platelets disclosed in PCT International Applications WO 95-17,480 and WO 95-29,140, or the liquid crystal interference pigments described for example in German patent 4,418,075.

Such effect pigments can be incorporated in mixture with the inventive pigment composition when incorporated into a substrate or can be co-blended as powder before, during or after the preparation of the inventive pigment compositions.

For example, the inventive pigment composition can be combined with an effect pigment in an amount of from about 90 to 1 weight percent, preferably from about 50 to 5 weight percent and more preferably from about 30 to 20 weight percent of said effect pigment based on the total weight of the composition.

Although the new inventive pigment compositions show good light and heat stability, it can be advantageous to apply the present compositions in the presence of commonly known and commercially available antioxidants, UV absorbers, light stabilizers, processing agents and so forth.

For pigmenting coatings, varnishes and printing inks, the high molecular weight organic materials and the inventive pigmentary compositions, together with optional additives such as fillers, other pigments, siccatives, light- or UV- stabilizers, are finely dispersed in a common organic solvent or mixture of solvents including water. The procedure may be such that the individual components by themselves, or several jointly, are dispersed or dissolved in the solvent and subsequently all the components are mixed.

The ZOD pigment of the invention may be introduced in a pigment composition by admixing from 10 to 40 parts by weight (pbw) of the pigment with
from 150 to 400 parts by weight, especially from 150 to 350 pbw, preferably from 160 to 250 pbw, based on the amount of crude pigment, based on the amount of said pigment, of a resin composition comprising
■ from 5 to 100pbw, preferably from 10 to 100 pbw, of a phenol-modified rosin fraction of molecular weight from 5000 to 40 000 Da;
■ from 5 to 80 pbw, preferably from 10 to 80 pbw, of a hydrocarbon resin of softening point from 105 to 165°C, preferably from 110 to 160°C;
■ from 5 to 50 pbw, preferably from 10 to 50 pbw, of an esterified rosin;
■ from totally 5 pbw to a maximal total percentage comprising each below 5 pbw, preferably from totally 10 pbw to a maximal total percentage comprising each below 10 pbw, of two resins selected from the group consisting of said phenol-modified rosin fraction, said hydrocarbon resin and said esterified rosin; or
■ from totally 5 pbw to a maximal total percentage comprising each below 5 pbw, preferably from totally 10 pbw to a maximal total percentage comprising each below 10 pbw, of all three resins of the group consisting of said phenol-modified rosin fraction, said hydrocarbon resin and said esterified rosin;
each based on the weight of the resin composition.

This composition may further contain preferably from 1 to 10 pbw, based on the amount of crude pigment, of an antioxidant.

The instant composition, which may also comprise further components as disclosed above, is easily dispersed in liquid hydrocarbons or compositions comprising liquid hydrocarbons, such as varnishes for offset printing inks.

Hence, the invention also pertains to a process for preparing a pigment dispersion, comprising the step of adding to the instant composition from 80 to 700% by weight, preferably from 100 to 400% by weight, based on the amount of pigment in said composition, of a liquid hydrocarbon.

The hydrocarbon can be added neat or in combination with further components dissolved or dispersed therein, such as those usually comprised in ink varnishes. Such further components are well-known in the art and do not require to be enumerated in detail here. One may if desired consult a handbook, for example Ullmann's Encyclopedia of Industrial Chemistry, © 2000, Printing Inks - Offset Printing. Typical examples are alkyd resins, soya oil, higher (C₈-C₂₄, preferably C₁₂-C₁₈) alcohols, modified phenolic resins, waxes, extenders, hyperdispersants and other resins at the appropiate concentration for final ink formulation. Suitable hydrocarbons have at least 6, preferably at least 8 carbon atoms, most preferred at least 12 carbon atoms, and they can be linear, branched and/or cyclic, and fully saturated or partially insaturated with up to about 25% insaturated or aromatic bonds. Most preferably, the number of insaturated or aromatic bonds is from 0 to 5%. Hydrocarbons are preferably used as mixtures of isomers and/or homologues, in which case the above number of carbon atoms is applicable for the weight average of the mixture (determined for example by HPLC) and the above number of insaturated and / or aromatic bonds is applicable for the molar average in the mixture (determined for example by ¹³C-NMR spectroscopy, 25% multiple bonds corresponding to one of four carbon atoms at a multiple bond).

Examples are aliphatic hydrocarbons such as cyclohexane, methylcyclohexane, heptane, octane, decalin, dodecane and higher homologues commonly called boiling range petrol, petroleum ether, ligroin, mineral oil or also simply printing ink distillate. Such commercially available mixtures of technical grade usually comprise no or only minor amounts of insaturated and/or aromatic bonds as indicated above. Higher aromatic or insaturated hydrocarbons such as, for example, naphthalene, fluorene, terphenyl or β-carotene are less suitable.

The hydrocarbon has preferably a boiling point of from 100 to 350°C at 10⁵ Pa, more preferably a boiling point of from 150 to 350°C at 10⁵ Pa, most preferred a boiling point of from 200 to 300°C at 10⁵ Pa. The hydrocarbon is suitably liquid at the temperature of processing, preferably liquid at 20°C. However, it is also possible to use hydrocarbons with melting points for example from 20 to 70°C, if dispersion is intended at increased temperature or additional liquid solvents are added which inhibit crystallisation of the hydrocarbon.

The pigment is generally dispersed with low dispersion energy and advantageously retains its typical characteristics as obtained by dry-milling. For example, copper phthalocyanine remains a mixture of α and β crystal phases, typically with from 60 to 98% by weight, preferably from 60 to 90% by weight of the β crystal phase. Also the shape of the particles with damaged edges and corners is typical of dry-milling. Thus, differentiation from recrystallized pigments is normally easy though this depends highly on the pigment's chemical identity.

Preferably, satisfactory dispersion is surprisingly achieved with an energy input of from 0.05 to 5 kJ per gram of pigment, more preferably from 0.1 to 3 kJ per gram of pigment, especially from 0.15 to 2 kJ per gram of pigment, for example about 0.27 ± 0.1 kJ per gram of pigment in an extruder such as a Berstorff™ extruder or particularly preferably about 1.4 ± 0.4 kJ per gram of pigment [0.39 ± 0.14 kWh per kilogram of pigment] in a disperser such as a Dispermat™ disperser. This procedure ensures that there is no significant crystal growth or change during dispersion. Dispersion times of from 15 minutes to 5 hours, preferably from 30 minutes to 1 hour, are generally satisfactory. The use of a three-roll mill or similar equipment is advantageously not necessary. There is no requirement for several subsequent dispersion steps (multiple passes) either; on the contrary, a single dispersion step is generally well suitable. The instantly required dispersion energy is surprisingly much lower than in a three roll mill, where usually above 6 to 10 kJ/g of pigment are required for the first pass and above 10 to 15 kJ/g for 3 passes.

Preferably, dispersion is obtained with heating, advantageously in a closed vessel, for example to temperatures from 80 to 140°C, especially from 80 to 110°C, most preferred from 85 to 95°C. Advantageously, upon heating the compositions of the invention for dispersion, the pigment is surprisingly converted for its most part to the beta crystal phase, leading to for example from 90 to 98% by weight β-form, preferably from 95 to 98% by weight β-form. If desired, in many cases it is possible through longer or higher heating upon dispersion to reach from 98 to 99% by weight β-form or even from 99 to 99.5% by weight β-form. It is also possible but generally not necessary to add a phase director.

Suitable low shear dispersing equipment is for example a disperser, such as low and high speed stirrers or mixers which are fitted with suitable agitation heads, for example high speed Dispermat™ or premix stirrers fitted with a cowles impeller, a trifoil impeller or a butterfly impeller, low shear stirrers including conventional stirrers capable of low speed agitation using anchor and paddle stirrers for agitation. However, one can alternatively also use equipment adequate to reach higher shear, such as an extruder or a three roll or pearl mill, preferably under mild operating conditions..

It is suitable to disperse the pigment at a concentration level of from 5 to 30% by weight, based on the total weight of the dispersion. Preferably, the pigment is dispersed at a concentration level of from 10 to 25% by weight, based on the total weight of the dispersion. In a particular aspect of the invention, the pigment is first dispersed at a concentration level of from 15 to 25% by weight, based on the total weight of the dispersion, then further at a level of from 10 to 14% by weight, based on the total weight of the dispersion.

Hence, the invention also pertains to a pigment dispersion comprising
- from 10 to 25% by weight, based on the total weight of the dispersion, of a ZOD pigment as described above,
- from 150 to 400% by weight, especially from 150 to 350% by weight, preferably from 160% to 250% by weight, based on the amount of crude pigment, based on the amount of said pigment, of a resin composition comprising
- from 5 to 100% by weight, preferably from 10 to 100% by weight, of a phenol-modified rosin fraction of molecular weight from 5000 to 40 000 Da;
- from 5 to 80% by weight, preferably from 10 to 80% by weight, of a hydrocarbon resin of softening point from 105 to 165°C, preferably from 110 to 160°C;
- from 5 to 50% by weight, preferably from 10 to 50% by weight, of an esterified rosin;
- from totally 5% by weight to a maximal total percentage comprising each below 5% by weight, preferably from totally 10% by weight to a maximal total percentage comprising each below 10% by weight, of two resins selected from the group consisting of said phenol-modified rosin fraction, said hydrocarbon resin and said esterified rosin; or
- from totally 5% by weight to a maximal total percentage comprising each below 5% by weight, preferably from totally 10% by weight to a maximal total percentage comprising each below 10% by weight, of all three resins of the group consisting of said phenol-modified rosin fraction, said hydrocarbon resin and said esterified rosin;
each based on the weight of the resin composition; and
- from 80 to 700% by weight, preferably from 100 to 400% by weight, based on the amount of said pigment, of a liquid hydrocarbon;
- and optionally from 1 to 10% by weight, based on the amount of crude pigment, of an antioxidant.

The hydrocarbon may be liquid due to its low melting point, to melting point depression, to elevated temperature, to dissolution in other components of the dispersion or because crystallisation is retarded or slow.

The pigment dispersion may optionally also contain further solvents, preferably from 1 to 50% by weight, based on the amount of pigment, of a C₈-C₂₄ alcohol.

The pigment dispersion preferably also comprises from 2 to 35% by weight of one or more hydrocarbon and/or modified hydrocarbon resins and from 5 to 35% by weight of one or more esterified rosins, both based on the total amount of phenol-modified rosins, hydrocarbon and/or modified hydrocarbon resins and esterified rosins in the pigment dispersion.

The pigment dispersions of the invention are advantageously used for the preparation of offset printing inks. The technique of preparing offset printing inks is well-known in the art. Surprisingly, it is possible to prepare offset printing inks starting from the pigment dispersions of the invention without grinding the pigment dispersion in a three-roll or pearl mill. Preferably, the offset printing inks are prepared from the pigment dispersions of the invention with a disperser or only a single pass in a three-roll or pearl mill, most preferred without using a three-roll or pearl mill. Instead, it is preferable to use low shear equipment as disclosed above.

Of course, the instant compositions can also be incorporated into solid binders by kneading or extrusion, thus producing masterbatches or ink concentrates. Thus, the invention also pertains to a process for the preparation of a pigment composition, wherein a composition instantly obtained by dry-milling is kneaded or extruded with from 0 to 300% by weight, based on the pigment composition obtained by dry-milling, of a binder which is solid at 20°C. This process enables the preparation of compositions comprising special binders, which are themselves not suitable for the instant dry-milling process. Useful binders include for example those disclosed in WO 05 / 044 924. These pigment compositions may be further processed into inks according to usual processes, or also at low shear just like the instant compositions.

To further illustrate the invention, the following examples are provided. These examples are provided with no intend to limit the scope of the invention.

Suppliers of components used in the examples: ¹⁾ Lipo Chemicals, Inc.; ²⁾ Scher Chemicals, Inc.; ³⁾ Ross Wax; ⁴⁾ Rita; ⁵⁾ Clariant AG; ⁶⁾ Ciba SC; ⁷⁾ Brooks Industries, Inc.; ⁸⁾ Presperse, Inc.; ⁹⁾ International Specialty Products (ISP); ¹⁰⁾ Dow Corning; ¹¹⁾ Whittaker, Clark and Daniels, Inc; ¹²⁾ Jeen International, ¹³⁾ R.T. Vanderbilt Co., Inc.; ¹⁴⁾ Croda International; ¹⁵⁾ Phoenix Chemical Inc., ¹⁶⁾ McIntyre Group Ltd.; ¹⁶⁾ Witco Corp.; ¹⁷⁾ Whittaker, Clark & Daniels; ¹⁸⁾ Engelhard Corp.; ¹⁹⁾ Telechemische, Inc. ; ²⁰⁾ New Phase Technology; ²¹⁾ Strahl and Pitsch Inc.;²²⁾ React Inc; ²³⁾ Protameen Chemicals; ²⁴⁾ Roche Vitamins; ²⁵⁾ Atlanta Fragrance; ²⁶⁾ Warner Jenkinson Cosmetic Colors; ²⁷⁾ BASF AG; ²⁸⁾ CP Kelco; ²⁹⁾ Cognis AG.

### Pigment preparation

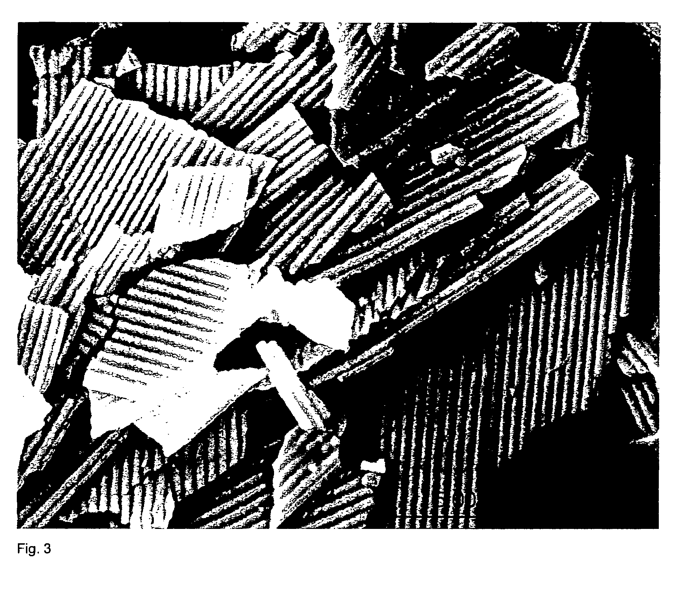

Example 1 a: On a corona treated PET foil (23 micrometer thick) a water soluble PVP layer (1000 nm thick) is deposited by gravure printing. Next, a ZOD microstructure is embossed in this PVP layer with a R2R Ni-shim at 100°C and at a speed of approximately 20m/min. The ZOD microstructure is a linear grating with a period of 365nm, a grating depth of 120nm, a fill factor of 0.5 and rectangular grating profile. Next, ZnS layer (190 nm thick) is deposited in aR2R evaporation chamber with a web speed of approximately 30m/min. Pigments are obtained from the coated foil by dissolving the PVP layer in water at room temperature, whereby the hard ZnS layer brittles into small particles of some micrometer in diameter. Figure 3 shows pigments obtained according to this example. The size of these particles may be further reduced by ultrasonic (US) treatment; the size distribution may be reduced by centrifugation or sieving. A black substrate coated with such pigments, e.g. by doctor blading, shows a pronounced colour effect upon tilting from green (nearly perpendicular) to blue/violett (tilted by ca. 30°).

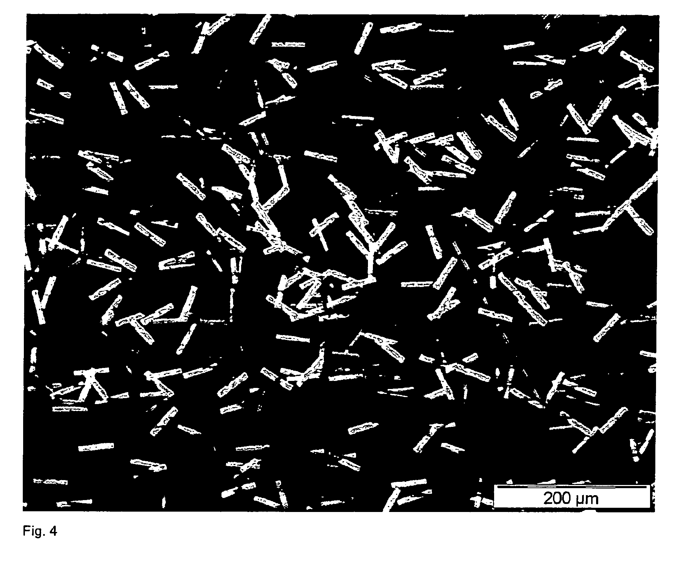

Example 1b: The procedure of ex. 1 is followed, with the exception that the thickness of the PVP layer is 4 micrometer and that the Ni-shim also applies predetermined breaking lines of size 10 micrometers * 50 micrometers. The breaking lines are approximately 4µm wide and 3µm deep. The regularly shaped pigments thus obtained are applied to a black substrate as described in example 1a. Figure 4 shows an optical microscope image of this sample. Such pigments possess a pronounced colour effect, no US treatment or steps to amend the size distribution are needed.

### Application of Pigments in cosmetics

### Example 2: Lipstick base having the following composition:

| Number | Substance | | Amount [ % ] |
|---|---|---|---|
| | cera alba | | 11.4 |
| 1 | | | |
| 2 | candelilla wax | | 8.1 |
| 3 | carnauba wax | | 3.8 |
| 4 | Lunacera M | | 6.0 |
| 5 | castor oil | | 38.8 |
| 6 | Controx KS | | 0.1 |
| 7 | aroma oil | | 1.0 |
| 8 | Amerlate P | | 2.5 |
| 9 | OH Ian | | 1.6 |
| 10 | isopropyl palmitate | | 10.1 |
| 11 | Dow Corning 556 | | 2.8 |
| 12 | Dow Corning 1401 | | 3.3 |
| 13 | TiO₂ pigment | | 2.3 |
| 14 | pigment according to Example 1a | | 8.2 |
| | | Total | 100.0 |

Substances 8 - 10 are mixed together, and substances 13 and 14 are dispersed in the resulting mixture. The resulting paste is then passed several times through a three-roll apparatus. In the meantime, substances 1 - 6 are melted, stirred together until homogeneous, and then substances 7, 11 and 12 are stirred in. The two mixtures are then mixed together in the hot state until homogeneous distribution is achieved. The hot mass is then poured into a lipstick mould and allowed to cool. Lipsticks having an intense colour of outstanding light fastness and very good gloss, and exhibiting no bleeding, are obtained.

### Example 3: Nail varnish

A nail varnish has, for example, the following formulation [in %]:

| | |
|---|---|
| methyl acetate | 8.0 |
| ethyl acetate | 8.0 |
| propyl acetate | 12.0 |
| butyl acetate | 25.0 |
| polyester resin | 7.5 |
| nitrocellulose/isopropanol | 21.0 |
| toluenesulfonamide epoxy resin | 9.0 |
| camphor | 1.5 |
| dibutyl phthalate | 5.0 |
| stearalkonium hectorite | 1.0 |
| titanium dioxide | 0.6 |
| pigment according to Example 1a | 1.2 |
| bismuth oxychloride | 0.2 |

### Example 4

Lipstick having the following composition:

| Phase | Ingredient | Tradename | parts |
|---|---|---|---|
| A | castor oil | Livopol CO¹⁾ | 36.70 |
| A | triethylhexanoin | Schercemol GTO²⁾ | 7.50 |
| A | triisostearyl trilinoleate | Schercemol TIST²⁾ | 15.00 |
| A | triisostearyl citrate | Schercemol TISC²⁾ | 17.50 |
| A | euphorbia cerifera wax | Candelilla Wax Polls³⁾ | 7.00 |
| A | copernicia cerifera wax | Carnuba Wax Prills³⁾ | 1.80 |
| A | ozokerite 77W | Ozokerite³⁾ | 1.80 |
| A | microcyrstalline wax 1275W³⁾ | | 3.50 |
| A | hydroxylated hanolin | Ritahydrox⁴⁾ | 1.00 |
| A | methylparaben | Nipagin M⁵⁾ | 0.20 |
| A | propylparaben | Nipasol M⁵⁾ | 0.10 |
| B | pigment according to example 1a | | 3.50 |
| B | boron nitride | boron nitride powder⁶⁾ | 4.35 |
| B | water and tocopheryl acetate and retinayl palmitate and ascorbyl palmitate | Brookosome ACE⁷⁾ | 0.05 |
| | | total | 100.00 |

The ingredients of phase A are combined, heated between 90 -105°C, and mixed until uniform. The ingredients of phase B are then added with stirring until homogenous. The temperature is maintained above 70°C as the lipstick is poured into the mold.

### Example 5

Talc free loose face powder having the following composition:

| Ingredient | Tradename | Parts |
|---|---|---|
| mica | Sericite PHN⁸⁾ | 90.95 |
| polymethyl methacrylate | Ganzpearl GM-0600⁸⁾ | 5.00 |
| synthetic wax and gluten protein | Microcase 110XF⁸⁾ | 2.00 |
| pigment according to example 1a, or 1b | | 1.50 |
| Methylparaben | Nipagin M⁵⁾ | 0.20 |
| Propylparaben | Nipasol M⁵⁾ | 0.10 |
| imidazolidinyl urea | Germall 115⁹⁾ | 0.25 |
| | total | 100.00 |

All ingredients are combined in a blender and mixed well.

### Example 7

Oil in water facial foundation having the following composition:

| Phase | Ingredient | Tradename | Parts |
|---|---|---|---|
| A | deionized water | water | 60.24 |
| A | 10% KOH solution | 10% KOH solution | 1.30 |
| A | PEG-12 dimethicone | DC 193 Surfactant¹⁰⁾ | 0.10 |
| A | pigment according to example 1a | | 5.00 |
| A | Talc | Talc¹¹⁾ | 0.72 |
| B | 1,3-butylene glycol | Jeechem BUGL¹²⁾ | 4.00 |
| C | 1,3-butylene glycol | Jeechem BUGL¹²⁾ | 2.00 |
| C | | Veegum Plus¹³⁾ | 0.12 |
| C | Methylparaben | Nipagin M⁵⁾ | 0.02 |
| D | Propylparaben | Nipasol M⁵⁾ | 0.10 |
| D | di-PPG-3 myristyl ether adipate | Cromollient DP3-A¹⁴⁾ | 14.00 |
| D | diethyl hexyl maleate | Pelemol DOM¹⁵⁾ | 4.00 |
| D | steareth-10 | Lipocol S-10¹⁾ | 2.00 |
| D | steareth-2 | Lipocol S-2¹⁾ | 0.50 |
| D | cetyl alcohol | Crodacol C-95 NF¹⁴⁾ | 0.62 |
| D | dicetyl phosphate and ceteth-10 phosphate and ceteryl alcohol | Crodapos CES¹⁴⁾ | 4.00 |
| D | propyl paraben | Nipasol M⁵⁾ | 0.10 |
| E | DMDM hydantoin | Mackstat DM¹⁶⁾ | 0.18 |
| | | total | 100.00 |

The ingredients of phase A are combined and heating to 80°C is begun. The ingredients of phase B and C are added and homogenized for 1 h. In a separate beaker the ingredients of phase D are combined and heated to 80°C. After all the ingredients in phase D have become uniform they are slowly added to the main mixture while homogenization is continued. Upon complete addition of phase D, the formulation is homogenized for 15 min at 80°C, then cooled to 50°C and phase E is added.

### Example 8

Powder Eye Shadow having the following composition:

| Ingredient | Tradename | Parts |
|---|---|---|
| Mica | Sericite PHN⁸⁾ | 76.20 |
| zinc stearate | Zinc Stearate¹⁶⁾ | 5.00 |
| titanium oxide | Titanium Oxide 3228¹⁷⁾ | 2.00 |
| pigment according to example 1a | | 6.00 |
| Methylparaben | Nipagin M⁶⁾ | 0.20 |
| Propylparaben | Nipasol M⁶⁾ | 0.10 |
| calcium aluminum borosilicate | Luxsil⁸⁾ | 5.00 |
| PEG-4 diheptanoate | Liponate 2-DH¹⁾ | 5.50 |
| | total | 100.00 |

The ingredients are combined and mixed well, heated to 100°C and pressed at 2000 psi.

### Example 9

Nail Enamel having the following composition:

| Phase | Ingredient | Tradename | Parts |
|---|---|---|---|
| A | butyl acetate and toluene and nitrocellulose and tosylamide/ formaldehyde resin and isopropyl alcohol and dibutyl phthalate and ethyl acetate and camphor and n-butyl alcohol and silica and quaterinium-18 hectorite | Suspending Lacquer SLF-2¹⁸⁾ | 80.00 |
| A | butyl acetate (and) bismuth oxychloride (and nitrocellulose (and) isopropyl alcohol (and) stearalkonium hectorite | Biju Ultra UXD¹⁸⁾ | 2.00 |
| A | mica (and) titanium dioxide | Flamenco Ultra Sparkle 4500¹⁸⁾ | 1.00 |
| A | pigment according to example 1 a | | 2.50 |
| A | dimethicone | Dow Corning 200¹⁰⁾ | 1.00 |
| A | tosylamide/epoxy resin | Lustrabrite S-70¹⁹⁾ | 4.00 |
| B | butyl acetate | | 1.17 |
| B | ethyl acetate | | 0.42 |
| B | toluene | | 1.66 |
| | | total | 100 |

The ingredients of phase A are combined and mixed until uniform. The ingredients of phase B are combined in a separate vessel and mixed until uniform. Phase B is added to phase A with stirring until uniform.

### Example 10

Lip Gloss having the following composition:

| Phase | Ingredient | Tradename | Parts |
|---|---|---|---|
| A | pigment according to example 1 a | | 5.15 |
| B | C₂₄₋₃₀alcohol | Performacol 425²⁰⁾ | 1.75 |
| B | copernica cerifera | Carnuba Wax³⁾ | 1.70 |
| B | microcrystalline wax | Microwax 1275²¹⁾ | 4.00 |
| B | triisostearyl polyglycerol-3 dimer dilinoleate | Schercemol PTID²⁾ | 43.30 |
| B | triisostearyl citrate | Schercemol TISC²⁾ | 38.40 |
| B | PE/PVA copolymer soy glycerides | Enviropur 301²²⁾ | 5.00 |
| B | methylparaben | Methylparaben²³⁾ | 0.20 |
| B | propylparaben | Propylparaben²³⁾ | 0.10 |
| B | tocopherol | Tocopherol²⁴⁾ | 0.10 |
| C | flavor | Flavor²⁵⁾ | 0.30 |
| | | | 100.00 |

The ingredients of phase B are combined, heated between 85 -87°C, and mixed until uniform. The ingredients of phase A are then added with stirring until homogenous. The temperature is decreased to 70-72°C and the ingredients of phase C are added.

### Example 11

Pressed powder having the following composition:

| Phase | Ingredient | Tradename | Parts |
|---|---|---|---|
| A | Talc | Rose Talc⁸⁾ | 80.85 |
| A | zinc stearate | Zinc Stearate¹⁶⁾ | 3.00 |
| A | Propylparaben | Propylparaben²³⁾ | 0.25 |
| A | Methylparaben | Methylparaben²³⁾ | 0.20 |
| A | imidazolidinyl urea | Unicide¹⁾ | 0.10 |
| A | pigment according to example 1a | | 0.60 |
| A | mica and boron nitride | Lipomic 601 BN¹⁾ | 3.00 |
| A | polyamide-12 triazaminostilbene-disulfonate and polyoxymethylene urea | LipoLight OAP/C¹⁾ | 10.00 |
| B | PEG-4 diheptanoate | Liponate 2-DH¹⁾ | 2.00 |
| | | | 100.00 |

The ingredients of phase A are mixed and the ingredients of phase B are added slowly with mixing.

### Example 12

Cream to Powder Blush having the following composition:

| Phase | Ingredient | Tradename | Parts |
|---|---|---|---|
| A | Didecene | Silkflo 362 NF¹⁾ | 22.40 |
| A | PEG-4 diheptanoate | Liponate 2DH¹⁾ | 5.00 |
| A | isopropyl palmitate | Protachem IPP²³⁾ | 6.50 |
| A | pentaerythrityl tetrastearate | Crodamol PETS¹⁴⁾ | 2.50 |
| A | pentaethrityl tetrabehenate | Liponate PB-4¹⁾ | 1.00 |
| A | copernicia cerifera | Carnuba Wax³⁾ | 5.00 |
| A | soy lecithin | Lipo Lecithin¹⁾ | 0.50 |
| B | titanium dioxide, oil dispersion | Titanium Dioxide¹⁷⁾ | 9.00 |
| B | pigment according to example 1a | | 10.00 |
| B | Kaolin | Colliodal Kaolin NF¹⁷⁾ | 12.30 |
| B | Talc | Rose Talc⁸⁾ | 17.00 |
| B | nylon 6-12 | Orgasol 4000¹⁾ | 6.00 |
| B | Propylparaben | Propylparaben²³⁾ | 0.30 |
| B | mica and silica | SM-2000⁸⁾ | 2.00 |
| B | black iron oxide | Black Iron Oxide²⁶⁾ | 0.50 |
| B | mica and boron nitride | Lipomic 601 BN¹⁾ | 2.00 |
| | | total | 100.00 |

The ingredients of phase A are mixed in a homogenizer and heated to 70 to 75°C. The ingredients of phase B are combined and mixed until uniform. Phase B is added to phase A and the temperature is maintained at 70 to 75 °C while mixing for 30 minutes. The mixture is poured into a container.

### Example 13

Water resistant mascara having the following composition:

| Phase | Ingredient | Trade Name | Parts |
|---|---|---|---|
| A | Water | | 51.20 |
| A | PEG-8 | Prochem 400²³⁾ | 1.50 |
| A | xanthan gum | Keltrol CG²⁸⁾ | 0.50 |
| A | Methylparaben | Methylparaben²³⁾ | 0.20 |
| A | imidazoldinyl urea | Unicide U-13¹⁾ | 0.10 |
| A | tetrahydroxypropyl ethylenediamine | Neutrol TE²⁷⁾ | 1.30 |
| B | copernicia cerifera | Carnuba Wax³⁾ | 9.00 |
| B | cera alba | Bees Wax³⁾ | 4.50 |
| B | Isoeiconsane | Fancol IE | 4.50 |
| B | Polyisobutene | Permethyl 104A⁸⁾ | 4.50 |
| B | stearic acid | Emersol 132²⁹⁾ | 6.00 |
| B | glyceryl stearate | Lipo GMS 450¹⁾ | 1.00 |
| B | Propylparaben | Propylparaben²³⁾ | 0.20 |
| B | benzyl laurate | Luvitol BL²⁷⁾ | 2.00 |
| C | black iron oxide²⁶⁾ | | 3.00 |
| C | pigment according to example 1a | | 2.00 |
| D | PVP/VA copolymer | Luviskol VA 64W²⁷⁾ | 8.50 |
| | | | 100.00 |

The ingredients of phase A and B are mixed separately and heated to 85°C. The temperature is maintained and phase B is added to phase A and the mixture is homogenized until uniform. The ingredients of phase C are added to the mixture of phase A and B and mixed until uniform. Mixing is continued and the ingredients of phase D are added.

### Application of pigments in printing inks

Example 14: In analogy to EP 0 774 494 B2, 89.1 g of the pigment from example 1 a, 15.0 g of sodium chloride and 2.5 g of hydrogenated resin (Staybelite™-E resin) are ground together in a ballmill until the phase change gives and alpha content between 45%-65%. 75 g of the milled material are added to a solvent mixture containing 17 g of n-butanol and 208 g of water with agitation. 1.4 ml of a 46% potassium hydroxide solution is added and the slurry heated to reflux (93°C) for 4 hours. 100 ml of cold water are added in order to cool the slurry, which is then acidified with aq. HCl, filtered, washed salt and solvent free, and dried at 75°C. 18 g of the resultant pigment is added to 132 g of the following ink vehicle:

| | |
|---|---|
| Low viscosity alkyd resin (51 ± 5 Pa · s / ≤ 16 mg KOH/g) | 9.1 % |
| Dodecanol | 2.4 % |
| Soya oil | 12.8 % |
| Aromatic free distillate (boiling range 230-290°C) | 38.25 % |
| Phenolic modified rosin (M_{w}≈ 12 000) | 22.6 % |
| Phenolic modified rosin (M_{w} ≈ 100 000) | 10.9 % |
| Hydrocarbon resin (d = 1.07 g/cm³, softening point 141 °C) | 3.6 % |
| 2,6-Di-tert.-butyl-p-cresol | 0.35 % |

The resulting mixture is stirred at 90°C using a cowles impeller at 5000 rpm for 60 minutes. After pre-mixing, 1 mm glass beads are added and the mixture is bead milled for 15 minutes at 300 rpm and 90°C. The ink is then sieved to remove beads and given a single pass at 25 bar pressure on a Bühler SDY-200 3-roll mill at 23°C. The ink performance is assessed after the bead mill stage and after the single pass on the 3-roll mill.

The ink is then printed using a Prufbau printing machine to give prints of differing film weights. The print density for each print is measured using a densitometer (Gretag D19C). The gloss is measured at equal film weight using an Erichsen mini glossmaster at 60°. The dispersion is characterised by microscope assessment.

Example 15: The following mixture is charged to a vibrating ballmill:

| | |
|---|---|
| 30.0 g | pigment of example 1a |
| 69.2 g | high molecular weight phenolic modified rosin (M_{w} ≈ 100 000) |
| 0.93 g | 2,6-di-tert.-butyl-p-cresol |

The above mixture is milled at ≤ 65 °C to an α content of 30 ± 10%. 60.0 g of the resulting mixture are added to 90.0 g of the following ink vehicle:

| | |
|---|---|
| Low viscosity alkyd resin (51 ± 5 Pa·s /≤16 mg KOH/g) | 13.5 % |
| Dodecanol | 3.5 % |
| Soya oil | 19.0 % |
| Aromatic free distillate (boiling range 230-290°C) | 64.0 % |

The resulting mixture is stirred at 90°C using a cowles impeller at 5000 rpm for 60 minutes. The resultant ink is then assessed for dispersion and colouristic properties.

Example 16: The following mixture is charged to a vibrating ballmill:

| | |
|---|---|
| 42.9 g | pigment of example 1a |
| 56.0 g | low molecular weight phenolic modified rosin (M_{w}≈ 12 000) |
| 1.1 g | 2,6-di-tert.-butyl-p-cresol |

The above mixture is milled at ≤ 65 °C to an α content of 30 ± 10%. 41.9 g of the resulting mixture are added to 108.1 g of the following ink vehicle:

| | |
|---|---|
| Low viscosity alkyd resin (51 ± 5 Pa · s / ≤ 16 mg KOH/g) | 13.5 % |
| Dodecanol | 3.5 % |
| Soya oil | 19.0 % |
| Aromatic free distillate (boiling range 230-290°C) | 64.0 % |

The resulting mixture is stirred at 90°C using a cowles impeller at 5000 rpm for 60 minutes. The resultant ink is then assessed for dispersion and colouristic properties.

Example 17: The following mixture is charged to a vibrating ballmill:

| | |
|---|---|
| 37.0 g | pigment of example 1a |
| 29.6 g | low molecular weight phenolic modified rosin (M_{w}≈ 12 000) |
| 22.7 g | high molecular weight phenolic modified rosin (M_{w}≈ 100 000) |
| 9.85 g | hydrocarbon resin (d =1.07 g/cm³, softening point 141 °C) |
| 0.93 g | 2,6-di-tert.-butyl-p-cresol |

The above mixture is milled at ≤ 65 °C to an α content of 30 ± 10%. 48.6 g of the resulting mixture are added to 101.4 g of the following ink vehicle:

| | |
|---|---|
| Low viscosity alkyd resin (51 ± 5 Pa · s / ≤ 16 mg KOH/g) | 12.0 % |
| Dodecanol | 3.1 % |
| Soya oil | 16.7 % |
| Aromatic free distillate (boiling range 230-290°C) | 50.0 % |
| Phenolic modified resin (M_{w}≈ 100 000) | 18.6 % |

The resulting mixture is stirred at 90°C using a cowles impeller at 5000 rpm for 60 minutes. Almost full conversion to the β form is obtained. The resultant ink is then assessed for dispersion and colouristic properties.

Example 18: The following mixture is charged to a vibrating ballmill:

| | |
|---|---|
| 30.0 g | pigment of example 1a |
| 69.2 g | low molecular weight phenolic modified rosin (M_{w}≈ 12 000) |
| 0.8 g | 2,6-di-tert.-butyl-p-cresol |

60.0 g of the resulting mixture are added to 90.0 g of the following ink vehicle:

| | |
|---|---|
| Low viscosity alkyd resin (51 ± 5 Pa · s / ≤ 16 mg KOH/g) | 13.5 % |
| Dodecanol | 3.5 % |
| Soya oil | 19.0 % |
| Aromatic free distillate (boiling range 230-290°C) | 64.0 % |

The resulting mixture is stirred at 90°C using a cowles impeller at 5000 rpm for 60 minutes. The resultant ink is then assessed for dispersion and colouristic properties.

Example 19: The following mixture is charged to a vibrating ballmill:

| | |
|---|---|
| 30.0 g | pigment of example 1a |
| 69.2 g | low molecular weight phenolic modified rosin (M_{w}≈12 000) |
| 0.8 g | 2,6-di-tert.-butyl-p-cresol |

60.0 g of the resulting mixture are added to 90.0 g of the following ink vehicle:

| | |
|---|---|
| Low viscosity alkyd resin (51 ± 5 Pa · s /≤ 16 mg KOH/g) | 13.5 % |
| Dodecanol | 3.5 % |
| Soya oil | 19.0 % |
| Aromatic free distillate (boiling range 230-290°C) | 56.5 % |
| Phenolic modified resin (M_{w} ≈ 100000) | 7.5 % |

The resulting mixture is stirred at 90°C using a cowles impeller at 5000 rpm for 15 minutes. The resultant ink is then assessed for dispersion and colouristic properties.

Example 20: The following mixture is charged to a vibrating ballmill:

| | |
|---|---|
| 37.0 g | pigment of example 1a |
| 62.07 g | low molecular weight phenolic modified rosin (M_{w}≈ 12000) |
| 0.93 g | 2,6-di-tert.-butyl-p-cresol |

48.1 g of the resulting mixture are added to 101.4 g of the following ink vehicle:

| | |
|---|---|
| Low viscosity alkyd resin (51 ±5 Pa·s / ≤ 16 mg KOH/g) | 12.0 % |
| Tridecanol | 3.1 % |
| Soya oil | 16.6 % |
| Aromatic free distillate (boiling range 230-290°C) | 50.0 % |
| Phenolic modified resin (M_{w}≈ 100 000) | 6.5 % |
| Phenolic modified resin (M_{w}≈ 12 000) | 11.9 % |

The resulting mixture is stirred at 90°C using a cowles impeller at 5000 rpm for 60 minutes. The resultant ink is then assessed for dispersion and colouristic properties.

Example 21: The following mixture is charged to a vibrating ballmill:

| | |
|---|---|
| 30.0 g | pigment of example 1a |
| 69.2 g | low molecular weight phenolic modified rosin (M_{w}≈ 12 000) |
| 0.8 g | 2,6-di-tert.-butyl-p-cresol |

100.0 g of the resulting mixture are added to 50.0 g of the following ink vehicle:

| | |
|---|---|
| Dodecanol | 6.3 % |
| Aromatic free distillate | 93.7 % |

The resulting mixture is stirred at 90°C using a cowles impeller at 5000 rpm for 60 minutes. The resultant 20% ink base is then reduced to 12% pigmentation by adding 97.1 g of the following vehicle:

| | |
|---|---|
| Low viscosity alkyd resin (51 ± 5 Pa · s / ≤ 16 mg KOH/g) | 20.4 % |
| Dodecanol | 2.0 % |
| Soya oil | 28.7 % |
| Aromatic free distillate (boiling range 230-290°C) | 37.4 % |
| Phenolic modified resin (M_{w}≈ 100 000) | 11.5 % |

The resultant ink is then assessed for dispersion and colouristic properties.

Example 22: The following mixture is charged to a vibrating ballmill:

| | |
|---|---|
| 30.0 g | pigment of example 1a |
| 16.0 g | esterified rosin (d =1.1 g/cm³, m.p. > 145°C) |
| 48.3 g | high molecular weight phenolic modified rosin (M_{w}≈ 100000) |
| 4.9 g | hydrocarbon resin (d=1.07g/cm³, softening point 141 °C) |
| 0.8 g | 2,6-di-tert.-butyl-p-cresol |

81.0 g of the resulting mixture are added to 119.0 g of an ink vehicle which contains the following:

| | |
|---|---|
| Low viscosity alkyd resin (51 ± 5 Pa · s / ≤16 mg KOH/g) | 13.5 % |
| Tridecanol | 3.5 % |
| Soya oil | 19.0 % |
| Aromatic free distillate (boiling range 230-290°C) | 64.0 % |

The resultant mixture is stirred in a sealed vessel using a conventional anchor stirrer for 4 hours at 120° C. The resultant ink 12% pigment containing is then assessed for dispersion and colouristic properties.

### Comparative coloristic properties (dispersion quality assessed visually with a microscope):

| Example | Dispersion quality | Colour strength [%] | Gloss [%] |
|---|---|---|---|
| Example 14 | | | |
| Example 15 | | | |
| Example 16 | | | |
| Example 17 | | | |
| Example 18 | | | |
| Example 19 | | | |
| Example 20 | | | |
| Example 21 | | | |
| Example 22 | | | |

### Assessment:

| | | | |
|---|---|---|---|
| ++++ | much superior | - | faintly inferior |
| +++ | moderately superior | -- | slightly inferior |
| ++ | slightly superior | --- | moderately inferior |
| + | faintly superior | ---- | much inferior |

Example 23: 28 g of pigment of example 1 is added to 125.2 g of an ink vehicle containing the following components:

| | |
|---|---|
| Low viscosity alkyd resin (51 ± 5 Pa · s / ≤ 16 mg KOH/g) | 9.67 % |
| Phenolic modified rosin (M_{w}≈ 12 000) | 30.34 % |
| Phenolic modified rosin (M_{w}≈ 100 000) | 10.38 % |
| Hydrocarbon resin (d =1.07 g/cm³, softening point 141 °C) | 1.59 % |
| Anti-oxidant (BHT) | 0.32 % |
| Extender (aluminum silicate) | 7.98 % |
| Microcrystalline wax | 3.51 % |
| Soya oil | 9.58 % |
| Aromatic free distillate (boiling range 230-290°C) | 26.63 % |

The resulting mixture is stirred at 90°C using a cowles impeller at 2000 rpm for 10 minutes. The impeller speed is then increased to 16000 rpm and the premix stirred for a further 15 minutes at 90°C. The impeller speed is then reduce to 8000 rpm and the premix stirred for a further 15 minutes. Then, there are added to the ink premix 69.02 g of an ink vehicle of the following composition:

| | |
|---|---|
| Low viscosity alkyd resin (51±5 Pa·s /≤ 16 mg KOH/g) | 32.19 % |
| Tridecanol | 3.76 % |
| Aromatic free distillate (boiling range 230-290°C) | 64.05 % |

This mixture is stirred for 10 minutes at 4000 rpm, then for a further 5 minutes after addition of further aromatic free distillate to make the ink weight up to 222.2 g. The ink is then given a single pass on the Bühler SDY-200 3-roll mill at 23°C / 25 bar pressure. The ink performance is assessed after the premix stage and after the single pass on the 3-roll mill.

The ink is then printed using a Prüfbau printing machine to give prints of differing film weights. The print density for each print is measured using a densitometer (Gretag D19C). The gloss is measured at equal film weight using an Erichsen mini glossmaster at 60°. The dispersion is characterised by microscope assessment.

Example 24: 20.00 g of pigment of example 1, 20.00 g phenolic modified rosin (M_{w}≈12 000), 10.00 g of hydrocarbon resin (d =1.07 g/cm³, softening point 141 °C) and 1.0 g of anti-oxidant (BHT) are dry milled for 273 minutes in a vibrating ball mill at < 65°C. 35.0 g of the resulting mixture is added to 64.0 g of an ink vehicle containing the following components:

| | |
|---|---|
| Low viscosity alkyd resin (51 ± 5 Pa · s / ≤ 16 mg KOH/g) | 6.00 g |
| Phenolic modified rosin (M_{w} ≈ 100 000) | 9.00 g |
| PTFE wax | 0.50 g |
| Soya oil | 6.00 g |
| Aromatic free distillate (boiling range 230-290°C) | 36.25 g |
| Distillate containing 10% aromatics (boiling range 240-270°C) | 6.25 g |

The resulting mixture is stirred at 100°C using a cowles impeller at 5000 rpm for 60 minutes. The ink is then given a single pass on a 3-roll mill at 23°C. It is then reduced to 13% with high boiling point alcohol to enable printing.

Example 25: 14.00g of pigment of example 1 is mixed in a pot with the following varnish:

| | |
|---|---|
| Low viscosity alkyd resin (51 ± 5 Pa · s / ≤ 16 mg KOH/g) | 6.00 g |
| Phenolic modified rosin (M_{w} ≈ 100 000) | 26.00 g |
| Anti-oxidant (BHT) | 1.00 g |
| Hydrocarbon resin (d=1.07 g/cm³, softening point 141 °C) | 4.00 g |
| PTFE wax | 0.50 g |
| Soya oil | 6.00 g |
| Aromatic free distillate (boiling range 230-290°C) | 36.25 g |
| Distillate containing 10% aromatics (boiling range 240-270°C) | 6.25 g |

The resulting mixture is stirred at 60°C using a Cowles impeller at 1000 rpm for 15 minutes, the impeller is then replaced with a nylon disc. 200 g of 1 mm glass beads are then added, the stirrer speed increased to 3000 rpm and the mixture stirred for 15 minutes. A temperature of 80°C is maintained throughout. The ink is then sieved to remove beads and given a double pass at 10 bar pressure and a single pass at 25 bar pressure on the Bühler SDY-200 3-roll mill at 23°C. To enable printing, it is reduced to 13% pigment content with high boiling point alcohol. The resultant ink is compared to example 8 for dispersion and colouristic properties.

Example 26: 27.00 g pigment of example 1 and 1.50 g Reflex Blue™ R54 (C. I. Pigment Blue 15 dispersion, Dispersion Technology Ltd) are mixed in a pot with 121.5 g of the following varnish:

| | |
|---|---|
| Phenolic modified rosin (M_{w} ≈ 100 000) | 20.11 g |
| Phenolic modified rosin (M_{w}≈ 12 000) | 17.24 g |
| Low viscosity alkyd resin (51 ± 5 Pa · s / ≤ 16 mg KOH/g) | 15.42 g |
| Gilsonite (naturally occurring resin) | 8.25 g |
| Soya oil | 13.35 g |
| Tridecanol | 1.47 g |
| Colorburst™ dispersant | 1.03 g |
| Anti-oxidant (BHT) | 0.29 g |
| Aromatic free distillate (boiling range 230-290°C) | 44.34 g |

The resulting mixture is stirred at 90°C using a Cowles impeller at 5000 rpm for 60 minutes, the impeller is then replaced with a nylon disc, 200 g of 1 mm glass beads are added, the stirrer speed reduced to 3000 rpm and the mixture stirred for 15 minutes. A temperature of 90°C is maintained throughout.

Example 27: 36.27 g pigment of example 1, 2.02 g Reflex Blue™ R54 (C. I. Pigment Blue 15 dispersion, Dispersion Technology Ltd), 27.02 g phenolic modified rosin (M_{w} ≈ 100 000), 23.2 g phenolic modified rosin (M_{w}≈ 12 000), 11.09 g gilsonite (naturally occurring resin) and 0.4 g of anti-oxidant (BHT) are dry milled for 2 h in a vibrating ball mill at < 65°C. 74.4 g of the resulting mixture is added to 75.6 g of an ink vehicle comprising the following components:

| | |
|---|---|
| Low viscosity alkyd resin (51 ± 5 Pa · s /≤ 16 mg KOH/g) | 15.41 g |
| Soya oil | 13.36 g |
| Aromatic free distillate (boiling range 230-290°C) | 44.33 g |
| Tridecanol | 1.47 g |
| Colorburst™ dispersant | 1.03 g |

The resulting mixture is stirred at 90°C using a Cowles impeller at 5000 rpm for 60 minutes.

### Coloristic properties (dispersion quality assessed visually with a microscope):

| Example | Dispersion quality [NPIRI gauge] | Colour strength [%] | Gloss [%] | Low shear flow |
|---|---|---|---|---|
| Example 23 | | | | |
| Example 24 | | | | |
| Example 25 | | | | |
| Example 26 | | | | |
| Example 27 | | | | |

The examples show that the present inks are well dispersible, while having good colour strength and gloss properties.

### Application of pigments in coating compositions

Example 28: This example shows the incorporation of the inventive pigment black into an automotive solvent-based paint system.

A 16 oz flask is charged with 20 g pigment of example 1 and 20 g IRGAZIN Green 2180, a C.I.Pigment Green 7 from CIBA Specialty Chemicals. The flask is closed tight and its contents are mixed for 2 hours by rolling the flask on a rolling gear at a rotation speed of 115 feet/minute, yielding a greenish powder.

A pint jar is charged with 40.5 grams high solids acrylic copolymer resin (68% solids) from DUPONT, 8.84 grams acrylic A-B dispersant resin consisting of (55% solids) from DUPONT, and 69.46 grams Solvesso 100 primarily consisting of C9-C10 dialkyl- and trialkylbenzenes from American Chemical. 16.2 grams of the above pigment composition and 240 grams of glass beads are added. The mixture in the jar is shaken on a Skandex (manufactured by IDEX Corp.) shaker for 1 hour. This "mill base" contains 12.0 % pigment with a pigment/binder ratio of 0.5 and a solids content of 30 %.

70.9 grams of the above millbase, 40.8 grams of a polyester acrylic urethane based solution 47.8% solids, 18.3 grams of a melamine resin based solution (both solutions are from DUPONT) are mixed and diluted with a solvent mixture comprising 76 parts xylene, 21 parts butanol and 3 parts methanol to a spray viscosity of 20-22 seconds as measured by a #2 Fisher Cup.

The resin/pigment dispersion is sprayed onto a panel twice at 1½-minute intervals as basecoat. After 2 minutes, the clearcoat resin is sprayed twice at 1½-minute intervals onto the basecoat. The sprayed panel is then flashed with air in a flash cabinet for 10 minutes and then "baked" in an oven at 265° F (129° C) for 30 minutes, yielding a colored panel.

Example 29: This example shows the incorporation of the inventive pigment black into an automotive solvent-based paint system.

Pigment Dispersion: The following ingredients are stirred together to provide a pigment dispersion containing 27.9% pigment of the invention and a total solid content of 69.1% solids:

| | |
|---|---|
| 154.8 | grams of pigment of example 1, |
| 295.0 | grams of non-aqueous dispersion resin, and |
| 104.4 | grams of acrylourethane resin. |

Black Millbase Formulation: A 16 oz flask is charged with 20 g Perrindo Violet V-4050, a C.I. Pigment Violet 29 from BAYER and 20 g IRGAZIN Green 2180, a C.I.Pigment Green 7 from CIBA Specialty Chemicals. The flask is closed tight and its contents are mixed for 2 hours by rolling the flask on a rolling gear at a rotation speed of 115 feet/minute, yielding a greenish black powder. A pint jar is charged with 40.5 grams high solids acrylic copolymer resin (68% solids) from DUPONT, 8.84 grams acrylic A-B dispersant resin consisting of (55% solids) from DUPONT, and 69.46 grams Solvesso 100 primarily consisting of C9-C10 dialkyl- and trialkylbenzenes from American Chemical. 16.2 grams of the greenish black pigment powder and 240 grams of glass beads are added. The mixture in the jar is shaken on a Skandex (manufactured by IDEX Corp.) shaker for 1 hour. The black "mill base" contains 12.0 % pigment with a pigment/binder ratio of 0.5 and a solids content of 30 %.

Color for spraying paint: A coating (for 25% pigment loading) is prepared by mixing the following ingredients:

| | |
|---|---|
| 43.2 | grams of the black "mill base" dispersion |
| 15.4 | grams of "pigment dispersion" |
| 45.4 | grams of a polyester acrylic urethane based solution |
| 16.1 | grams of a melamine based solution |

The black pigment/diffractive pigment/resin dispersion, which has excellent rheological properties, is sprayed onto a primed panel 8 times (for complete hiding) at 1-minute intervals as basecoat. After 3 minutes, clear coat resin is sprayed twice at 1-minute intervals onto the basecoat. The sprayed panel is flashed with air in a flash cabinet for 10 minutes and then "baked" in an oven at 265°F (130°C). A black colored effect coating with excellent weatherability is obtained. The coating shows high gloss and a black opalescent color.

## Claims

1. Composition comprising
a) a zero order diffractive pigment, showing a colour effect based on zero-order diffraction and consisting of an optical wave-guiding layer, whereas said layer is made of a material with an index of refraction that is higher than the index of refraction of the adjacent material by at least 0.25,
has a zero-order diffractive grating structure of a period from 300 to 500 nm, and a grating depth from 30 to 300nm, and has a thickness between 50nm and 500nm, and
b) a matrix material comprising a natural or synthetic organic polymer, a surfactant, cosmetic wax and/or cosmetic oil,
preferably containing component a) in an amount from 0.0001 to 90 % by weight of the total composition.

2. Composition of claim 1, wherein the matrix material is transparent, the pigment is dispersed in said matrix material and/or the material adjacent to the optical wave-guiding layer is a material of component b) of claim 1, or preferably the material adjacent to the optical wave-guiding layer is a material identical with the matrix material.

3. Composition of any of the foregoing claims, wherein the pigment is incorporated into the matrix material in an amount from 0.0001 to 90 % by weight of the final material obtained or the total composition.

4. Composition of any of the foregoing claims, wherein the pigment contains a zero-order diffractive grating structure possessing a period that is smaller than the wavelength of the light which shall be reflected in the zeroth reflection order.

5. Composition according to any of the preceding claims, wherein the pigment has an anisotropic lateral shape.

6. Composition according to any of the preceding claims wherein the pigment is embedded in an organic or inorganic droplet and fixed within this droplet.

7. Composition according to any of the preceding claims wherein the pigment's optical waveguiding layer is made of material suitable for human administration, in particular TiO2, and wherein said pigment is embedded in a digestible matrix.

8. Composition according to any of claims 1 - 6, wherein the matrix material (component b) comprises
organic polymers selected from natural resins, drying oils, rubber or casein, or substances derived therefrom, oil-modified alkyd resins, viscose, polysaccharides like cellulose ethers or esters;
non-ionic polymers, for example vinylpyrrolidone/vinyl acrylate copolymers, polyvinylpyrrolidone and vinylpyrrolidone/vinyl acetate copolymers and polysiloxanes;
cationic polymers; quaternised polyvinyl alcohol; zwitterionic and amphoteric polymers; anionic polymers; polymeric thickeners; protein hydrolysates or condensation products thereof; polyols; polyethers; sugar-containing polymers;
thermosetting and thermoplastic synthetic organic polymers as obtainable by polymerisation, polycondensation, polyaddition and/or crosslinking, especially polyolefins such as polyethylene, polypropylene or polyisobutylene, substituted polyolefins, such as polymerisation products of vinyl chloride, vinyl acetate, styrene, acrylonitrile, acrylic acid esters, methacrylic acid esters or butadiene, and also copolymerisation products of the said monomers; polyaddition resins and polycondensation resins such as condensation products of formaldehyde with phenols, condensation products of formaldehyde with urea, thiourea or melamine, polyesters such as alkyd resins or maleate resins; linear polyesters and polyamides, polyurethanes; silicones; melamine resins; urea-formaldehyde resins; acrylic resins;
surfactants selected from anionic, zwitterionic, ampholytic, non-ionic and cationic surfactants; cosmetic waxes, cosmetic oils and/or cosmetic alcohols selected from fatty alcohols; esters of fatty acids; natural or synthetic di- and triglycerides; hydrocarbon oils such as paraffin oil; mineral oils having a boiling point about from 310 to 410°C; silicone oils; silicone waxes; colophane; hydrogenated oils that are solid at 25°C; sugar glycerides; fatty acid salts of calcium, magnesium, zirconium, aluminium; siloxanes; fluorinated and perfluorinated oils; phospholipids; cephalins; perfume oils; solubilisers; spermaceti, beeswax, montan wax; paraffins; fatty alcohols; fatty acid esters; fatty alkanolamides; polyglycols such as polyethylene glycols and polypropylene glycols; swelling and penetration substances; opacifiers.

9. Composition according to any of claims 1 - 6, wherein the matrix is in the form of a coating, especially a colour coating for cars, plastics, metals, paper and the like; a glaze; lacquer; varnish; paint; printing paste; ink; printed image or design; a cosmetic formulation e.g. chosen from sun screens, body lotions, hair lotions, hair colorations, foundations, eye shadows, blushes, lipsticks, lip glosses, lip lacquers, mascaras, nail varnishes, and eyeliners; a personal care formulation e.g. chosen from shampoos, wash formulations, hair and/or body cleansing products.

10. Composition according to any of claims 1 - 6, wherein the pigment is obtained by a process comprising the steps of
• depositing and optionally micro-structuring on a substrate a first layer which is dissolvable in a first solvent;
• manufacturing a layers of said ZOD pigments by one or more deposition steps and optionally one or more micro-structuring steps
• dissolving said first layer for obtaining ZOD substrates or ZOD pigments;
• optionally subjecting the obtained ZOD substrates or ZOD pigments to one or more selection steps as to size and/or shape
wherein at least one micro-structuring step takes place.

11. Composition according to claim 5 wherein the pigment of anisotropic lateral shape is obtained by embossing predetermined breaking points or breaking lines prior, simultaneously or subsequently, in particular simultaneously, to the embossing of the periodic microstructure.

12. Process for the preparation of a coating, glaze, lacquer, varnish, paint, printing paste, ink, printed image or design, cosmetic formulation or personal care formulation, **characterized in that** a pigment, in particular zero-order diffractive pigment as defined as component a) in claim 1, is incorporated into said coating, glaze, lacquer, varnish, paint, printing paste, ink, printed image or design, cosmetic formulation or personal care formulation in combination with a natural or synthetic organic polymer, a surfactant, cosmetic wax and/or cosmetic oil.

13. Use of a composition according to any of claims 1 to 9 as a coating, especially a colour coating for cars, plastics, metals, paper and the like; a glaze; lacquer; varnish; paint; printing paste; ink; printed image or design; a cosmetic formulation e.g. chosen from sun screens, body lotions, hair lotions, hair colorations, foundations, eye shadows, blushes, lipsticks, lip glosses, lip lacquers, mascaras, nail varnishes, and eyeliners; a personal care formulation e.g. chosen from shampoos, wash formulations, hair and/or body cleansing products.

## Patentansprüche

1. Zusammensetzung, umfassend:
a) ein Diffraktionspigment nullter Ordnung, das einen Farbeffekt basierend auf Diffraktion nullter Ordnung aufweist und aus einer Lichtwellenleitschicht besteht, während die Schicht aus einem Material mit einem Brechungsindex hergestellt ist, der um mindestens 0,25 höher als der Brechungsindex des benachbarten Materials ist,
eine Diffraktionsgitterstruktur nullter Ordnung einer Periode von 300 bis 500 nm und eine Gittertiefe von 30 bis 300 nm aufweist, und eine Dicke von 50 nm bis 500 nm aufweist,
b) ein Matrixmaterial, das ein natürliches oder synthetisches organisches Polymer, ein Tensid, ein kosmetisches Wachs und/oder ein kosmetisches Öl umfasst,
vorzugsweise Komponente a) in einer Menge von 0,0001 bis 90 Gewichts-% der Gesamtzusammensetzung enthaltend.

2. Zusammensetzung nach Anspruch 1, wobei das Matrixmaterial transparent ist, das Pigment im Matrixmaterial verteilt ist, und/oder das Material benachbart zur Lichtwellenleitschicht ein Material der Komponente b) nach Anspruch 1 ist, oder das Material benachbart zur Lichtwellenleitschicht vorzugsweise ein Material ist, das mit dem Matrixmaterial identisch ist.

3. Zusammensetzung nach einem der vorhergehenden Ansprüche, wobei das Pigment in einer Menge von 0,0001 bis 90 Gewichts-% des erhaltenen Endmaterials oder der Gesamtzusammensetzung in das Matrixmaterial eingemischt ist.

4. Zusammensetzung nach einem der vorhergehenden Ansprüche, wobei das Pigment eine Diffraktionsgitterstruktur nullter Ordnung enthält, die eine Periode besitzt, die kleiner als die Wellenlänge des Lichts ist, das in der nullten Reflexionsordnung reflektiert werden soll.

5. Zusammensetzung nach einem der vorhergehenden Ansprüche, wobei das Pigment eine anisotrope laterale Form aufweist.

6. Zusammensetzung nach einem der vorhergehenden Ansprüche, wobei das Pigment in ein organisches oder anorganisches Tröpfchen eingebettet und innerhalb dieses Tröpfchens fixiert ist.

7. Zusammensetzung nach einem der vorhergehenden Ansprüche, wobei die Lichtwellenleitschicht des Pigments aus Material, das zur Verabreichung an Menschen geeignet ist, insbesondere TiO2, hergestellt ist, und wobei das Pigment in eine verdauliche Matrix eingebettet ist.

8. Zusammensetzung nach einem der Ansprüche 1 bis 6, wobei das Matrixmaterial (Komponente b) umfasst:
organische Polymere, ausgewählt aus natürlichen Harzen, trocknenden Ölen, Kautschuk oder Casein oder davon abgeleiteten Substanzen, ölmodifizierten Alkydharzen, Viskose, Polysacchariden wie Celluloseethern oder -estern;
nichtionische Polymere, zum Beispiel Vinylpyrrolidon/Vinylacrylat-Copolymere, Polyvinylpyrrolidon und Vinylpyrrolidon/Vinylacetat-Copolymere und Polysiloxane;
kationische Polymere; quaternisierten Polyvinylalkohol; zwitterionische und amphotere Polymere; anionische Polymere; polymere Verdickungsmittel; Protein-Hydrolysate oder Kondensationsprodukte davon; Polyole; Polyether; zuckerhaltige Polymere;
wärmehärtbare und thermoplastische synthetische organische Polymere, wie durch Polymerisation, Polykondensation, Polyaddition und/oder Vernetzung erhältlich, insbesondere Polyolefine, wie beispielsweise Polyethylen, Polypropylen oder Polyisobutylen, substituierte Polyolefine, wie beispielsweise Polymerisationsprodukte von Vinylchlorid, Vinylacetat, Styrol, Acrylonitril, Acrylsäureester, Methacrylsäureester oder Butadien, und außerdem Copolymerisationsprodukte dieser Monomere; Polyadditionsharze und Polykondensationsharze, wie beispielsweise Kondensationsprodukte von Formaldehyd mit Phenolen, Kondensationsprodukte von Formaldehyd mit Harnstoff, Thioharnstoff oder Melamin, Polyester, wie beispielsweise Alkydharze oder Maleatharze; lineare Polyester und Polyamide, Polyurethane; Silicone; Melaminharze; Harnstoff-Formaldehydharze; Acrylharze;
Tenside, ausgewählt aus anionischen, zwitterionischen, ampholytischen, nichtionischen und kationischen Tensiden;
kosmetische Wachse, kosmetische Öle und/oder kosmetische Alkohole, ausgewählt aus
Fettalkoholen; Estern von Fettsäuren; natürlichen oder synthetischen Di- und Triglyceriden; Kohlenwasserstoffölen, wie beispielsweise Paraffinöl; Mineralölen mit einem Siedepunkt von etwa 310 °C bis 410 °C; Siliconölen; Siliconwachsen; Colophan; hydrierten Ölen, die bei 25°C fest sind; Zuckerglyceriden; Festtsäuresalzen von Calcium, Magnesium, Zirconium, Aluminium; Siloxanen; fluorierten und perfluorierten Ölen; Phospholipiden; Cephalinen; Parfümölen; Lösungsvermittlern; Walrat, Bienenwachs, Montanwachs; Paraffinen; Fettalkoholen; Fettsäureestern; Fettalkanolamiden; Polyglycolen, wie beispielsweise Polyethylenglycolen und Polypropylenglycolen; Quellungs- und Durchdringungssubstanzen; Trübungsmitteln.

9. Zusammensetzung nach einem der Ansprüche 1 bis 6, wobei die Matrix in Form einer Beschichtung, insbesondere einer Farbbeschichtung für Autos, Kunststoffe, Metalle, Papier und dergleichen; einer Glasur; eines Nitrolacks; eines Klarlacks; eines Anstrichmittels; einer Druckpaste; einer Tinte; eines Druckbildes oder -designs; einer kosmetischen Formulierung, ausgewählt z. B. aus Sonnenschutzmitteln, Körperlotionen, Haarlotionen, Haarfärbemitteln, Grundlagencremen, Lidschatten, Rouges, Lippenstiften, Lippenglanz, Lippenlacken, Masken, Nagellacken und Eyelinern; einer Körperpflegeformulierung, ausgewählt z. B. aus Shampoos, Waschformulierungen, Haar- und/oder Körperpflegeprodukten, ist.

10. Zusammensetzung nach einem der Ansprüche 1 bis 6, wobei das Pigment durch einen Prozess erhalten wird, der die folgenden Schritte umfasst:
• Auftragen auf ein und optionales Mikrostrukturieren auf einem Substrat einer ersten Schicht, die in einem ersten Lösungsmittel lösbar ist;
• Herstellen einer Schicht des ZOD-Pigments durch einen oder mehrere Auftragschritte und einen oder mehrere optionale Mikrostrukturierungsschritte;
• Auflösen der ersten Schicht zum Erhalten von ZOD-Substraten oder ZOD-Pigmenten;
• optionales Unterziehen der erhalten ZOD-Substrate oder ZOD-Pigmente einem oder mehreren Auswahlschritten im Hinblick auf Größe und/oder Form,
wobei mindestens ein Mikrostrukturierungsschritt stattfindet.

11. Zusammensetzung nach Anspruch 5, wobei das Pigment von anisotroper lateraler Form durch Prägen von vorbestimmten Bruchstellen oder Bruchlinien vor, während oder nach, insbesondere während, dem Prägen der periodischen Mikrostruktur erhalten wird.

12. Prozess zur Herstellung einer Beschichtung, einer Glasur, eines Nitrolacks, eines Klarlacks, eines Anstrichmittels, einer Druckpaste, einer Tinte, eines Druckbildes oder -designs, einer kosmetischen Formulierung oder einer Körperpflegeformulierung, **dadurch gekennzeichnet, dass** ein Pigment, insbesondere ein Diffraktionspigment nullter Ordnung wie definiert als Komponente a) in Anspruch 1, zusammen mit einem natürlichen oder synthetischen organischen Polymer, einem Tensid, einem kosmetischen Wachs und/oder einem kosmetischen Öl in die Beschichtung, die Glasur, den Nitrolack, den Klarlack, das Anstrichmittel, die Druckpaste, die Tinte, das Druckbild oder -design, die kosmetische Formulierung oder die Körperpflegeformulierung eingemischt wird.

13. Verwendung einer Zusammensetzung nach einem der Ansprüche 1 bis 9 als eine Beschichtung, insbesondere eine Farbbeschichtung für Autos, Kunststoffe, Metalle, Papier und dergleichen; eine Glasur; einen Nitrolack; einen Klarlack; ein Anstrichmittel; eine Druckpaste; eine Tinte; ein Druckbild oder -designs; eine kosmetische Formulierung, ausgewählt z. B. aus Sonnenschutzmitteln, Körperlotionen, Haarlotionen, Haarfärbemitteln, Grundlagencremen, Lidschatten, Rouges, Lippenstiften, Lippenglanz, Lippenlacken, Masken, Nagellacken und Eyelinern; eine Körperpflegeformulierung, ausgewählt z. B. aus Shampoos, Waschformulierungen, Haar- und/oder Körperpflegeprodukten.

## Revendications

1. Composition comprenant
a) un pigment diffractif d'ordre zéro, présentant un effet de couleur basé sur la diffraction d'ordre zéro, et consistant en une couche de guide d'ondes optiques, ladite couche étant constituée d'un matériau avec un indice de réfraction qui est supérieur d'au moins 0,25 à l'indice de réfraction du matériau adjacent,
ayant une structure de réseau de diffraction d'ordre zéro d'une période de 300 à 500 nm, et d'une profondeur de réseau de 30 à 300 nm, et ayant une épaisseur comprise entre 50 nm et 500 nm, et
b) un matériau matriciel comprenant un polymère organique naturel ou synthétique, un tensioactif, une cire cosmétique et/ou une huile cosmétique,
contenant de préférence le composant a) dans une quantité de 0,0001 à 90 % en poids de la composition totale.

2. Composition selon la revendication 1, dans laquelle le matériau matriciel est transparent, le pigment est dispersé dans ledit matériau matriciel et/ou le matériau adjacent à la couche de guide d'ondes optiques est un matériau du composant b) de la revendication 1, ou de préférence, le matériau adjacent à la couche de guide d'ondes optiques est un matériau identique au matériau matriciel.

3. Composition selon l'une quelconque des revendications précédentes, dans laquelle le pigment est incorporé dans le matériau matriciel dans une quantité de 0,0001 à 90 % en poids du matériau final obtenu ou de la composition totale.

4. Composition selon l'une quelconque des revendications précédentes, dans laquelle le pigment contient une structure de réseau de diffraction d'ordre zéro possédant une période qui est plus petite que la longueur d'onde de la lumière qui sera réfléchie à l'ordre zéro de réflexion.

5. Composition selon l'une quelconque des revendications précédentes, dans laquelle le pigment a une forme latérale anisotrope.

6. Composition selon l'une quelconque des revendications précédentes, dans laquelle le pigment est incorporé dans une gouttelette organique ou inorganique et fixé à l'intérieur de cette gouttelette.

7. Composition selon l'une quelconque des revendications précédentes, dans laquelle la couche de guide d'ondes optiques du pigment est constituée d'un matériau convenant pour l'administration aux humains, en particulier de TiO₂, et dans laquelle ledit pigment est incorporé dans une matrice digestible.

8. Composition selon l'une quelconque des revendications 1 à 6, dans laquelle le matériau matriciel (composant b) comprend
des polymères organiques choisis parmi les résines naturelles, les huiles siccatives, le caoutchouc ou la caséine, ou les substances dérivées de ceux-ci, les résines alkydes modifiées par des huiles, la viscose, les polysaccharides comme les éthers ou esters de cellulose ;
des polymères non ioniques, par exemple les copolymères vinylpyrrolidone/acrylate de vinyle, la polyvinylpyrrolidone et les copolymères vinylpyrrolidone/ acétate de vinyle et les polysiloxanes ;
des polymères cationiques ; de l'alcool polyvinylique quaternisé ; des polymères zwitterioniques et amphotères ; des polymères anioniques ; des épaississants polymères ; des hydrolysats de protéines ou des produits de condensation de ceux-ci ; des polyols ; des polyéthers ; des polymères contenant des sucres ;
des polymères organiques synthétiques thermo-durcissables et thermoplastiques tels qu'ils peuvent être obtenus par polymérisation, polycondensation, polyaddition et/ou réticulation, en particulier les polyoléfines telles que le polyéthylène, le polypropylène ou le polyisobutylène, les polyoléfines substituées telles que les produits de polymérisation du chlorure de vinyle, de l'acétate de vinyle, du styrène, de l'acrylonitrile, des esters d'acide acrylique, des esters d'acide méthacrylique ou du butadiène, mais aussi les produits de copolymérisation desdits monomères ; les résines de polyaddition et les résines de polycondensation telles que les produits de condensation du formaldéhyde avec les phénols, les produits de condensation du formaldéhyde avec l'urée, la thiourée ou la mélamine, les polyesters tels que les résines alkydes ou les résines de maléate ; les polyesters et polyamides linéaires, les polyuréthanes ; les silicones ; les résines de mélamine ; les résines urée-formaldéhyde ; les résines acryliques ;
des tensioactifs choisis parmi les tensioactifs anioniques, zwitterioniques, ampholytes, non ioniques et cationiques ;
des cires cosmétiques, des huiles cosmétiques et/ou des alcools cosmétiques choisis parmi les alcools gras ; les esters d'acides gras ; les di- et triglycérides naturels ou synthétiques ; les huiles d'hydrocarbures telles que l'huile de paraffine ; les huiles minérales ayant un point d'ébullition d'environ 310 à 410 °C ; les huiles de silicone ; les cires de silicone ; la colophane ; les huiles hydrogénées qui sont solides à 25 °C ; les glycérides de sucres ; les sels d'acides gras de calcium, magnésium, zirconium, aluminium ; les siloxanes ; les huiles fluorées et perfluorées ; les phospholipides ; les céphalines ; les huiles parfumées ; les solubilisants ; le blanc de baleine, la cire d'abeille, la cire de lignite ; les paraffines ; les alcools gras ; les esters d'acides gras ; les alcanolamides gras ; les polyglycols tels que les polyéthylène glycols et les polypropylènes glycols ; les substances gonflantes et de pénétration ; les opacifiants.

9. Composition selon l'une quelconque des revendications 1 à 6, dans laquelle la matrice se présente sous la forme d'un revêtement, en particulier un revêtement de couleur pour voitures, plastiques, métaux, papier et autres ; une glaçure ; une laque ; un vernis ; une peinture ; une pâte d'impression ; une encre ; une image ou un motif imprimés ; une formulation cosmétique par ex. choisie parmi les écrans solaires, les lotions corporelles, les lotions capillaires, les colorations capillaires, les fonds de teint, les fards à paupières, les fards à joues, les rouges à lèvres, les brillants à lèvres, les laques à lèvres, les mascaras, les vernis à ongles, et les eye-liners ; une formulation de soins personnels par ex. choisie parmi les shampooings, les formulations de lavage, les produits nettoyants pour les cheveux et/ou le corps.

10. Composition selon l'une quelconque des revendications 1 à 6, dans laquelle le pigment est obtenu par un procédé comprenant les étapes consistant à
• déposer et éventuellement microstructurer sur un substrat une première couche qui peut se dissoudre dans un premier solvant ;
• fabriquer une couche desdits pigments ZOD par une ou plusieurs étapes de dépôt et éventuellement une ou plusieurs étapes de microstructuration ;
• dissoudre ladite première couche pour obtenir des substrats ZOD ou des pigments ZOD ;
• éventuellement, soumettre les substrats ZOD ou pigments ZOD obtenus à une ou plusieurs étapes de sélection par la taille et/ou la forme
dans lequel au moins une étape de microstructuration a lieu.

11. Composition selon la revendication 5 dans laquelle le pigment de forme latérale anisotrope est obtenu par gaufrage de points de rupture ou de lignes de rupture prédéterminés avant, en même temps que ou après, en particulier en même temps que, le gaufrage de la microstructure périodique.

12. Procédé de préparation d'un revêtement, d'une glaçure, d'une laque, d'un vernis, d'une peinture, d'une pâte d'impression, d'une encre, d'une image ou un motif imprimés, d'une formulation cosmétique ou d'une formulation de soins personnels, **caractérisé en ce qu'**un pigment, en particulier un pigment diffractif d'ordre zéro tel que défini comme le composant a) dans la revendication 1, est incorporé dans lesdits revêtement, glaçure, laque, vernis, peinture, pâte d'impression, encre, image ou motif imprimés, formulation cosmétique ou formulation de soins personnels en combinaison avec un polymère organique naturel ou synthétique, un tensioactif, une cire cosmétique et/ou une huile cosmétique.

13. Utilisation d'une composition selon l'une quelconque des revendications 1 à 9 comme un revêtement, en particulier un revêtement de couleur pour voitures, plastiques, métaux, papier et autres ; une glaçure ; une laque ; un vernis ; une peinture ; une pâte d'impression ; une encre ; une image ou un motif imprimés ; une formulation cosmétique par ex. choisie parmi les écrans solaires, les lotions corporelles, les lotions capillaires, les colorations capillaires, les fonds de teint, les fards à paupières, les fards à joues, les rouges à lèvres, les brillants à lèvres, les laques à lèvres, les mascaras, les vernis à ongles, et les eye-liners ; une formulation de soins personnels par ex. choisie parmi les shampooings, les formulations de lavage, les produits nettoyants pour les cheveux et/ou le corps.
